# EUROPEAN PATENT SPECIFICATION

(11) **EP 4 484 838 B1**
(45) Date of publication and mention of the grant of the patent: **29.04.2026**
(21) Application number: 23858677.0
(22) Date of filing: 18.04.2023
(51) Int. Cl.: F24F 1/22, F24F 1/24, F24F 11/61, F24F 11/64, F24F 11/77, F24F 11/84, F24F 11/86, F24F 13/22, F25B 41/30, F25B 41/37, F25B 49/02

(54) **TEMPERATURE ADJUSTING METHOD, ELECTRIC CONTROL BOX, ANTI-CONDENSATION CONTROL METHOD AND AIR CONDITIONER**
TEMPERATUREINSTELLUNGSVERFAHREN, ELEKTRISCHER STEUERKASTEN, ANTIKONDENSATIONSSTEUERUNGSVERFAHREN UND KLIMAANLAGE
PROCÉDÉ DE RÉGLAGE DE TEMPÉRATURE, BOÎTE DE COMMANDE ÉLECTRIQUE, PROCÉDÉ DE COMMANDE ANTI-CONDENSATION ET CLIMATISEUR

(30) Priority: 27.08.2022 CN 202211034517; 27.08.2022 CN 202211034480; 27.08.2022 CN 202211034516
(43) Date of publication of application: 01.01.2025
(73) Proprietor: GD Midea Heating & Ventilating Equipment Co., Ltd., Foshan, Guangdong 528311 (CN); Hefei Midea Heating & Ventilating Equipment Co., Ltd., Hefei, Anhui 230088 (CN)
(72) Inventor: YANG, Yuantao, Foshan, Guangdong 528311 (CN); MA, Xihua, Foshan, Guangdong 528311 (CN); HUANG, Wen, Foshan, Guangdong 528311 (CN); ZHAO, Zengyi, Foshan, Guangdong 528311 (CN); CHEN, Rufeng, Foshan, Guangdong 528311 (CN)
(74) Representative: RGTH
(86) International application number: PCT/CN2023/089059
(87) International publication number: WO 2024/045636

(56) References cited:
- WO-A1-2017/017767
- CN-A- 101 109 592
- CN-A- 105 091 258
- CN-A- 105 783 195
- CN-A- 105 910 187
- CN-A- 108 954 712
- CN-A- 110 822 564
- CN-A- 113 137 722
- CN-A- 113 137 722
- CN-A- 114 543 194
- CN-A- 114 688 636
- CN-B- 109 520 088
- CN-U- 207 146 711

## Description

### FIELD

The present disclosure relates to the technical field of heating and ventilation devices, and more particularly, to a temperature adjustment method, an electric control box, an anti-condensation control method, and an air conditioner.

### BACKGROUND

With the development of society and the continuous improvement of people's living standards, air conditioners, refrigerators, and other electrical appliances have become one of the indispensable electrical devices in people's daily life. A heat dissipation capability and a heat preservation capability in cold environments of electric control components in an electrical appliance are important factors affecting a service life of the electrical appliance.

In the related art, heat dissipation for the electric control components in the electrical appliance is generally realized using a fan, a heat dissipation fin, or the like, and heat preservation for the electric control components is realized through heat insulation materials or the like, to realize temperature adjustment. However, such temperature adjustment manners have unsatisfactory effect, such that the electric control components operating in a high-temperature environment or a cold environment are prone to damage, which seriously affect the service life of the electrical appliance in the long run. CN 109 520 088 B relates to the technical field of refrigeration devices, and in particular, to a method and device for controlling heat dissipation of a refrigeration device, a refrigeration device, and a computer-readable storage medium. CN 113 137 722 A relates to the technical field of air conditioners, for example, to a method and device for preventing condensation of a frequency conversion module, and an air conditioner.

### SUMMARY

In view of the above, the present invention provides a temperature adjustment method, a temperature adjustment apparatus, and a computer-readable storage medium where a computer program implementing the temperature adjustment method is implemented, which solves a technical problem in the related art that the electric control component is prone to damage, so as to ensure a service life of an electrical appliance.

To achieve the above objectives, the technical solutions of the present invention are described in the following paragraphs. Aspects of certain embodiments not falling under the scope of protection of present invention as defined by the appended claims, are clearly marked as such and are presented for illustration purposes only.

In a first aspect, according to some embodiments not forming part of the present invention, a temperature adjustment method is provided. The temperature adjustment method is used for adjusting a temperature of an electric control component in an electric control box in an air-conditioning system. The air-conditioning system comprises a compressor, a refrigerant pipeline, and a throttling component disposed at the refrigerant pipeline and configured to adjust a refrigerant flow rate. A heat exchange component and a fan are disposed in the electric control box. The refrigerant pipeline is configured to input a refrigerant outputted by the compressor or an indoor unit into the heat exchange component. The heat exchange component is configured to perform heat exchange based on the refrigerant.

The following embodiment is not according to the invention and is present for illustration purposes only. The temperature adjustment method comprises: obtaining a component temperature of the electric control component and an outlet superheat degree of the heat exchange component; and adjusting at least one of an opening degree of the throttling component, a rotational speed of the fan, and a frequency of the compressor based on the component temperature and the outlet superheat degree, to adjust the temperature of the electric control component.

In some embodiments not forming part of the present invention, the adjusting the at least one of the opening degree of the throttling component, the rotational speed of the fan, and the frequency of the compressor based on the component temperature and the outlet superheat degree comprises: obtaining a temperature difference between the component temperature and a temperature limit in the electric control box; and adjusting the at least one of the opening degree of the throttling component, the rotational speed of the fan, and the frequency of the compressor based on the temperature difference and a comparative relation between the outlet superheat degree and a target superheat degree.

In some embodiments not forming part of the present invention, the adjusting the opening degree of the throttling component and/or the rotational speed of the fan based on the temperature difference and the comparative relation between the outlet superheat degree and the target superheat degree comprises: adjusting the opening degree of the throttling component and/or the frequency of the compressor when the temperature difference is smaller than a first predetermined temperature and the outlet superheat degree is greater than the target superheat degree; and adjusting the rotational speed of the fan and/or the frequency of the compressor when the temperature difference is smaller than the first predetermined temperature and the outlet superheat degree is smaller than or equal to the target superheat degree.

In some embodiments not forming part of the present invention, the adjusting the opening degree of the throttling component and/or the frequency of the compressor comprises: obtaining a current opening degree of the throttling component; increasing the opening degree of the throttling component when the current opening degree of the throttling component is smaller than a first target opening degree; and decreasing the frequency of the compressor when the current opening degree of the throttling component is greater than or equal to the first target opening degree.

In some embodiments not forming part of the present invention, the adjusting the rotational speed of the fan and/or the frequency of the compressor comprises: obtaining a current rotational speed of the fan; increasing the rotational speed of the fan when the current rotational speed is smaller than a first target rotational speed; and decreasing the frequency of the compressor when the current rotational speed is greater than or equal to the first target rotational speed.

In some embodiments not forming part of the present invention, the adjusting the opening degree of the throttling component and/or the rotational speed of the fan based on the temperature difference and the comparative relation between the outlet superheat degree and the target superheat degree comprises:
adjusting the opening degree of the throttling component when the temperature difference is greater than a second predetermined temperature and the outlet superheat degree is greater than the target superheat degree; and adjusting the rotational speed of the fan when the temperature difference is greater than the second predetermined temperature and the outlet superheat degree is smaller than or equal to the target superheat degree. The first predetermined temperature is smaller than the second predetermined temperature.

In some embodiments not forming part of the present invention, the adjusting the opening degree of the throttling component comprises: obtaining a current opening degree of the throttling component; decreasing the opening degree of the throttling component when the current opening degree of the throttling component is greater than a second target opening degree; and controlling the throttling component to maintain the current opening degree when the current opening degree of the throttling component is smaller than or equal to the second target opening degree.

In some embodiments not forming part of the present invention, the adjusting the rotational speed of the fan comprises: obtaining a current rotational speed of the fan; reducing the rotational speed of the fan when the current rotational speed is greater than a second target rotational speed; and maintaining the current rotational speed of the fan when the current rotational speed is smaller than or equal to the second target rotational speed.

In some embodiments not forming part of the present invention, the temperature adjustment method further comprises: maintaining a current opening degree of the throttling component and/or maintaining a current rotational speed of the fan, when the temperature difference is greater than or equal to a first predetermined temperature and smaller than or equal to a second predetermined temperature.

In some embodiments not forming part of the present invention, the obtaining the outlet superheat degree of the heat exchange component comprises: obtaining an ambient pressure of an environment where the electric control box is located and an outlet ambient temperature of the heat exchange component; and determining the outlet superheat degree based on the ambient pressure and the outlet ambient temperature.

In some embodiments not forming part of the present invention, the heat exchange component is configured to adjust a temperature in the electric control box through a phase change of a refrigerant.

In some embodiments not forming part of the present invention, the heat exchange component is an evaporator.

In some embodiments not forming part of the present invention, the evaporator has an inlet connected to an outlet pipe of a heat exchanger of an outdoor unit and an outlet connected to a return port of a compressor or an inlet of a gas-liquid separator.

In a second aspect, according to some embodiments not forming part of the present invention, a temperature adjustment apparatus is provided. The temperature adjustment apparatus is configured to adjust a temperature of an electric control component in an electric control box in an air-conditioning system. The air-conditioning system comprises a compressor, a refrigerant pipeline, and a throttling component disposed at the refrigerant pipeline and configured to adjust a refrigerant flow rate. A heat exchange component and a fan are disposed in the electric control box. The refrigerant pipeline is configured to input a refrigerant outputted by the compressor or an indoor unit into the heat exchange component. The heat exchange component is configured to perform heat exchange based on the refrigerant.

The following embodiment is not according to the invention and is present for illustration purposes only. The temperature adjustment apparatus comprises: an obtaining module configured to obtain a component temperature of the electric control component and an outlet superheat degree of the heat exchange component; and an adjustment module configured to adjust at least one of an opening degree of the throttling component, a rotational speed of the fan, and a frequency of the compressor based on the component temperature and the outlet superheat degree, to adjust a temperature of the electric control component.

In some embodiments not forming part of the present invention, the adjustment module is configured to: obtain a temperature difference between the component temperature and a temperature limit in the electric control box; and adjust the at least one of the opening degree of the throttling component, the rotational speed of the fan, and the frequency of the compressor based on the temperature difference and a comparative relation between the outlet superheat degree and a target superheat degree.

In some embodiments not forming part of the present invention, the adjustment module is configured to: adjust the opening degree of the throttling component and/or the frequency of the compressor when the temperature difference is smaller than a first predetermined temperature and the outlet superheat degree is greater than the target superheat degree; and adjust the rotational speed of the fan and/or the frequency of the compressor when the temperature difference is smaller than the first predetermined temperature and the outlet superheat degree is smaller than or equal to the target superheat degree.

In some embodiments not forming part of the present invention, the obtaining module is further configured to obtain a current opening degree of the throttling component. The adjustment module is configured to: increase the opening degree of the throttling component when the current opening degree of the throttling component is smaller than a first target opening degree; and decrease the frequency of the compressor when the current opening degree of the throttling component is greater than or equal to the first target opening degree.

In some embodiments not forming part of the present invention, the obtaining module is further configured to obtain a current rotational speed of the fan. The adjustment module is configured to: increase the rotational speed of the fan when the current rotational speed is smaller than a first target rotational speed; and decrease the frequency of the compressor when the current rotational speed is greater than or equal to the first target rotational speed.

In some embodiments not forming part of the present invention, the adjustment module is configured to: adjust the opening degree of the throttling component and/or the frequency of the compressor when the temperature difference is greater than a second predetermined temperature and the outlet superheat degree is greater than the target superheat degree; and adjust the rotational speed of the fan and/or the frequency of the compressor when the temperature difference is greater than the second predetermined temperature and the outlet superheat degree is smaller than or equal to the target superheat degree. The first predetermined temperature is smaller than the second predetermined temperature.

In some embodiments not forming part of the present invention, the obtaining module is further configured to obtain a current opening degree of the throttling component. The adjustment module 502 is configured to: decrease the opening degree of the throttling component when the current opening degree of the throttling component is greater than a second target opening degree; and control the throttling component to maintain the current opening degree when the current opening degree of the throttling component is smaller than or equal to the second target opening degree.

In some embodiments not forming part of the present invention, the obtaining module is further configured to obtain a current rotational speed of the fan. The adjustment module is configured to: reduce the rotational speed of the fan when the current rotational speed is greater than a second target rotational speed; and maintain the current rotational speed of the fan when the current rotational speed is smaller than or equal to the second target rotational speed.

In some embodiments not forming part of the present invention, the adjustment module is further configured to: maintain a current opening degree of the throttling component and/or maintain a current rotational speed of the fan, when the temperature difference is greater than or equal to a first predetermined temperature and smaller than or equal to a second predetermined temperature.

In some embodiments not forming part of the present invention, the obtaining module is further configured to: obtain an ambient pressure of an environment where the electric control box is located and an outlet ambient temperature of the heat exchange component; and determine the outlet superheat degree based on the ambient pressure and the outlet ambient temperature.

In some embodiments not forming part of the present invention, the heat exchange component is configured to adjust a temperature in the electric control box through a phase change of a refrigerant.

In some embodiments not forming part of the present invention, the heat exchange component is an evaporator.

In some embodiments not forming part of the present invention, the evaporator has an inlet connected to an outlet pipe of a heat exchanger of an outdoor unit and an outlet connected to a return port of a compressor or an inlet of a gas-liquid separator.

In a third aspect, according to some embodiments not forming part of the present invention, an electric control box is provided. A temperature in the electric control box is adjusted based on the temperature adjustment method according to any of the embodiments in the first aspect. The electric control box comprises an electric control component, a heat exchange component, and a fan. The heat exchange component is configured to perform heat exchange based on a refrigerant inputted into the heat exchange component. The fan is configured to drive an air flow in the electric control box to adjust the temperature of the electric control component.

In a fourth aspect, according to some embodiments not forming part of the present invention, an air-conditioning system is provided. The air-conditioning system comprises a memory, a processor, a compressor, a refrigerant pipeline, a throttling component disposed at the refrigerant pipeline and configured to adjust a refrigerant flow rate, and the electric control box provided in the third aspect. The refrigerant pipeline is configured to input a refrigerant outputted by the compressor into the heat exchange component. The heat exchange component is configured to perform heat exchange based on a phase change of the refrigerant.

The following example is not according to the invention and is present for illustration purposes only. The memory stores a computer program. The processor is configured to perform, when executing the computer program, the temperature adjustment method in the first aspect, to adjust a temperature in the electric control box.

In a fifth aspect, according to some embodiments of the present invention a temperature adjustment method is provided. The temperature adjustment method as defined in claim 1 is used for adjusting a temperature of an electric control component in an electric control box in an air-conditioning system. The air-conditioning system comprises a compressor and a refrigerant pipeline. A heat exchange component, a fan, a first electric control component, and a temperature sensor are disposed in the electric control box. The refrigerant pipeline is configured to input a refrigerant outputted by the compressor or an indoor unit into the heat exchange component. The heat exchange component is configured to perform heat exchange based on the refrigerant. The temperature sensor is arranged close to the first electric control component.

The temperature adjustment method comprises: obtaining a detected temperature from the temperature sensor; and adjusting a rotational speed of the fan and/or a frequency of the compressor based on the detected temperature.

In some embodiments, the adjusting the rotational speed of the fan and/or the frequency of the compressor based on the detected temperature comprises: obtaining a temperature difference between the detected temperature and a temperature limit of the electric control box; and adjusting the rotational speed of the fan and/or the frequency of the compressor based on the temperature difference and a current rotational speed of the fan, to adjust a temperature of the first electric control component.

In some embodiments, the adjusting the rotational speed of the fan and/or the frequency of the compressor based on the temperature difference and the current rotational speed of the fan comprises: increasing the rotational speed of the fan when the temperature difference is smaller than a first predetermined temperature and the current rotational speed of the fan is smaller than a first target rotational speed; decreasing the frequency of the compressor when the temperature difference is smaller than the first predetermined temperature and the current rotational speed is greater than or equal to the first target rotational speed; reducing the rotational speed of the fan when the temperature difference is greater than a second predetermined temperature and the current rotational speed is greater than a second target rotational speed; and maintaining the current rotational speed of the fan when the temperature difference is greater than the second predetermined temperature and the current rotational speed is smaller than or equal to the second target rotational speed. The first predetermined temperature is smaller than the second predetermined temperature. The first target rotational speed is greater than the second target rotational speed.

In some embodiments, the air-conditioning system further comprises a throttling component disposed at the refrigerant pipeline and configured to adjust a flow rate of a refrigerant inputted into the heat exchange component. The temperature adjustment method further comprises, when the temperature difference is smaller than the first predetermined temperature: controlling the throttling component to open when the throttling component is currently in a closed state; increasing the rotational speed of the fan when the throttling component is currently in an opened state and the rotational speed of the fan is smaller than the first target rotational speed; and decreasing the frequency of the compressor when the throttling component is in the opened state and the rotational speed of the fan is greater than or equal to the first target rotational speed.

In some embodiments, the air-conditioning system further comprises a throttling component disposed at the refrigerant pipeline and configured to adjust a flow rate of a refrigerant inputted into the heat exchange component. The temperature adjustment method further comprises, when the temperature difference is greater than the second predetermined temperature: reducing the rotational speed of the fan when the current rotational speed of the fan is greater than the second target rotational speed; and controlling an opening state of the throttling component based on an ambient temperature of an environment where the electric control box is located, when the rotational speed of the fan is smaller than or equal to the second target rotational speed.

In some embodiments, the adjusting the opening state of the throttling component based on the ambient temperature of the environment where the electric control box is located comprises: closing the throttling component when the ambient temperature is smaller than or equal to a predetermined ambient temperature; and opening the throttling component when the ambient temperature is greater than the predetermined ambient temperature.

In some embodiments, the air-conditioning system further comprises a capillary tube disposed at the refrigerant pipeline and arranged in parallel with the throttling component. The temperature adjustment method further comprises, when the temperature difference is greater than the second predetermined temperature: closing the throttling component when the throttling component is in an opened state; maintaining the current rotational speed of the fan when the throttling component is in a closed state and the current rotational speed of the fan is smaller than or equal to the second target rotational speed; and reducing the rotational speed of the fan when the throttling component is in the closed state and the current rotational speed of the fan is greater than the second target rotational speed.

In some embodiments, the adjusting the rotational speed of the fan and/or the frequency of the compressor based on the temperature difference and the current rotational speed of the fan comprises: maintaining a current rotational speed of the fan and/or a current frequency of the compressor, when the temperature difference is greater than or equal to a first predetermined temperature and smaller than or equal to a second predetermined temperature. The first predetermined temperature is smaller than the second predetermined temperature.

In some embodiments, the first electric control component generates a maximum amount of heat in the electric control box.

In some embodiments, the heat exchange component is configured to adjust a temperature within the electric control box through a phase change of a refrigerant.

In some embodiments, the heat exchange component is an evaporator.

In some embodiments, the evaporator has an inlet connected to an outlet pipe of a heat exchanger of an outdoor unit and an outlet connected to a return port of a compressor or an inlet of a gas-liquid separator.

In some embodiments, the electric control box is a sealed electric control box.

In a sixth aspect, according to some embodiments of the present invention, a temperature adjustment apparatus according to claim 12 is provided. The temperature adjustment apparatus is configured to adjust a temperature of an electric control component in an electric control box in an air-conditioning system. The air-conditioning system comprises a compressor and a refrigerant pipeline. A heat exchange component, a fan, a first electric control component, and a temperature sensor are disposed in the electric control box. The refrigerant pipeline is configured to input a refrigerant outputted by the compressor or an indoor unit into the heat exchange component. The heat exchange component is configured to perform heat exchange based on the refrigerant. The temperature sensor is arranged close to the first electric control component.

The temperature adjustment apparatus comprises: an obtaining module configured to obtain a detected temperature from the temperature sensor; and an adjustment module configured to adjust a rotational speed of the fan and/or a frequency of the compressor based on the detected temperature, to adjust a temperature of the first electric control component.

In some embodiments not forming part of the present invention, the obtaining module is further configured to obtain a temperature difference between the detected temperature and a temperature limit of the electric control box. The adjustment module is configured to adjust the rotational speed of the fan and/or the frequency of the compressor based on the temperature difference and a current rotational speed of the fan.

In some embodiments not forming part of the present invention, the adjustment module is configured to: increase the rotational speed of the fan when the temperature difference is smaller than a first predetermined temperature and the current rotational speed of the fan is smaller than a first target rotational speed; decrease the frequency of the compressor when the temperature difference is smaller than the first predetermined temperature and the current rotational speed is greater than or equal to the first target rotational speed; reduce the rotational speed of the fan when the temperature difference is greater than a second predetermined temperature and the current rotational speed is greater than a second target rotational speed; and maintain the current rotational speed of the fan when the temperature difference is greater than the second predetermined temperature and the current rotational speed is smaller than or equal to the second target rotational speed. The first predetermined temperature is smaller than the second predetermined temperature. The first target rotational speed is greater than the second target rotational speed.

In some embodiments not forming part of the present invention, the air-conditioning system further comprises a throttling component disposed at the refrigerant pipeline and configured to adjust a flow rate of a refrigerant inputted into the heat exchange component. The adjustment module is further configured to, when the temperature difference is smaller than the first predetermined temperature: control the throttling component to open when the throttling component is currently in a closed state; increase the rotational speed of the fan when the throttling component is currently in an opened state and the rotational speed of the fan is smaller than the first target rotational speed; and decrease the frequency of the compressor when the throttling component is in the opened state and the rotational speed of the fan is greater than or equal to the first target rotational speed.

In some embodiments not forming part of the present invention, the air-conditioning system further comprises a throttling component disposed at the refrigerant pipeline and configured to adjust a flow rate of a refrigerant inputted into the heat exchange component. The adjustment module is further configured to, when the temperature difference is greater than the second predetermined temperature: reduce the rotational speed of the fan when the current rotational speed of the fan is greater than the second target rotational speed; and control an opening state of the throttling component based on an ambient temperature of an environment where the electric control box is located, when the rotational speed of the fan is smaller than or equal to the second target rotational speed.

In some embodiments not forming part of the present invention, the adjustment module is configured to: close the throttling component when the ambient temperature is smaller than or equal to a predetermined ambient temperature; and open the throttling component when the ambient temperature is greater than the predetermined ambient temperature.

In some embodiments not forming part of the present invention, the air-conditioning system further comprises a capillary tube disposed at the refrigerant pipeline and arranged in parallel with the throttling component. The adjustment module is further configured to, when the temperature difference is greater than the second predetermined temperature: close the throttling component when the throttling component is in an opened state; maintain the current rotational speed of the fan when the throttling component is in a closed state and the current rotational speed of the fan is smaller than or equal to the second target rotational speed; and reduce the rotational speed of the fan when the throttling component is in the closed state and the current rotational speed of the fan is greater than the second target rotational speed.

In some embodiments not forming part of the present invention, the adjustment module is configured to maintain a current rotational speed of the fan and/or a current frequency of the compressor, when the temperature difference is greater than or equal to a first predetermined temperature and smaller than or equal to a second predetermined temperature. The first predetermined temperature is smaller than the second predetermined temperature.

In some embodiments not forming part of the present invention, the first electric control component generates a maximum amount of heat in the electric control box.

In some embodiments not forming part of the present invention, the heat exchange component is configured to adjust a temperature within the electric control box through a phase change of a refrigerant.

In some embodiments not forming part of the present invention, the heat exchange component is an evaporator.

In some embodiments not forming part of the present invention, the evaporator has an inlet connected to an outlet pipe of a heat exchanger of an outdoor unit and an outlet connected to a return port of a compressor or an inlet of a gas-liquid separator.

In some embodiments not forming part of the present invention, the electric control box is a sealed electric control box.

In a seventh aspect, according to some embodiments not forming part of the present invention, an electric control box is provided. The electric control box comprises a first electric control component, a heat exchange component, a fan, and a temperature sensor. The heat exchange component is configured to perform heat exchange based on a phase change of a refrigerant inputted into the heat exchange component. The fan is configured to drive an air flow in the electric control box to adjust a temperature of an electric control component.

In an eighth aspect, according to some embodiments not forming part of the present invention, an air-conditioning system is provided. The air-conditioning system comprises a memory, a processor, a compressor, a refrigerant pipeline, and the electric control box provided in the seventh aspect. The refrigerant pipeline is configured to input a refrigerant outputted by the compressor or an indoor unit into the heat exchange component in the electric control box. The heat exchange component is configured to perform heat exchange based on a phase change of the refrigerant.

The following embodiment is not according to the invention and is present for illustration purposes only. The memory stores a computer program. The processor is configured to perform, when executing the computer program, the temperature adjustment method according to any of the embodiments in the sixth aspect, to adjust a temperature in the electric control box.

In a ninth aspect, according to some embodiments not forming part of the present invention, an anti-condensation control method is provided. The anti-condensation control method comprises: obtaining an internal temperature of an electric control box and a first ambient temperature outside the electric control box; determining whether the electric control box is at a risk of condensation based on the first ambient temperature and the internal temperature; and performing anti-condensation control on the electric control box, in response to detecting that the compressor stops operating and that the electric control box is at the risk of condensation.

In some embodiments not forming part of the present invention, the determining whether the electric control box is at the risk of condensation based on the first ambient temperature and the internal temperature comprises: determining that the electric control box is at the risk of condensation when the internal temperature is smaller than the first ambient temperature; and determining that the electric control box is not at the risk of condensation when the internal temperature is greater than or equal to the first ambient temperature.

In some embodiments not forming part of the present invention, the air conditioner comprises a temperature sensor disposed outside the electric control box and a temperature and humidity sensor. The first ambient temperature is collected by the temperature sensor. The determining whether the electric control box is at the risk of condensation based on the first ambient temperature and the internal temperature comprises: obtaining a second ambient temperature outside the electric control box and a relative humidity outside the electric control box, the second ambient temperature being collected by the temperature and humidity sensor; determining a dew point temperature outside the electric control box based on the second ambient temperature and the relative humidity; and determining whether the electric control box is at the risk of condensation based on the first ambient temperature, the internal temperature, and the dew point temperature.

In some embodiments not forming part of the present invention, the determining whether the electric control box is at the risk of condensation based on the first ambient temperature, the internal temperature, and the dew point temperature comprises: determining that the electric control box is at the risk of condensation when the internal temperature is smaller than the first ambient temperature and/or smaller than or equal to the dew point temperature; and determining that the electric control box is not at the risk of condensation when the internal temperature is greater than or equal to the first ambient temperature and/or greater than the dew point temperature.

In some embodiments not forming part of the present invention, the determining that the electric control box is at the risk of condensation when the internal temperature is smaller than the first ambient temperature and/or smaller than or equal to the dew point temperature comprises: determining that the electric control box is at the risk of condensation when a duration during which the internal temperature is smaller than the first ambient temperature is longer than a first duration and/or a duration during which the internal temperature is smaller than or equal to the dew point temperature is longer than a second duration.

In some embodiments not forming part of the present invention, the method further comprises: determining that the electric control box is not at the risk of condensation when the duration during which the internal temperature is smaller than the first ambient temperature is shorter than or equal to the first duration and/or the duration during which the internal temperature is smaller than or equal to the dew point temperature is shorter than or equal to the second duration.

In some embodiments not forming part of the present invention, the electric control box comprises a cooling fan, an electric heating component being disposed at a back of the cooling fan. The performing the anti-condensation control on the electric control box comprises: performing the anti-condensation control on the electric control box using the electric heating component and the cooling fan.

In some embodiments not forming part of the present invention, the method further comprises: stopping the anti-condensation control when a duration during which the internal temperature is greater than or equal to the first ambient temperature is longer than a third duration and/or a duration during which the internal temperature is greater than the dew point temperature is longer than a fourth duration.

In some embodiments not forming part of the present invention, the internal temperature is an outlet air temperature of the heat exchanger, and/or the internal temperature is a surface temperature of the electric control component.

In some embodiments not forming part of the present invention, the heat exchanger is an evaporator.

In some embodiments not forming part of the present invention, the evaporator has an inlet connected to an outlet pipe of a heat exchanger of an outdoor unit and an outlet connected to a return port of a compressor or an inlet of a gas-liquid separator.

In some embodiments not forming part of the present invention, the electric control box is a sealed electric control box.

In a tenth aspect, according to some embodiments not forming part of the present invention, an anti-condensation control apparatus is provided. The anti-condensation control apparatus comprises an obtaining module and a processing module. The obtaining module is configured to obtain an internal temperature of the electric control box and a first ambient temperature outside the electric control box. The processing module is configured to determine whether the electric control box is at a risk of condensation based on the first ambient temperature and the internal temperature. The processing module is further configured to perform anti-condensation control on the electric control box, in response to detecting that the compressor stops operating and that the electric control box is at the risk of condensation.

In some embodiments not forming part of the present invention, the processing module is configured to: determine that the electric control box is at the risk of condensation when the internal temperature is smaller than the first ambient temperature; and determine that the electric control box is not at the risk of condensation when the internal temperature is greater than or equal to the first ambient temperature.

In some embodiments not forming part of the present invention, the air conditioner comprises a temperature sensor disposed outside the electric control box and a temperature and humidity sensor. The first ambient temperature is collected by the temperature sensor. The obtaining module is configured to obtain a second ambient temperature outside the electric control box and a relative humidity outside the electric control box, the second ambient temperature being collected by the temperature and humidity sensor. The processing module is configured to determine a dew point temperature outside the electric control box based on the second ambient temperature and the relative humidity. The processing module is further configured to determine whether the electric control box is at the risk of condensation based on the first ambient temperature, the internal temperature, and the dew point temperature.

In some embodiments not forming part of the present invention, the processing module is configured to: determine that the electric control box is at the risk of condensation when the internal temperature is smaller than the first ambient temperature and/or smaller than or equal to the dew point temperature; and determine that the electric control box is not at the risk of condensation when the internal temperature is greater than or equal to the first ambient temperature and/or greater than the dew point temperature.

In some embodiments not forming part of the present invention, the processing module is configured to: determine that the electric control box is at the risk of condensation when a duration during which the internal temperature is smaller than the first ambient temperature is longer than a first duration and/or a duration during which the internal temperature is smaller than or equal to the dew point temperature is longer than a second duration.

In some embodiments not forming part of the present invention, the processing module is further configured to: determine that the electric control box is not at the risk of condensation when the duration during which the internal temperature is smaller than the first ambient temperature is shorter than or equal to the first duration and/or the duration during which the internal temperature is smaller than or equal to the dew point temperature is shorter than or equal to the second duration.

In some embodiments not forming part of the present invention, the electric control box comprises a cooling fan, an electric heating component being disposed at a back of the cooling fan. The processing module is configured to perform the anti-condensation control on the electric control box using the electric heating component and the cooling fan.

In some embodiments not forming part of the present invention, the processing module is further configured to stop the anti-condensation control when a duration during which the internal temperature is greater than or equal to the first ambient temperature is longer than a third duration and/or a duration during which the internal temperature is greater than the dew point temperature is longer than a fourth duration.

In some embodiments not forming part of the present invention, the internal temperature is an outlet air temperature of the heat exchanger, and/or the internal temperature is a surface temperature of the electric control component.

In some embodiments not forming part of the present invention, the heat exchanger is an evaporator.

In some embodiments not forming part of the present invention, the evaporator has an inlet connected to an outlet pipe of a heat exchanger of an outdoor unit and an outlet connected to a return port of a compressor or an inlet of a gas-liquid separator.

In some embodiments not forming part of the present invention, the electric control box is a sealed electric control box.

In an eleventh aspect, according to some embodiments not forming part of the present invention, an electric control box is provided. The electric control box has an accommodation space configured to accommodate an electric control component, a heat exchanger, a cooling fan, and an electric heating component disposed at a back of the cooling fan. The heat exchanger is configured to cool the electric control box through a phase change of a refrigerant. The electric heating component and the cooling fan are configured to perform anti-condensation control on the electric control box.

In a twelfth aspect, according to some embodiments not forming part of the present invention, an air conditioner is provided. The air conditioner comprises a memory, a processor, a compressor, and the electric control box in the eleventh aspect. The heat exchanger is connected to a refrigerant system of the air conditioner, and is configured to cool the electric control box through a phase change of a refrigerant. The memory stores a computer program. The processor is configured to perform, when executing the computer program, the method in the ninth aspect and in any technical solution in the ninth aspect.

In a thirteenth aspect, according to some embodiments of the present invention, a computer-readable storage medium according to claim 13 is further provided. The computer-readable storage medium stores a computer program. The computer program is configured to implement, when executed by a processor, the temperature adjustment method according to the invention.

The following embodiment is not according to the invention and is present for illustration purposes only. The temperature adjustment method, the electric control box, the anti-condensation control method, and the air conditioner are provided according to some embodiments of the present disclosure. The air-conditioning system comprises the electric control box, the compressor, the refrigerant pipeline, and the throttling component disposed at the refrigerant pipeline and configured to adjust the refrigerant flow rate. The electric control component, the heat exchange component, and the fan are disposed in the electric control box. The refrigerant pipeline is configured to input the refrigerant outputted by the compressor or the indoor unit into the heat exchange component. The heat exchange component is configured to perform heat exchange based on the refrigerant. By arranging the heat exchange component in the electric control box, the heat exchange can be performed based on the refrigerant to adjust the temperature in the electric control box. In addition, by arranging the fan in the electric control box, an air circulation in the electric control box can be realized through a rotation of the fan, improving a temperature adjustment effect.

The following embodiment is not according to the invention and is present for illustration purposes only. A heat dissipation capability and a heat preservation capability in cold environments of the electric control component in the electric control box are important factors affecting service lives of the electric control box and components such as the electric control component disposed in the electric control box. Therefore, in the present disclosure, by obtaining the component temperature of the electric control component and the outlet superheat degree of the heat exchange component, the at least one of the opening degree of the throttling component, the rotational speed of the fan, and the frequency of the compressor is adjusted based on the component temperature and the outlet superheat degree, to accurately adjust the temperature in the electric control box. Therefore, the effect of accurately adjusting the temperature of the electric control component in the electric control box can be realized to ensure that the electric control component maintains a safe operation temperature. In addition, with the above-mentioned temperature adjustment method, the electric control box can be maintained at a suitable temperature, which can further avoid damages such as short circuit caused by condensation of the electric control component, greatly prolonging the service life of the electric control component.

The embodiments not forming part of the present invention are further used for adjusting the temperature of the electric control component in the electric control box in the air-conditioning system. The air-conditioning system comprises an electric control box, a compressor, and a refrigerant pipeline. A heat exchange component, a fan, a first electric control component, and a temperature sensor are disposed in the electric control box. The refrigerant pipeline is configured to input a refrigerant outputted by the compressor or an indoor unit into the heat exchange component. The temperature in the electric control box is adjusted by the heat exchange component in the electric control box through the phase change of the refrigerant. In addition, by arranging the fan in the electric control box, the air circulation in the electric control box can be realized through the rotation of the fan, improving the temperature adjustment effect.

The following embodiment is not according to the invention and is present for illustration purposes only. The heat dissipation capability and the heat preservation capability in the cold environments of the electric control component in the electric control box are important factors affecting the service lives of the electric control box and the electric control components in the electric control box. Therefore, in the present disclosure, the detected temperature is collected by the temperature sensor arranged close to the first electric control component. The detected temperature can reflect the temperature in the electric control box, or the temperature of the electric control component in the electric control box. In this way, the rotational speed of the fan and/or the frequency of the compressor can be adjusted in real time based on the detected temperature, to adjust the rotational speed of the fan and/or the refrigerant flow rate flowing through (i.e., a heat exchange efficiency of) the heat exchange component, accurately adjusting the temperature in the electric control box. Therefore, the effect of accurately adjusting the temperature of the electric control component can be realized to ensure that the electric control component maintains the safe operation temperature. In addition, with the above-mentioned temperature adjustment method, the temperature in the electric control box can be maintained at a suitable value, which can further avoid the damages such as the short circuit caused by the condensation of the electric control component, greatly prolonging the service life of the electric control component.

The following embodiment is not according to the invention and is present for illustration purposes only. An anti-condensation control method of the present disclosure is applied in an electric control box of an air conditioner. The air conditioner comprises a compressor and an electric control box. The electric control box has an accommodation space for accommodating an electric control component and a heat exchanger. The heat exchanger is connected to a refrigerant system of the air conditioner and configured to cool an internal space of the electric control box through a phase change of a refrigerant.

The following embodiment is not according to the invention and is present for illustration purposes only. The phase change of the refrigerant achieves a satisfactory heat dissipation effect for the internal space of the electric control box, but a condensation problem also arises. Anti-condensation control is initiated subsequent to shutdown to reduce a temperature difference between the ambient temperature and the temperature in the electric control box, which reduces condensed water in the electric control box. In this way, the condensed water attached to the electric control component subsequent to a re-startup can be eliminated to improve reliability of electric control.

The following embodiment is not according to the invention and is present for illustration purposes only. The anti-condensation control can reduce the temperature difference between the ambient temperature and the temperature in the electric control box, since the temperature in the electric control box rises. In the present disclosure, initiating the anti-condensation control subsequent to the shutdown can prevent the temperature in the electric control box from rising during an operation of the air conditioner, which ensures operation reliability of electric control.

### BRIEF DESCRIPTION OF THE DRAWINGS

In order to clearly explain technical solutions according to embodiments of the present disclosure or in the related art, drawings used in the description of the embodiments or the related art are briefly described below. Obviously, the drawings as described below are merely some embodiments of the present disclosure. Based on these drawings, other drawings can be obtained by those skilled in the art without creative effort.
FIG. 1 is a first schematic diagram showing a structure of an air-conditioning system according to an embodiment not forming part of the present invention.
FIG. 2 is a first schematic diagram showing an internal structure of an electric control box according to an embodiment not forming part of the present invention.
FIG. 3 is a schematic principle diagram of an air-conditioning system in a refrigeration process according to an embodiment not forming part of the present invention.
FIG. 4 is a schematic principle diagram of an air-conditioning system in a heating process according to an embodiment not forming part of the present invention.
FIG. 5 is a first flowchart illustrating a temperature adjustment method according to an embodiment not forming part of the present invention.
FIG. 6 is a schematic diagram showing a structure of a temperature adjustment apparatus according to an embodiment not forming part of the present invention.
FIG. 7 is a second schematic diagram showing a structure of an air-conditioning system according to an embodiment of the present disclosure.
FIG. 8 is a second schematic diagram showing a structure of an electric control box according to an embodiment of the present disclosure.
FIG. 9 is a second flowchart illustrating a temperature adjustment method according to an embodiment of the present disclosure.
FIG. 10 is a third flowchart illustrating a temperature adjustment method according to an embodiment of the present disclosure.
FIG. 11 is a third schematic diagram showing a structure of an air-conditioning system according to an embodiment of the present disclosure.
FIG. 12 is a fourth flowchart illustrating a temperature adjustment method according to an embodiment of the present disclosure.
FIG. 13 is a fifth flowchart illustrating a temperature adjustment method according to an embodiment of the present disclosure.
FIG. 14 is a block diagram showing a structure of a temperature adjustment apparatus according to an embodiment of the present disclosure.
FIG. 15 is a schematic diagram of a scenario according to an embodiment not forming part of the present invention.
FIG. 16 is a flowchart illustrating an anti-condensation control method according to an embodiment not forming part of the present invention.
FIG. 17 is a schematic diagram showing a structure of an air conditioner according to an embodiment not forming part of the present invention.
FIG. 18 is a schematic diagram showing a structure of an electric control box according to an embodiment not forming part of the present invention.
FIG. 19 is another schematic diagram showing a structure of an electric control box according to an embodiment not forming part of the present invention.
FIG. 20 is another flowchart illustrating an anti-condensation control method according to an embodiment not forming part of the present invention.
FIG. 21 is a schematic diagram showing a structure of an anti-condensation control apparatus according to an embodiment not forming part of the present invention.
FIG. 22 is a fourth schematic diagram showing a structure of an air-conditioning system according to an embodiment not forming part of the present invention.

Description of reference numerals of the accompanying drawings:
100, 2200-air-conditioning system; 101, 301-compressor; 102, 306, 402-electric control box; 103-refrigerant pipeline; 104, 116-throttling component; 105-heat exchange component; 106-fan; 107, 312-liquid-side stop valve; 108, 313-gas-side stop valve; 109-reversing valve; 110, 307, 401-heat exchanger; 111, 114, 309-temperature sensor; 112-pressure sensor; 113-electric control component; 115, 406-heat dissipation fin; 117-gas-liquid separation valve; 118-capillary tube; 302-four-way reversing valve; 303-outdoor unit heat exchanger assembly; 304-main throttling component; 305-assistant throttling component; 308, 405-cooling fan; 310-low-pressure side pressure sensor; 311-temperature sensor or temperature and humidity sensor; 403-electric control motherboard; 404-electric control box temperature sensor; 407, 501-sensor.

Implementations of objectives, functional features, and advantages of the present invention will be described in some embodiments of the invention in connection with embodiments of the invention and with reference to the respective accompanying drawings.

### DETAILED DESCRIPTION OF THE EMBODIMENTS

Technical solutions according to embodiments of the present invention will be described clearly and completely below in combination with accompanying drawings of the embodiments of the present invention. Obviously, the embodiments described below are only a part of the embodiments of the present invention, rather than all embodiments of the present disclosure. The scope of protection of the present invention is defined in the appended claims.

It should be noted that, each orientation indication (such as up, down, left, right, front, rear, ...) in the embodiments of the present disclosure is used only for explaining a relative positional relation, movements, etc., between components in a particular pose (as illustrated in the figures). If the particular pose is changed, the orientation indication is changed accordingly.

In addition, description related to "first", "second", and the like in the present disclosure is only used for descriptive purposes, and cannot be understood as indicating or implying relative importance or implicitly indicating the number of indicated technical features.

In addition, combinations can be performed on the technical solutions according to various embodiments of the present invention falling within the protection scope claimed.

At present, applications of air-conditioning systems are becoming increasingly widespread. Under considerations of cost-effectiveness and ease of engineering installation, a designed capacity of a single module per unit space is continuously increased. However, since a layout space of an electric control component is relatively limited, heat dissipation of the electric control component has become a critical issue today.

In the related art, heat dissipation combining a fan and a heat dissipation fin is usually adopted. This manner has an advantage of cost-effectiveness but a disadvantage of a limited heat dissipation capability. Operation in a high-temperature environment deteriorates a heat dissipation condition for the electric control component, and is likely to lead to high-temperature shutdown protection of a system in severe cases.

The embodiments not forming part of the present invention provide a temperature adjustment method, an electric control box, an anti-condensation control method, and an air conditioner. The air-conditioning system comprises an electric control box, a compressor, a refrigerant pipeline, and a throttling component disposed at the refrigerant pipeline and configured to adjust a refrigerant flow rate. An electric control component, a heat exchange component, and a fan are disposed in the electric control box. The refrigerant pipeline is configured to input a refrigerant outputted by the compressor or an indoor unit into the heat exchange component. The heat exchange component is configured to perform heat exchange based on a phase change of the refrigerant. By arranging the heat exchange component in the electric control box, the heat exchange can be performed based on the refrigerant to adjust the temperature in the electric control box. In addition, by arranging the fan in the electric control box, air circulation in the electric control box can be realized through rotation of the fan, improving a temperature adjustment effect.

A heat preservation capability in cold environments and a heat dissipation capability of the electric control component in the electric control box are important factors affecting service lives of the electric control box and components such as the electric control component disposed in the electric control box. Therefore, by obtaining a component temperature of the electric control component and an outlet superheat degree of the heat exchange component, at least one of an opening degree of the throttling component, a rotational speed of the fan, and a frequency of the compressor is adjusted based on the component temperature and the outlet superheat degree, to accurately adjust the temperature in the electric control box. An effect of accurately adjusting the temperature of the electric control component in the electric control box can be realized to ensure that the electric control component maintains a safe operation temperature. In addition, the electric control box can be maintained at a suitable temperature, which can further avoid damages such as short circuit caused by condensation of the electric control component, greatly prolonging the service life of the electric control component.

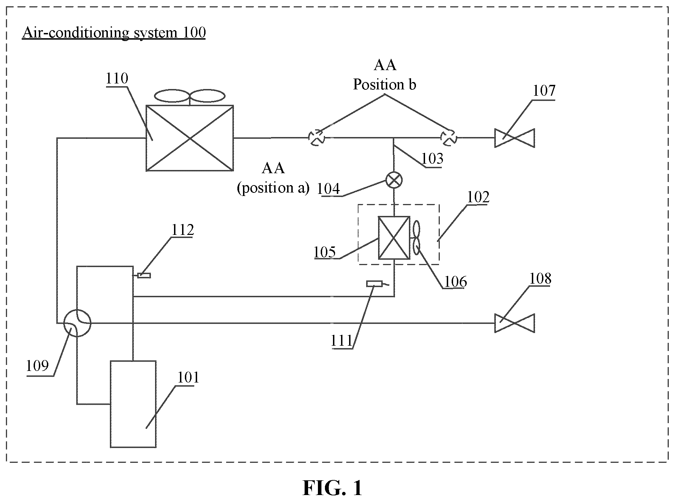

A structure and principles of an air-conditioning system which do not form part of the present invention will be described in detail below with reference to FIG. 1. FIG. 1 is a first schematic diagram showing a structure of an air-conditioning system. As illustrated in FIG. 1, an air-conditioning system 100 according to the embodiment comprises a compressor 101, an electric control box 102, a refrigerant pipeline 103, and a throttling component disposed at the refrigerant pipeline and configured to adjust a refrigerant flow rate.

The electric control component (not illustrated in FIG. 1) is disposed in the electric control box 102.

In an embodiment, a heat exchange component 105 is further disposed in the electric control box 102. The compressor or an indoor unit (not illustrated in the figures) may output a refrigerant through the refrigerant pipeline 103, and a part of the refrigerant is inputted into the heat exchange component 105 of the electric control box 102 through a branch refrigerant pipeline, such that heat exchange is performed by the heat exchange component 105 based on the refrigerant, adjusting a temperature of the electric control component in the electric control box.

It should be noted that a type of the heat exchange component 105 is not particularly limited in the embodiments. In some embodiments, during an operation of the air-conditioning system 100 in some scenarios, the electric control component in the electric control box 102 may generate heat. If the air-conditioning system 100 is in a high-temperature environment, heat dissipation of the electric control component is affected, resulting in a high temperature of the electric control component, which affects reliability of the electric control component, and further affects a service life of the air-conditioning system 100.

Therefore, the heat exchange component 105 may be provided as a cooling heat exchanger such as an evaporator, to lower the temperature in the electric control box 102, enabling the electric control component in the electric control box to operate at a normal operation temperature.

In some other scenarios, even if the electric control component releases a certain amount of heat when in operation, the temperature of the electric control component may be too low when the air-conditioning system 100 is currently in a low-temperature environment, which can also affect the reliability of the electric control component. Therefore, in such scenarios, a heating device may be disposed at an air return side or an air outlet side of the fan 106 to raise the temperature in the electric control box 102 when the temperature of the electric control component is too low, such that the electric control component in the electric control box 102 is maintained at a normal operation temperature. A specific adjustment method is not particularly limited in the embodiments.

In some embodiments, as illustrated in FIG. 1, the refrigerant pipeline 103 for inputting the refrigerant into the heat exchange component 105 is further provided with the throttling component 104 having an adjustable opening degree. Therefore, the flow rate of the refrigerant inputted into the heat exchange component 105 is adjusted through adjusting the opening degree of the throttling component 104. It should be understood that a temperature adjustment efficiency increases as the refrigerant flow rate increases. With the throttling component, the refrigerant flow rate can be flexibly adjusted as desired to meet different temperature adjustment demands.

In further embodiments, a position for arranging the throttling component 104 is not particularly limited in the embodiment. For example, on the one hand, the throttling component 104 may be disposed at a main refrigerant pipeline, e.g., position b in FIG. 1. When the refrigerant flow rate at the main refrigerant pipeline is adjusted, a flow rate of a refrigerant entering the heat exchange component 105 can be adjusted to a certain extent.

However, since a part of the refrigerant in the main refrigerant pipeline still needs to realize refrigeration or heating of the air-conditioning system, disposing the throttling component at the main refrigerant pipeline is likely to affect cooling or heating of the air-conditioning system when the flow rate of the refrigerant entering the heat exchange component 105 is adjusted. In view of this, in an embodiment, the throttling component 104 may be disposed at the branch refrigerant pipeline 103 configured to input the refrigerant into the heat exchange component 105, e.g., position a in FIG. 1, to improve the effect of adjusting the refrigerant flow rate and prevent an influence on the refrigeration or the heating of the air-conditioning system, thereby improving user experience.

In other embodiments, the throttling component may be disposed at each of the position a and the position b to achieve a better refrigerant flow adjustment effect.

In further embodiments, as illustrated in FIG. 1, the air-conditioning system 100 may further comprise, but is not limited to, at least one of a liquid-side stop valve 107, a gas-side stop valve 108, a reversing valve 109, a heat exchanger 110, a temperature sensor 111, a pressure sensor 112, and the like.

The reversing valve 109 may be a two-way reversing valve, a three-way reversing valve, a four-way reversing valve, or the like, which is not particularly limited in the embodiments.

The temperature sensor 111 may be configured to collect a temperature at an outlet of the heat exchange component 105. The pressure sensor 112 may be configured to collect an ambient pressure of an environment where the electric control box 102 is located. Specific positions for setting the temperature sensor 111 and the pressure sensor 112 are not particularly limited in the embodiments.

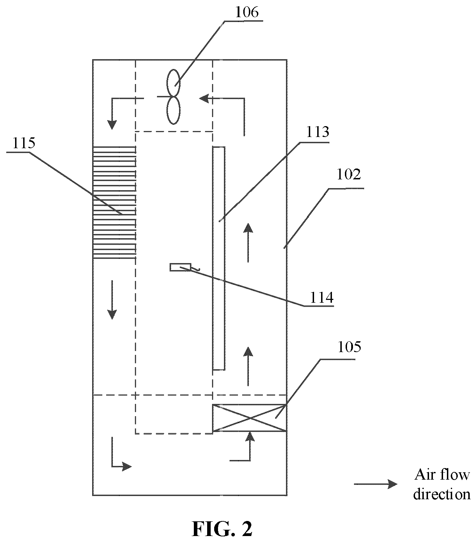

In some embodiments, as illustrated in FIG. 1, a fan 106 that is rotatable is further disposed in the electric control box 102. Arrangement of each member in the electric control box 102 will be described below with reference to FIG. 2.

FIG. 2 is a first schematic diagram showing a structure of an electric control box according to an embodiment not forming part of the present invention. As illustrated in FIG. 2, an electric control component 113 is disposed in the electric control box 102. The electric control component 113 may be any type of component. The embodiments are not limited in this regard. For example, the electric control component 113 may be an electric control motherboard.

It should be understood that, the fan 106 and the heat exchange component 105 being respectively disposed at opposite ends of the electric control box 102 is illustrated as an example. However, the embodiments are not limited in this regard.

Rotation of the fan 106 drives air in the electric control box 102 to flow, which improves a heat dissipation effect or a temperature rise effect. In addition, the electric control component 113 is disposed in the electric control box 102, in which air circulation can be formed by the fan 106, improving a heat dissipation efficiency or a temperature rise efficiency in some embodiments, such that the temperature adjustment effect can be improved. Further, since the electric control component 113 is disposed in the electric control box 102, which has a relatively closed configuration, an amount of condensed water generated in the vicinity of the electric control component 113 can be reduced, which can ensure the reliability of the electric control component 113 in some embodiments. Furthermore, an independent closed space can be formed by the electric control box 102 to prevent entrance of dust and organisms, which improves reliability and a quality of the product.

A direction of the air flow in the electric control box 102 is also not particularly limited in the embodiments. For example, the air flow may be in a clockwise direction or a counterclockwise direction. It should be understood that the counterclockwise direction of the air flow in FIG. 2 is illustrated as an example, and the embodiments are not limited in this regard.

In some embodiments, during cooling and heat dissipation performed by the heat exchanger 105, when the air-conditioning system 100 is in a refrigeration operation or a heating operation, a part of a liquid refrigerant is throttled by the throttling component 104, and then enters the heat exchanger 105 for evaporation and heat absorption. The circulated air in the electric control box 102 undergoes evaporation and cooling through the heat exchanger 105 to take away heat of the electric control component 113 and then flows back to the heat exchange component 105. In this way, one complete air circulation is formed.

In some embodiments, one or more of a temperature sensor 114, a heat dissipation fin 115, and the like may be further provided in the electric control box 102. The embodiments are not limited in this regard.

Both the temperature sensor 114 and the heat dissipation fin 115 may be arranged close to the electric control component 113. The temperature sensor 114 is configured to collect an ambient temperature of the electric control component 113 in the electric control box 102. The heat dissipation fin 115 is configured to dissipate heat from the electric control component 113.

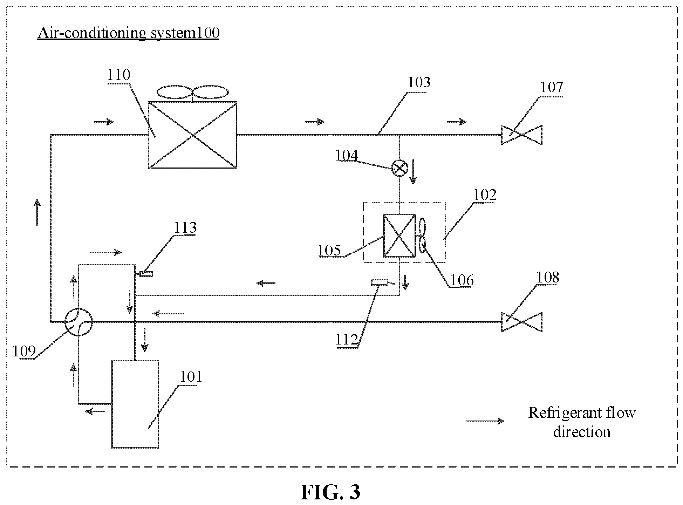

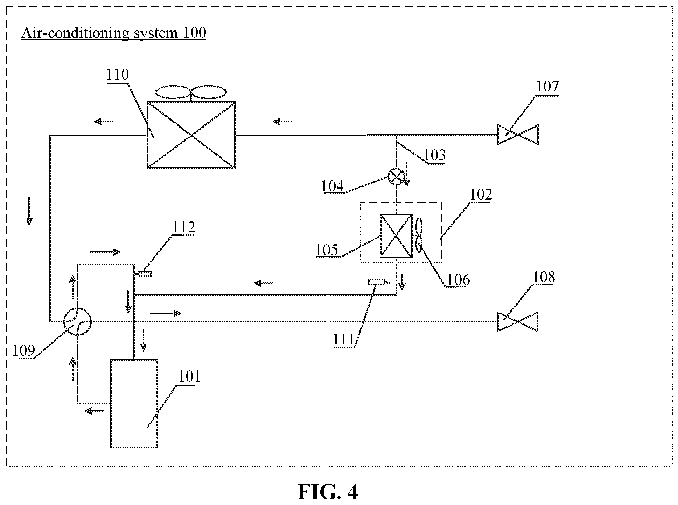

A temperature adjustment principle of the embodiments not forming part of the present invention will be described below with reference to FIG. 3 and FIG. 4.

FIG. 3 is a schematic principle diagram of an air-conditioning system in a refrigeration process according to an embodiment not forming part of the present invention. As illustrated in FIG. 3, the compressor 101, the reversing valve 109, the heat exchanger 110, the throttling component 104, and the electric control box 102 are sequentially connected by the refrigerant pipeline 103 to form a closed circuit. The heat exchange component 105 is connected between the throttling component 104 and the compressor 101.

In the heat dissipation process, when the air-conditioning system 100 is in refrigeration, the refrigerant discharged from the compressor 101 enters the heat exchanger 110 through the reversing valve 109 and the refrigerant pipeline 103 to undergo condensation. A temperature of the refrigerant outputted from the heat exchanger 110 is lowered through the condensation.

In some embodiments, the refrigerant having the temperature lowered enters the throttling component 104 through the refrigerant pipeline 103. Therefore, the flow rate of the refrigerant entering the heat exchange component 105 is adjusted by the throttling component 104.

Accordingly, in this case, the heat exchange component 105 can perform heat exchange based on the refrigerant to lower the temperature in the electric control box 102, and take away the heat of the electric control component. Then, the refrigerant outputted from the heat exchange component 105 is inputted into the compressor 101 through the refrigerant pipeline 103.

Accordingly, the compressor 101 performs a compression based on the inputted refrigerant. The compressed refrigerant is circulated in a same manner. Therefore, one refrigerant circulation process of the refrigeration process is completed.

It should be noted that, each of the liquid-side stop valve 107 and the gas-side stop valve 108 is connected to an indoor unit (not illustrated in the figures). In an embodiment, a part of the refrigerant outputted from the compressor 101 is inputted into the heat exchange component 105 in the electric control box 102 through the branch refrigerant pipeline for heat exchange, while another part of the refrigerant outputted from the compressor 101 enters, via the liquid-side stop valve 107, the indoor unit through another branch refrigerant pipeline for heat exchange. Then, the refrigerant subjected to the heat exchange is outputted from the gas-side stop valve 108, and is returned to the compressor 101 through the refrigerant pipeline. In this way, one circulation of the refrigerant of the refrigeration process is completed.

FIG. 4 is a schematic principle diagram of an air-conditioning system in a heating process according to an embodiment not forming part of the present invention. As illustrated in FIG. 4, when the air-conditioning system 100 is in refrigeration during the heat dissipation, the refrigerant is inputted into the indoor unit (not illustrated in the figures) through the liquid-side stop valve 107. A part of the refrigerant is inputted into the heat exchange component 105 in the electric control box 102 through the branch refrigerant pipeline.

Accordingly, the heat exchange is performed by the heat exchange component 105 based on the inputted refrigerant, and the evaporated gaseous refrigerant is inputted by the heat exchange component 105 into a return gas side of the compressor 101.

In this process, another part of the refrigerant outputted from the liquid-side stop valve 107 enters the heat exchanger 110 through another branch refrigerant pipeline for heat exchange. The refrigerant obtained subsequent to the heat exchange is inputted into the compressor 101 through the reversing valve 109.

Accordingly, the compressor 101 performs a compression process based on the inputted refrigerant. The compressed refrigerant is returned to the indoor unit through the reversing valve 109 and the gas-side stop valve 108.

In some embodiments, the indoor unit performs heat exchange based on the inputted refrigerant, and outputs the refrigerant subjected to the heat exchange from the gas-side stop valve 108. The refrigerant is circulated in the above manner, to complete one circulation of the refrigerant of the refrigeration process.

In the above-mentioned air-conditioning system, an execution body of temperature adjustment may be a main control module of an outdoor unit of the air-conditioning system or a main control module of the indoor unit of the air-conditioning system, which is not limited in the embodiments. The temperature adjustment method according to an embodiment comprises the following steps.
(1) A component temperature of the electric control component in the electric control box and an outlet superheat degree of the heat exchange component are obtained.

It should be noted that, the electric control component may be, for example, an electric control module, an electric control motherboard, or the like.

In an embodiment, the component temperature may be collected by the temperature sensor 114 disposed in the electric control box 102. The collected component temperature may be reported to the execution body of the embodiments synchronously.

It should be understood that, the method for collecting the component temperature is not particularly limited in the embodiments. For example, the temperature sensor 114 may collect and report the component temperature in real time. In an embodiment, the temperature sensor 114 may periodically collect and report the component temperature.

In a further embodiment, the temperature sensor 114 may collect the component temperature in real time or periodically, make a determination of the collected component temperature, and report the collected component temperature when the collected component temperature obtained at a time point satisfies a certain condition. In some embodiments, when the collected component temperature obtained at the time point is higher than a first limit value or lower than a second limit value, the collected component temperature may be reported since the electric control component may be affected by an excessively high temperature or an excessively low temperature. By making the determination of the collected temperature in some embodiments, the electric control component can be treated timely under the high temperature or the low temperature, to prevent the electric control component from being damaged or reliability of the electric control component from being compromised. In addition, frequent reporting of the collected component temperature can be avoided to reduce a data processing load.

In some embodiments, obtaining the outlet superheat degree of the heat exchange component comprises the following steps.
I. An ambient pressure of an environment where the electric control box is located and an outlet ambient temperature of the heat exchange component are obtained.

In an embodiment, the ambient pressure of the environment where the electric control box is located may be collected by the pressure sensor 112, and the outlet ambient temperature of the heat exchange component may be collected by the temperature sensor 111.

II. The outlet superheat degree is determined based on the ambient pressure and the outlet ambient temperature.

In an embodiment, an ambient saturation temperature corresponding to the currently collected ambient pressure is determined based on a correspondence between the ambient pressure and the ambient saturation temperature.

In some embodiments, a difference between the outlet ambient temperature and the ambient saturation temperature is determined as the outlet superheat degree.

(2) At least one of an opening degree of the throttling component, a rotational speed of the fan, and a frequency of the compressor is adjusted based on the component temperature and the outlet superheat degree, to adjust a temperature of the electric control component in the electric control box.

In an embodiment, the heat exchange component 105 is the cooling heat exchanger. On the one hand, when the component temperature is greater than or equal to a second predetermined value, and/or the outlet superheat degree is greater than a target superheat degree, a temperature of the electric control component may be high, which is likely to poses a risk of damage to the electric control component. In an embodiment, heat dissipation may be performed on the electric control component through at least one of or a combination of: increasing the opening degree of the throttling component 104; increasing the rotational speed of the fan 106; and reducing the frequency of the compressor 101.

On the other hand, when the component temperature is smaller than or equal to the second predetermined value, and/or the outlet superheat degree is smaller than or equal to the target superheat degree, the temperature of the electric control component may be low, which is likely to affect the reliability of the electric control component. In an embodiment, the temperature of the electric control component can be prevented from being too low through at least one of or a combination of: reducing the opening degree of the throttling component 104; reducing the rotational speed of the fan 106; and increasing the frequency of the compressor 101.

It should be noted that, by adjusting the opening degree of the throttling component 104, the flow rate of the refrigerant entering the heat exchange component 105 can be adjusted. In addition, as the flow rate of the refrigerant increases, a heat exchange efficiency of the heat exchange component 105 increases, and the temperature adjustment efficiency also increases (i.e., the heat dissipation capability or the heat preservation capability is enhanced). Accordingly, the temperature adjustment efficiency can be reduced through reducing the flow rate of the refrigerant.

By adjusting the rotational speed of the fan 106, a speed of the air flow inside the electric control box 102 can be adjusted. In addition, the temperature adjustment efficiency in the electric control box 102 increases as the rotational speed of the fan 106 increases. Accordingly, the temperature adjustment efficiency can be reduced through reducing the rotational speed of the fan 106.

Heat generation of the electric control component can be adjusted through adjusting the frequency of the compressor 101. In addition, as the frequency of the compressor 101 increases, a load of the electric control component increases, and the amount of heat generated by the electric control component also increases. Accordingly, the load of the electric control component can be reduced through decreasing the frequency of the compressor 101, reducing the heat generation.

In the embodiments, the at least one of the opening degree of the throttling component, the rotational speed of the fan, and the frequency of the compressor is adjusted synchronously based on the component temperature of the electric control component in the electric control box and the outlet superheat degree of the heat exchange component 105, to accurately adjust the temperature in the electric control box. Therefore, the effect of accurately adjusting the temperature of the electric control component in the electric control box can be realized to ensure that the electric control component maintains the safe operation temperature. In addition, with the above-mentioned temperature adjustment method, the electric control box can be maintained at a suitable temperature, which can further avoid damages such as short circuit caused by condensation of the electric control component, greatly prolonging the service life of the electric control component.

In addition, the environmental temperature around the electric control component is likely to drop below a dew point temperature when a temperature of the refrigerant is low. In severe cases, a large amount of condensed water is generated, causing short circuits and damages to the electric control component. In an embodiment, the electric control component is disposed in the relatively closed electric control box, which can reduce a risk of short circuits and damages caused by the condensation of the electric control component.

In further embodiments, a process of adjusting the temperature of the electric control component in the electric control box in the above-mentioned operation (2) comprises the following operations.
I. A temperature difference between the component temperature and a temperature limit in the electric control box is obtained.
II. At least one of the opening degree of the throttling component 104, the rotational speed of the fan 106, and the frequency of the compressor 101 is adjusted based on the temperature difference and a comparative relation between the outlet superheat degree and a target superheat degree.

It should be noted that a value of the temperature limit varies depending on scenarios. On the one hand, the temperature limit may be a maximum temperature allowing the normal operation of the electric control component in the electric control box. When the component temperature approaches or exceeds the maximum temperature, the reliability of the electric control component is degraded, or the electric control component can even be damaged. In this case, the heat dissipation needs to be performed on the electric control component in the electric control box. Correspondingly, the temperature difference is a calculation result obtained through subtracting the component temperature from the maximum temperature.

On the other hand, the temperature limit may be a minimum temperature allowing the normal operation of the electric control component in the electric control box. When the component temperature approaches or is lower than the minimum temperature, the reliability of the electric control component is degraded, or the electric control component can even be damaged. In this case, the heat preservation needs to be performed on the electric control component in the electric control box.

It should be understood that, a specific value of the temperature limit in each scenario is not particularly limited in the embodiments. In some embodiments, the maximum temperature (i.e., the temperature limit) may be set to a temperature value such as 80°C, 90°C, 100°C, and 120°C. The minimum temperature (i.e., the temperature limit) may be set to a temperature value such as -20°C, -30°C, and -40°C. Correspondingly, the temperature difference is a calculation result obtained through subtracting the maximum temperature from the component temperature.

The target superheat degree is also not particularly limited in the embodiments. For example, the target superheat degree may be set to any value ranging from 0°C to 10°C, e.g., 0°C, 5°C, 8°C, and 10°C.

In the embodiments, the temperature in the electric control box is adjusted based on the temperature in the electric control box and the outlet superheat degree of the heat exchange component 105, to guarantee a suitable temperature of the electric control component, avoiding the degradation of the reliability of the electric control component or even damages to the electric control component due to supercooling or overheating of the electric control component. In addition, the outlet superheat degree can be kept in a normal range to prevent the service life of the air-conditioning system from being affected due to an inappropriate superheat degree.

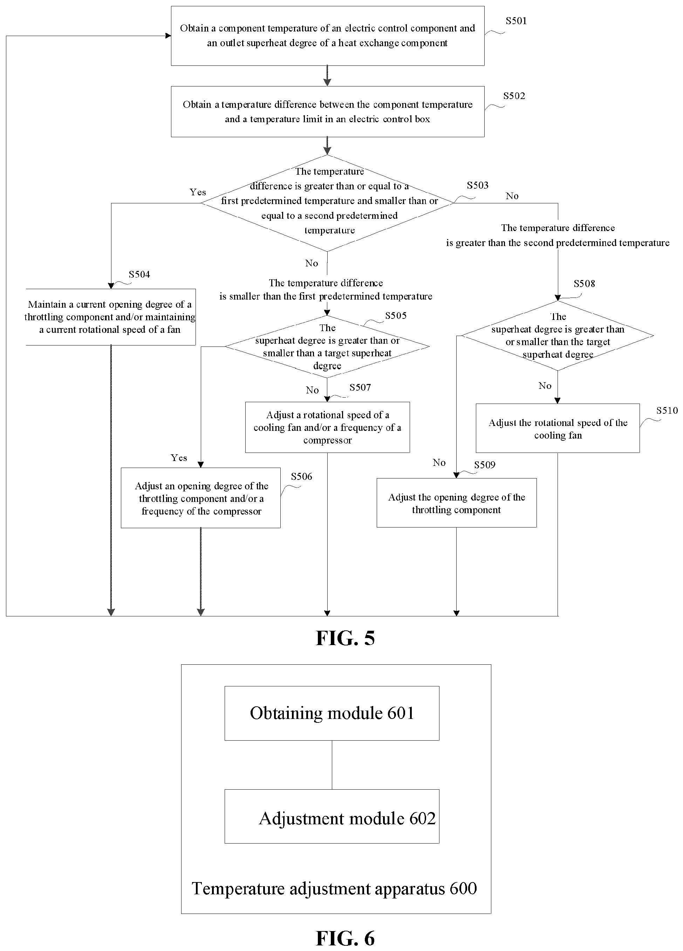

The temperature adjustment method according to the embodiments not forming part of the present invention will be described in detail below with reference to FIG. 5 and by taking the heat dissipation of the electric control component as an example. It should be understood that an implementation of the heat preservation of the electric control component is similar to that of the heat dissipation of the electric control component, and thus details thereof will be omitted here.

FIG. 5 is a first flowchart illustrating a temperature adjustment method according to an embodiment not forming part of the present invention. As illustrated in FIG. 5, a process of the temperature adjustment comprises following operations at blocks S501 to S510.

At S501, a component temperature of the electric control component in the electric control box and an outlet superheat degree of the heat exchange component are obtained.

At S502, a temperature difference between the component temperature and a temperature limit in the electric control box are obtained.

It should be noted that, implementations of operations at S501 and S502 are similar to those of the above embodiments, and thus reference can be made to the above embodiments for details.

At S503, it is determined whether the temperature difference is greater than or equal to a first predetermined temperature and smaller than or equal to a second predetermined temperature.

The second predetermined temperature is greater than the first predetermined temperature. Specific values of the first predetermined temperature and the second predetermined temperature are not particularly limited in the embodiments. In some embodiments, the first predetermined temperature may be any value ranging from 0°C to 5°C, e.g., 0°C, 1°C, 3°C, or 5°C, while the second predetermined temperature may be any value ranging from 10°C to 30°C, e.g., 10°C, 15°C, 20°C, 25°C, or 30°C.

At S504, a current opening degree of the throttling component 104 and/or a current rotational speed of the fan 106 is maintained, when the temperature difference is greater than or equal to the first predetermined temperature and smaller than or equal to the second predetermined temperature.

As an example, the temperature limit is the maximum temperature. When the temperature difference is smaller than the first predetermined temperature, the component temperature is close to the temperature limit. In this case, the electric control component is at a high risk of damage and has an unsatisfactory heat dissipation capability. When the temperature difference is greater than or equal to the first predetermined temperature and smaller than or equal to the second predetermined temperature, the electric control component is at a normal temperature and has a normal heat dissipation capability. When the temperature difference is greater than the second predetermined temperature, the electric control component is at the normal temperature and has an excessive heat dissipation capability currently.

Therefore, a current operation condition can be maintained when the temperature difference is greater than or equal to the first predetermined temperature and smaller than or equal to the second predetermined temperature, which comprises, but is not limited to, one or more of: maintaining the current opening degree of the throttling component 104, to cause the refrigerant entering the heat exchange component 105 to be maintained at a current flow rate; and maintaining the current rotational speed of the fan 106 to maintain the air flow in the electric control box.

In an embodiment, an operation frequency of an energy-consuming component such as the compressor 101 may be maintained to prevent a high-temperature failure caused by an increase in heat generation of the electric control component due to a change in the operation frequency.

At S505, it is determined whether the outlet superheat degree is greater than the target superheat degree when the temperature difference is smaller than the first predetermined temperature.

At S506, the opening degree of the throttling component and/or the frequency of the compressor is adjusted when the outlet superheat degree is greater than the target superheat degree.

In some embodiments, when the temperature difference is smaller than the first predetermined temperature and the outlet superheat degree is greater than the target superheat degree, the heat dissipation capability in the electric control box fails to meet a demand of the electric control component. In addition, since the superheat degree fails to reach the target superheat degree, a liquid strike may occur. In this case, the refrigerant flow rate needs to be increased to increase a refrigeration capacity, and/or the heat generation of the electric control component needs to be reduced, to adjust both the temperature of the electric control component and the superheat degree. Therefore, the liquid strike can be prevented to ensure a safe operation of the compressor.

In this embodiment, the refrigerant flow rate may be increased through increasing the opening degree of the throttling component 104, or the heat generation of the electric control component may be reduced through decreasing the frequency of the compressor 101. It should be understood that the above two methods can also be performed simultaneously. For example, the frequency of the compressor 101 can be decreased while adjusting the opening degree of the throttling component 104, to improve the heat dissipation efficiency.

However, in some scenarios, as illustrated in FIG. 3 or FIG. 4, since the compressor 101 is also used to realize air conditioning of the indoor unit, decreasing the frequency of the compressor 101 is likely to affect a normal refrigeration process or a normal heating process of the indoor unit, which affects user experience. Therefore, as a preferred embodiment, the throttling component 104 may be preferentially adjusted. The frequency of the compressor 101 may be adjusted when the throttling component 104 cannot be adjusted. In this way, a normal operation of the air-conditioning system can be ensured as much as possible while realizing the heat dissipation of the electric control component.

In an embodiment, an implementation may be realized through the following operations.
(1) A current opening degree of the throttling component 104 is obtained.
(2) The opening degree of the throttling component 104 is increased when the current opening degree of the throttling component 104 is smaller than a first target opening degree.

The first target opening degree may be a maximum opening degree of the throttling component 104 or any predetermined opening degree.

It should be noted that a specific manner for increasing the opening degree of the throttling component 104 is not particularly limited in the embodiments. On the one hand, the opening degree may be adjusted through a linear PI adjustment. That is, a control deviation is formed based on the outlet superheat degree and the target superheat degree. A proportion and an integral of the control deviation are linearly combined to form a control variable, for controlling the opening degree of the throttling component 104. A deviation of the system may be proportionally reflected through the PI adjustment. Once the deviation occurs in the system, an adjustment effect is immediately generated by a proportional adjustment to reduce the deviation.

On the other hand, a constant adjustment step size may be predetermined. An adjustment may be made based on the adjustment step size. In some embodiments, as an example, the maximum opening degree of the throttling component 104 is 1. The adjustment step size may be set to any value such as 1/10 or 1/5. Each adjustment is performed by one or more step sizes.

In addition, the opening degree of the throttling component 104 may be adjusted at a predetermined cycle. A length of the predetermined cycle is not limited in the embodiments. For example, the predetermined cycle may be set to any value ranging from 0 second to 120 seconds, e.g., 0 second (i.e., the opening degree of the throttling component 104 is continuously adjusted), 20 seconds, 50 seconds, 60 seconds, 100 seconds, and 120 seconds.

It should be understood that subsequent to each adjustment, the temperature difference and the outlet superheat degree may be obtained through the method of operations at S501 and S502. When the temperature difference and the outlet superheat degree still satisfy that "the temperature difference is smaller than the first predetermined temperature and the outlet superheat degree is greater than the target superheat degree" subsequent to each adjustment, the opening degree is continuously adjusted based on the predetermined cycle. When the temperature difference and the outlet superheat degree fail to satisfy that "the temperature difference is smaller than the first predetermined temperature and the outlet superheat degree is greater than the target superheat degree" subsequent to each adjustment, the current heat dissipation capability is in a normal state. In this case, the adjustment of the opening degree of the throttling component 104 may be stopped.

(3) The frequency of the compressor 101 is decreased when the current opening degree of the throttling component 104 is greater than or equal to the first target opening degree.

In this process, it is likely that even when the throttling component 104 is adjusted to the maximum opening degree, the heat dissipation capability is still insufficient. In this case, when the rotational speed of the fan 106 continues to be increased, the heat generation of the fan 106 itself increases, which brings about no improvement in a temperature field in the electric control box. The heat generation of the electric control component is still higher than a refrigeration capacity of the heat exchange component 105. Therefore, when adjusting the opening degree of the throttling component 104, it is required to obtain the adjusted opening degree in real time. When the opening degree of the throttling component 104 is adjusted to the maximum opening degree, the frequency of the compressor 101 may be decreased to reduce the heat generation of the electric control component.

Similarly, when the frequency of the compressor 101 is decreased, the frequency of the compressor 101 may be adjusted based on PI adjustment or the predetermined step size. Subsequent to each adjustment, the temperature difference and the outlet superheat degree may be obtained through operations at S501 and S502. When the temperature difference and the outlet superheat degree still satisfy that "the temperature difference is smaller than the first predetermined temperature and the outlet superheat degree is greater than the target superheat degree" subsequent to each adjustment, the frequency of the compressor 101 is continuously adjusted based on the predetermined cycle. When the temperature difference and the outlet superheat degree fail to satisfy that "the temperature difference is smaller than the first predetermined temperature and the outlet superheat degree is greater than the target superheat degree" subsequent to each adjustment, the current heat dissipation capability is in a normal state. In this case, the adjustment of the frequency of the compressor 101 may be stopped.

In the embodiments, the throttling component 104 is preferentially adjusted. The frequency of the compressor 101 is adjusted in response to failing to adjust the throttling component 104. Therefore, the normal operation of the air-conditioning system is ensured as much as possible while realizing the heat dissipation of the electric control component.

At S507, the rotational speed of the fan and/or the frequency of the compressor 101 is adjusted when the outlet superheat degree is equal to the target superheat degree.

In some embodiments, when the temperature difference is smaller than the first predetermined temperature and the outlet superheat degree is smaller than or equal to the target superheat degree, the heat dissipation capability in the electric control box fails to meet the demand of the electric control component, but the superheat degree has reached a normal superheat degree. However, since the superheat degree is affected to a certain extent when adjusting the throttling component 104, the heat dissipation efficiency can be increased and/or the heat generation of the electric control component can be decreased through enhancing the air flow in the electric control box to reduce the temperature of the electric control component while maintaining a current superheat degree.

In this embodiment, the air flow in the electric control box may be enhanced through increasing the rotational speed of the fan 106, or the heat generation of the electric control component may be reduced through decreasing the frequency of the compressor 101. It should be understood that the above two methods may also be performed synchronously. For example, the frequency of the compressor 101 may be decreased while increasing the rotational speed of the fan 106, to improve the heat dissipation efficiency.

However, in some scenarios, as illustrated in FIG. 3 or FIG. 4, since the compressor 101 is also used to realize air conditioning of the indoor unit, decreasing the frequency of the compressor 101 is likely to affect the normal refrigeration process or the normal heating process of the indoor unit, which affects the user experience. Therefore, as a preferred embodiment, the rotational speed of the fan 106 may be preferentially adjusted. The frequency of the compressor 101 may be adjusted when the rotational speed of the fan 106 cannot be adjusted. In this way, the normal operation of the air-conditioning system can be ensured as much as possible while realizing the heat dissipation of the electric control component.

In some embodiments, the operation at S507 comprises the following operations.
(1) A current rotational speed of the fan is obtained.
(2) The rotational speed of the fan is increased when the current rotational speed is smaller than a first target rotational speed.
(3) The frequency of the compressor is decreased when the current rotational speed is greater than or equal to the first target rotational speed.

The first target rotational speed may be a maximum rotational speed of the fan 106, or may be any predetermined rotational speed.

It should be noted that a specific manner for adjusting the rotational speed of the fan 106 is similar to the manner for adjusting the opening degree of the throttling component 104. On the one hand, the rotational speed may be adjusted through the PI adjustment. That is, a control deviation is formed based on the outlet superheat degree and the target superheat degree. A proportion and an integral of the control deviation are linearly combined to form a control variable, for controlling the rotational speed of the fan 106. A deviation of the system may be proportionally reflected through the PI adjustment. Once the deviation occurs in the system, an adjustment effect is immediately generated by a proportional adjustment to reduce the deviation.

On the other hand, a constant adjustment step size may be predetermined. An adjustment may be made based on the adjustment step size. In some embodiments, as an example, a speed level of the fan 106 ranges from 1 to n. The adjustment step size may be set to any value such as 1 or 2. Each adjustment is performed by one or more speed levels.

In addition, the rotational speed of the fan 106 may also be adjusted at a predetermined cycle. A length of the predetermined cycle is not limited in the embodiments. For example, the predetermined cycle may be set to any value ranging from 0 second to 120 seconds, e.g., 0 second (i.e., the rotational speed of the fan 106 is continuously adjusted), 20 seconds, 50 seconds, 60 seconds, 100 seconds, and 120 seconds.

It should be understood that subsequent to each adjustment, the temperature difference and the outlet superheat degree can be obtained through operations at S501 and S502. When the temperature difference and the outlet superheat degree still satisfy that "the temperature difference is smaller than the first predetermined temperature and the outlet superheat degree is smaller than or equal to the target superheat degree" subsequent to each adjustment, the speed level of the fan is continuously adjusted based on the predetermined cycle. When the temperature difference and the outlet superheat degree fail to satisfy that "the temperature difference is smaller than the first predetermined temperature and the outlet superheat degree is smaller than or equal to the target superheat degree" subsequent to each adjustment, the current heat dissipation capability is in a normal state. In this case, the adjustment of the speed level of the fan may be stopped.

In this process, it is likely that the speed level of the fan 106 has been adjusted to a maximum speed level, but the heat dissipation capability is still insufficient. Therefore, when adjusting the speed level of the fan 106, it is necessary to obtain the adjusted speed level of the fan 106 in real time. When the speed level of the fan 106 has been adjusted to the maximum speed level, the frequency of the compressor 101 may be decreased to reduce the heat generation of the electric control component.

Similarly, when the frequency of the compressor 101 is decreased, the frequency of the compressor 101 may be adjusted based on PI or the predetermined step size. Subsequent to each adjustment, the temperature difference and the outlet superheat degree may be obtained through operations at S501 and S502. When the temperature difference and the outlet superheat degree still satisfy that "the temperature difference is smaller than the first predetermined temperature and the outlet superheat degree is smaller than or equal to the target superheat degree" subsequent to each adjustment, the frequency of the compressor 101 is continuously adjusted based on the predetermined cycle. When the temperature difference and the outlet superheat degree fail to satisfy that "the temperature difference is smaller than the first predetermined temperature and the outlet superheat degree is smaller than or equal to the target superheat degree" subsequent to each adjustment, the current heat dissipation capability is in a normal state. In this case, the adjustment of the frequency of the compressor 101 may be stopped.

In the embodiments, the speed level of the fan 106 is preferentially adjusted. The frequency of the compressor 101 is adjusted in response to failing to adjust the speed level of the fan 106. Therefore, the normal operation of the air-conditioning system is ensured as much as possible while realizing the heat dissipation of the electric control component.

At S508, it is determined whether the outlet superheat degree is greater than the target superheat degree when the temperature difference is greater than the second predetermined temperature.

At S509, the opening degree of the throttling component is adjusted when the outlet superheat degree is greater than the target superheat degree.

It should be noted that, when the temperature difference is greater than the second predetermined temperature and the outlet superheat degree is greater than the target superheat degree, the current heat dissipation capability is excessive, and the superheat degree does not reach the target superheat degree. The opening degree of the throttling component 104 may be adjusted to reduce energy consumption of the system and adjust the superheat degree.

In some embodiments, adjusting the opening degree of the throttling component 104 comprises the following operations.
(1) A current opening degree of the throttling component 104 is obtained.
(2) The opening degree of the throttling component 104 is decreased when the current opening degree of the throttling component 104 is greater than a second target opening degree.

The second target opening degree may be a minimum opening degree of the throttling component 104 or any predetermined opening degree.

It should be noted that principles of a scheme of reducing the opening degree of the throttling component 104 are similar to principles of increasing the opening degree of the throttling component 104, and thus details thereof will be omitted here. For example, an adjustment may be performed based on the PI adjustment, the predetermined step size, the predetermined cycle, etc. Subsequent to each adjustment, a determination is made based on the above operations. A next round of adjustment is performed based on a result of the determination.

(3) The throttling component 104 is controlled to maintain the current opening degree when the current opening degree of the throttling component 104 is smaller than or equal to the second target opening degree.

It should be noted that, when the current opening degree of the throttling component 104 is smaller than or equal to the second target opening degree, the throttling component 104 is not allowed to be adjusted. In this case, since the heat dissipation capability can satisfy a heat dissipation demand, the opening degree of the throttling component 104 can be maintained.

In the embodiments, when the temperature difference is greater than the second predetermined temperature and the outlet superheat degree is greater than the target superheat degree, the opening degree of the throttling component 104 is adjusted to reduce the flow rate of the refrigerant inputted into the heat exchange component 105. In addition, the superheat degree is adjusted, which can allow more refrigerant to be used for the operation of the indoor unit. Therefore, an amount of the refrigerant consumed for the heat dissipation of the electric control component is reduced to prevent the liquid strike, ensuring the normal operation of the air-conditioning system.

At S510, the rotational speed of the fan is adjusted when the outlet superheat degree is smaller than or equal to the target superheat degree.

It should be noted that, when the temperature difference is greater than the second predetermined temperature and the outlet superheat degree is equals to the target superheat degree, the current heat dissipation capability is excessive, but the superheat degree is normal. To reduce the energy consumption of the system and maintain the current superheat degree, the rotational speed of the fan 106 may be reduced to reduce the heat dissipation capability.

In some embodiments, adjusting the rotational speed of the fan 106 comprises the following operations.
(1) A current rotational speed of the fan 106 is obtained.
(2) The rotational speed of the fan 106 is reduced when the current rotational speed is greater than a second target rotational speed.

The second target rotational speed may be a minimum rotational speed of the fan 106 or any predetermined rotational speed.

It should be noted that principles of a scheme of reducing the rotational speed of the fan 106 are similar to principles of increasing the rotational speed of the fan 106, and thus details thereof will be omitted here. For example, an adjustment may be performed based on the PI adjustment, the predetermined step size, the predetermined cycle, etc. Subsequent to each adjustment, a determination is made based on the above operations. A next round of adjustment is performed based on a result of the determination.

(3) The current rotational speed of the fan 106 is maintained when the current rotational speed is smaller than or equal to the second target rotational speed.

It should be noted that, when the rotational speed of the fan 106 is smaller than or equal to the second target rotational speed, the rotational speed of the fan 106 is not allowed to be adjusted. In this case, since the heat dissipation capability can satisfy the heat dissipation demand, the current rotational speed of the fan 106 can be maintained.

In the embodiments, when the temperature difference is greater than the second predetermined temperature and the outlet superheat degree is greater than the target superheat degree, the rotational speed of the fan 106 is appropriately reduced to reduce the energy consumption. In addition, the superheat degree is adjusted to prevent the liquid strike, ensuring the safe operation of the compressor. Also, when the rotational speed of the fan 106 cannot be adjusted, the heat dissipation capability can also meet the heat dissipation demand, and a temperature fluctuation due to a change of the air flow in the electric control box can also be avoided.

FIG. 6 is a schematic diagram showing a structure of a temperature adjustment apparatus according to an embodiment not forming part of the present invention. It should be understood that the temperature adjustment apparatus is configured to adjust the temperature of the electric control component in the electric control box in the air-conditioning system. Reference to a structure of the air-conditioning system and a method for adjusting the temperature of the electric control component in the electric control box in the air-conditioning system can be made to the above embodiments, and thus details thereof will be omitted here.

As illustrated in FIG. 6, a temperature adjustment apparatus 600 comprises: an obtaining module 601 configured to obtain a component temperature of the electric control component and an outlet superheat degree of the heat exchange component; and an adjustment module 602 configured to adjust at least one of an opening degree of the throttling component, a rotational speed of the fan, and a frequency of the compressor based on the component temperature and the outlet superheat degree, to adjust a temperature of the electric control component.

In some embodiments, the adjustment module 602 is configured to: obtain a temperature difference between the component temperature and a temperature limit in the electric control box; and adjust the at least one of the opening degree of the throttling component, the rotational speed of the fan, and the frequency of the compressor based on the temperature difference and a comparative relation between the outlet superheat degree and a target superheat degree.

In some embodiments, the adjustment module 602 is configured to: adjust the opening degree of the throttling component and/or the frequency of the compressor when the temperature difference is smaller than a first predetermined temperature and the outlet superheat degree is greater than the target superheat degree; and adjust the rotational speed of the fan and/or the frequency of the compressor when the temperature difference is smaller than the first predetermined temperature and the outlet superheat degree is smaller than or equal to the target superheat degree.

In some embodiments, the obtaining module 601 is further configured to obtain a current opening degree of the throttling component. The adjustment module 602 is configured to: increase the opening degree of the throttling component when the current opening degree of the throttling component is smaller than a first target opening degree; and decrease the frequency of the compressor when the current opening degree of the throttling component is greater than or equal to the first target opening degree.

In some embodiments, the obtaining module 601 is further configured to obtain a current rotational speed of the fan. The adjustment module 602 is configured to: increase the rotational speed of the fan when the current rotational speed is smaller than a first target rotational speed; and decrease the frequency of the compressor when the current rotational speed is greater than or equal to the first target rotational speed.

In some embodiments, the adjustment module 602 is configured to: adjust the opening degree of the throttling component and/or the frequency of the compressor when the temperature difference is greater than a second predetermined temperature and the outlet superheat degree is greater than the target superheat degree; and adjust the rotational speed of the fan and/or the frequency of the compressor when the temperature difference is greater than the second predetermined temperature and the outlet superheat degree is smaller than or equal to the target superheat degree. The first predetermined temperature is smaller than the second predetermined temperature.

In some embodiments, the obtaining module 601 is further configured to obtain a current opening degree of the throttling component. The adjustment module 602 is configured to: decrease the opening degree of the throttling component when the current opening degree of the throttling component is greater than a second target opening degree; and control the throttling component to maintain the current opening degree when the current opening degree of the throttling component is smaller than or equal to the second target opening degree.

In some embodiments, the obtaining module 601 is further configured to obtain a current rotational speed of the fan. The adjustment module 602 is configured to: reduce the rotational speed of the fan when the current rotational speed is greater than a second target rotational speed; and maintain the current rotational speed of the fan when the current rotational speed is smaller than or equal to the second target rotational speed.

In some embodiments, the adjustment module 602 is further configured to: maintain a current opening degree of the throttling component and/or maintain a current rotational speed of the fan, when the temperature difference is greater than or equal to a first predetermined temperature and smaller than or equal to a second predetermined temperature.

In some embodiments, the obtaining module 601 is further configured to: obtain an ambient pressure of an environment where the electric control box is located and an outlet ambient temperature of the heat exchange component; and determine the outlet superheat degree based on the ambient pressure and the outlet ambient temperature.

In some embodiments, the heat exchange component is configured to adjust a temperature within the electric control box through a phase change of a refrigerant.

In some embodiments, the heat exchange component is an evaporator.

In some embodiments, the evaporator has an inlet connected to an outlet pipe of a heat exchanger of an outdoor unit and an outlet connected to a return port of a compressor or an inlet of a gas-liquid separator.

It should be noted that, the obtaining module 601 according to any of the above embodiments may be a receiver when actually implemented, and may be configured to receive information transmitted by other devices or measurement units, e.g., a temperature transmitted by a temperature sensor, a pressure transmitted by a pressure sensor, and the like. The obtaining module 601 may be implemented through a communication port.

In further embodiments, the above-mentioned adjustment module 602 may be implemented in a form of software invoked by a processing element or in a form of hardware. For example, the adjustment module 602 may be implemented as a separate processing element, or may be implemented integrally in one of the chips of the above-mentioned return air temperature determination apparatus. In addition, the adjustment module 602 may also be stored in a storage module of the above-mentioned temperature adjustment apparatus 600 in a form of program codes, and is configured to be invoked by a processing element of the above-mentioned temperature adjustment apparatus 600 to execute some or all of functions of the above-mentioned adjustment module 602.

In addition, all or part of these processing elements may be integrated together or may be implemented independently. Each of these modules may be an integrated circuit having signal processing capabilities. In an implementation, actions of the above method the above modules may be accomplished by an integrated logic circuit in hardware in the processor element or by instructions in the form of software.

For example, the above modules may be one or more integrated circuits configured to implement the above-mentioned return air temperature determination method, e.g., one or more Application Specific Integrated Circuits (ASICs), one or more Digital Signal Processors (DSPs), or one or more Field Programmable Gate Arrays (FPGAs). For example, when some of the above modules is implemented in a form of a processing element invoking program codes, the processing element may be a same processor, such as a Central Processing Unit (CPU) or any other processor that can invoke the program codes. For another example, these modules may also be integrated together and implemented in a form of a system-on-chip.

In some embodiments, an electric control box is further provided. The electric control box comprises an electric control component, a heat exchange component, and a fan. As for a specific structure of the electric control box, reference can be made to relevant description of the embodiment illustrated in FIG. 2, and thus details thereof will be omitted here.

In some embodiments, at present, applications of air-conditioning systems are becoming increasingly widespread. Under considerations of cost-effectiveness and ease of engineering installation, a designed capacity of a single module per unit space is continuously increased. However, since a layout space of the electric control component is relatively limited, heat dissipation capability and heat preservation capability in cold environments of the electric control component in an electrical appliance are important factors affecting a service life of the electrical appliance.

In the related art, heat dissipation of the electric control component in the electrical appliance is generally realized using heat dissipation methods such as a fan or a heat dissipation fin, or heat preservation of the electric control component is realized through heat insulation materials or the like, realizing a temperature adjustment. This method is less costly but offers an unsatisfactory temperature adjustment capability, which leads to a limited heat dissipation capability and a limited heat preservation capability. In this case, an operation in a high-temperature environment or a low-temperature environment reduces the reliability of the electric control component, and is likely to lead to high-temperature shutdown protection of the air-conditioning system in severe cases, affecting the service life of the air-conditioning system.

In view of this, the embodiments of the present disclosure provide the temperature adjustment method. The air-conditioning system according to the embodiments of the present disclosure comprises the electric control box, the compressor, and the refrigerant pipeline. The heat exchange component, the fan, the first electric control component, and the temperature sensor are disposed in the electric control box. The refrigerant pipeline is configured to input the refrigerant outputted by the compressor or the indoor unit into the heat exchange component. The heat exchange component is configured to adjust the temperature in the electric control box based on the phase change of the refrigerant. In addition, by arranging the fan in the electric control box, the air circulation in the electric control box can be realized through the rotation of the fan, improving the temperature adjustment effect.

The heat dissipation capability and the heat preservation capability in the cold environments of the electric control component in the electric control box are important factors affecting the service life of the electric control box. Therefore, in the present disclosure, the detected temperature is collected by the temperature sensor arranged close to the first electric control component. The detected temperature can reflect the temperature in the electric control box, or the temperature of the electric control component in the electric control box. In this way, the rotational speed of the fan and/or the frequency of the compressor can be adjusted in real time based on the detected temperature to accurately adjust the temperature in the electric control box. Therefore, the effect of accurately adjusting the temperature of the electric control component can be realized to ensure that the electric control component maintains the safe operation temperature. In addition, with the above-mentioned temperature adjustment method, the temperature in the electric control box can be maintained at the suitable value, which can further avoid the damages such as the short circuit caused by the condensation of the electric control component, greatly prolonging the service life of the electric control component.

It should be noted that, a type of the air-conditioning system is not limited in the embodiments of the present disclosure. For example, the air-conditioning system is a central air conditioner, a vertical air conditioner, a wall-mounted air conditioner, or the like. In some embodiments, the above-mentioned air-conditioning system may comprise a plurality of parts of the above-mentioned air conditioner, such as the outdoor unit of the air conditioner, the indoor unit of the air conditioner, and the like. In a further embodiment, the above-mentioned air-conditioning system may also comprise a plurality of indoor units or a plurality of outdoor units. Members comprised by the above-mentioned air-conditioning system will not be exhaustively listed here.

How the solutions provided by the embodiments of the present disclosure solve the above-mentioned technical problems will be described in detail below through specific embodiments.

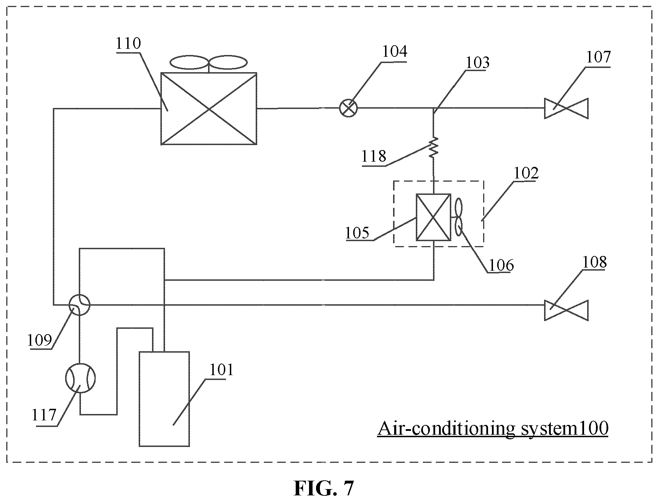

FIG. 7 is a second schematic diagram showing a structure of an air-conditioning system according to an embodiment of the present disclosure. As illustrated in FIG. 7, the air-conditioning system 100 according to the embodiment comprises the compressor 101, the electric control box 102, and the refrigerant pipeline 103.

The electric control component (not illustrated in FIG. 7) is disposed in the electric control box 102.

In an embodiment of the present disclosure, a heat exchange component 105 is further disposed in the electric control box 102. The compressor 101 or an indoor unit (not illustrated in the figures) is configured to output the refrigerant through the refrigerant pipeline 103, and input a part of the refrigerant into the heat exchange component 105 of the electric control box 102 through the branch refrigerant pipeline, such that the heat exchange component 105 exchanges heat based on the refrigerant, adjusting the temperature of the electric control component in the electric control box 102.

It should be noted that the type of the heat exchange component 105 is not particularly limited in the embodiments of the present disclosure. In some embodiments, in some scenarios, during the operation of the air-conditioning system 100, the electric control component in the electric control box 102 may generate heat. If the air-conditioning system 100 is in the high-temperature environment, the heat dissipation of the electric control component is affected, causing a high temperature of the electric control component, which affects the reliability of the electric control component and affects the service life of the air-conditioning system 100.

Therefore, the heat exchange component 105 may be provided as the cooling heat exchanger such as the evaporator, for lowering the temperature in the electric control box 102, to enable the electric control component in the electric control box 102 to operate at the normal operation temperature.

In some other scenarios, even if the electric control component releases a certain amount of heat when in operation, the temperature of the electric control component may be too low when the air-conditioning system 100 is currently in the low-temperature environment, which can also affect the reliability of the electric control component. Therefore, in this scenario, a heating device may be disposed at a return air opening or an air outlet of the cooling fan. A temperature of the electric control box can be raised through turning on the cooling fan and the heating device when a temperature of a cavity of the electric control box or the temperature of the electric control component is too low, such that the electric control component in the electric control box 102 is maintained at the normal operation temperature. A specific adjustment method is not particularly limited in the embodiments of the present disclosure.

In further embodiments, as illustrated in FIG. 7, the air-conditioning system 100 may further comprise, but is not limited to, at least one of the throttling component 104 having an adjustable opening degree, the liquid-side stop valve 107, the gas-side stop valve 108, the reversing valve 109, the heat exchanger 110, a gas-liquid separation valve 117, and a capillary tube 118.

In an embodiment, a flow rate of the refrigerant inputted into the heat exchange component 105 may be adjusted through adjusting the opening degree of the throttling component 104. Further, with the capillary tube 118, the flow rate of the refrigerant inputted into the heat exchange component 105 can be prevented from being too large.

It should be understood that, the reversing valve 109 may be a two-way reversing valve, a three-way reversing valve, a four-way reversing valve, or the like. The embodiments of the present disclosure are not particularly limited to any of these examples.

Temperature adjustment principles of the embodiments of the present disclosure will be described below with reference to FIG. 7. As illustrated in FIG. 7, the compressor 101, the gas-liquid separation valve 117, the reversing valve 109, the heat exchanger 110, (the throttling component 104, the capillary tube 118), and the electric control box 102 are sequentially connected by the refrigerant pipeline 103 to form a closed circuit. The electric control box 102 is connected between the heat exchanger 110 and the compressor 101.

Taking a heat dissipation process as an example, in the refrigeration process of the air-conditioning system 100, the refrigerant discharged from the compressor 101 enters the heat exchanger 110 through the reversing valve 109, the gas-liquid separation valve 117, and the refrigerant pipeline 103 to undergo condensation. The temperature of the refrigerant outputted from the heat exchanger 110 is lowered by the condensation.

In some embodiments, the refrigerant having the temperature lowered enters the heat exchange component 105 in the electric control box 102 through the refrigerant pipeline 103.

Accordingly, in this case, the heat exchange component 105 can perform the heat exchange based on the refrigerant to lower the temperature in the electric control box 102, for taking away the heat of the electric control component. Then, the refrigerant outputted from the heat exchange component 105 is inputted into the compressor 101 through the refrigerant pipeline 103.

Accordingly, the compressor 101 performs the compression based on the inputted refrigerant. The compressed refrigerant is circulated in the same manner. Therefore, one refrigerant circulation process of the refrigeration process is completed.

It should be noted that, each of the liquid-side stop valve 107 and the gas-side stop valve 108 is connected to the indoor unit (not illustrated in the figures). In the embodiments of the present disclosure, a part of the refrigerant outputted from the compressor 101 is inputted into the heat exchange component 105 in the electric control box 102 through the branch refrigerant pipeline for heat exchange, while another part of the refrigerant outputted from the compressor 101 enters, via the liquid-side stop valve 107, the indoor unit through another branch refrigerant pipeline for heat exchange. Then, the refrigerant subjected to the heat exchange is outputted from the gas-side stop valve 108, and is returned to the compressor 101 through the refrigerant pipeline. In this way, one refrigerant circulation process of the refrigeration process is completed.

With further reference to FIG. 7, still taking the heat dissipation process as an example, in a heating process of the air-conditioning system 100, the refrigerant is inputted into the indoor unit (not illustrated in the figures) through the liquid-side stop valve 107. A part of the refrigerant is inputted into the heat exchange component 105 in the electric control box 102 through the branch refrigerant pipeline.

Accordingly, the heat exchange is performed by the heat exchange component 105 based on the inputted refrigerant, and the refrigerant subjected to the heat exchange is inputted by the heat exchange component 105 into the compressor 101.

In this process, another part of the refrigerant outputted from the liquid-side stop valve 107 enters the heat exchanger 110 through another branch refrigerant pipeline for heat exchange. The refrigerant obtained subsequent to the heat exchange is inputted into the compressor 101 through the reversing valve 109.

Accordingly, a compression process is performed by the compressor 101 based on the inputted refrigerant. The compressed refrigerant is returned to the indoor unit through the gas-liquid separation valve 117, the reversing valve 109, and the gas-side stop valve 108.

In some embodiments, the indoor unit performs heat exchange based on the inputted refrigerant, and output the refrigerant subjected to the heat exchange from the gas-side stop valve 108. The refrigerant is circulated in the same manner. Therefore, one refrigerant circulation process of the refrigeration process is completed.

It should be noted that principles of performing the heat preservation on the electric control component in the electric control box are similar to those described above, and thus details thereof will be omitted here.

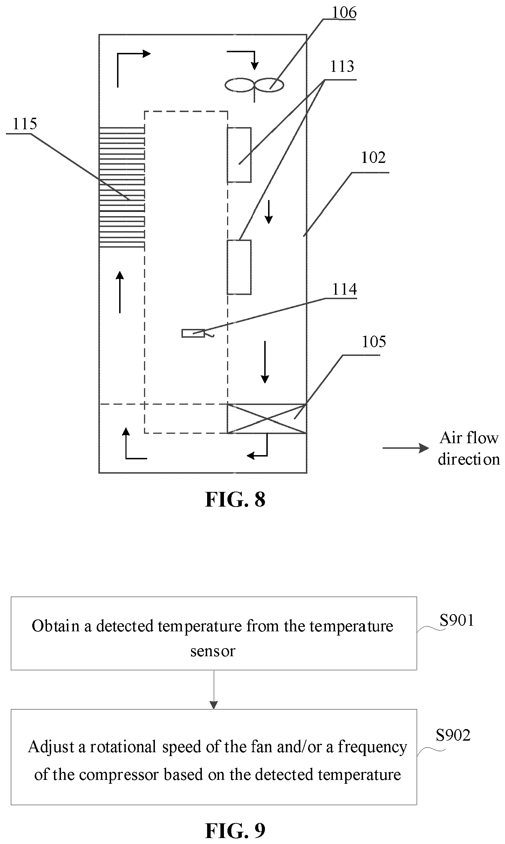

In some embodiments, as illustrated in FIG. 7, the fan 106 that is rotatable is further disposed in the electric control box 102, and configured to form an air circulation in the electric control box 102. An arrangement of each element in the electric control box 102 and principles of the temperature adjustment will be described below with reference to FIG. 8.

FIG. 8 is a second schematic diagram showing a structure of an electric control box according to an embodiment of the present disclosure. As illustrated in FIG. 8, the electric control component 113 is disposed in the electric control box 102. The electric control component 113 may be any type of component. The embodiments of the present disclosure are not limited in this regard. For example, the electric control component 113 may be an electric control motherboard, an electric control module, or the like.

It should be understood that, the fan 106 is illustrated as an example as, but is not limited to, being disposed at an end of the electric control box 102 opposite to an end at which the heat exchange component 105 is disposed.

In an embodiment of the present disclosure, after the refrigerant is inputted into the heat exchange component 105, the heat exchange component 105 performs the heat exchange based on the refrigerant to increase or decrease an air temperature in the electric control box 102. Accordingly, during the rotation of the fan 106, the air in the electric control box 102 can be driven to flow, which therefore improves the heat dissipation effect or the temperature rise effect. In addition, since the electric control component 113 is disposed in the electric control box 102, the air circulation can be formed in the electric control box 102 by the fan 106, which can improve the heat dissipation efficiency or the temperature rise efficiency in some embodiments, improving the temperature adjustment effect. Further, since the electric control component 113 is disposed in the electric control box 102, and the electric control box 102 is a relatively closed space, the amount of condensed water generated in the vicinity of the electric control component 113 can be reduced, which can ensure the reliability of the electric control component 113 in some embodiments. Furthermore, the independent closed space can be formed by the electric control box 102 to further prevent the entrance of dust and organisms, which improves the reliability and the quality of the product.

It should be understood that, the air flow direction in the electric control box 102 depends on a rotation direction of the fan and is also not particularly limited in the embodiments of the present disclosure. For example, the air flow direction in the electric control box 102 may be the clockwise direction or the counterclockwise direction. It should be understood that the air flow direction in FIG. 8 is illustrated as the clockwise direction as an example, but is not limited to such an example.

In some embodiments, as an example, cooling and heat dissipation are performed by the heat exchanger 105. In the refrigeration operation or the heating operation of the air-conditioning system 100, a part of a liquid refrigerant passes through the capillary tube 118, and then enters the heat exchanger 105 for evaporation and heat absorption. The circulated air in the electric control box 102 is undergoes evaporation and cooling through the heat exchanger 105 to take away heat of the electric control component 113 and then flows back to the heat exchange component 105. In this way, one complete air circulation is formed.

In some embodiments, the electric control box 102 may be further provided with, but is not limited to, one or more of the temperature sensor 114, the heat dissipation fin 115, and the like in the electric control box 102.

Both the temperature sensor 114 and the heat dissipation fin 115 may be arranged close to a module that generates a maximum amount of heat in the electric control box. The module that generates the maximum amount of heat may be the electric control component 113 or the like. In some embodiments, the temperature sensor 114 may be configured to collect a temperature of the electric control component 113. Accordingly, the heat dissipation fin 115 is configured to dissipate heat from the electric control component 113.

FIG. 9 is a second flowchart illustrating a temperature adjustment method according to an embodiment of the present disclosure. It should be understood that, in the above-mentioned air-conditioning system, the execution body during the temperature adjustment may be the main control module of the outdoor unit of the air-conditioning system or the main control module of the indoor unit of the air-conditioning system. The embodiments of the present disclosure are not particularly limited to any of these examples.

In an embodiment, as illustrated in FIG. 9, the temperature adjustment method comprises following operations at blocks 5901 to S902.

At S901, a detected temperature is obtained from the temperature sensor.

It should be noted that the detected temperature may be a temperature at any designated position in the electric control box 102, e.g., a temperature of the first electric control component. The first electric control component may generate the maximum amount of heat in the electric control box. For example, the first electric control component may be an electric control module, an electric control motherboard, or the like.

In an embodiment of the present disclosure, the detected temperature may be collected by the temperature sensor 114 disposed in the electric control box 102. The collected detected temperature may be reported to the execution body of the embodiments of the present disclosure synchronously.

It should be understood that, a method for collecting the detected temperature is not particularly limited in the embodiments of the present disclosure. For example, the temperature sensor 114 may be configured to collect and report the detected temperature in real time. In a further embodiment, the temperature sensor 114 may be configured to periodically collect the detected temperature, and periodically report the detected temperature.

In a further embodiment, the temperature sensor 114 may be configured to collect the detected temperature in real time or periodically, make a determination of the collected detected temperature, and report the collected detected temperature when the collected detected temperature obtained at a time point satisfies a certain condition. In some embodiments, when the collected detected temperature obtained at the time point is higher than the first limit value or lower than the second limit value, the collected detected temperature may be reported since the electric control component may be affected by an excessively high temperature or an excessively low temperature. By making the determination of the collected temperature in some embodiments, the electric control component can be treated timely under a condition of the high temperature or the low temperature, to prevent the electric control component from being damaged or reliability of the electric control component from being compromised. In addition, frequent reporting of the collected detected temperature can be avoided to reduce a data processing load.

It should be understood that specific magnitudes of the first limit value and the second limit value are not particularly limited in the embodiments of the present disclosure.

At 5902, a rotational speed of the fan and/or a frequency of the compressor is adjusted based on the detected temperature.

As an example, the heat exchange component 105 is the cooling heat exchanger. On the one hand, when the detected temperature is greater than or equal to a first predetermined value, a temperature of the electric control component may be high, which is likely to poses a certain risk of damage to the electric control component. In the embodiments of the present disclosure, the heat dissipation may be performed on the electric control component through increasing the rotational speed of the fan 106 and/or decreasing the frequency of the compressor 101.

On the other hand, when the detected temperature is smaller than or equal to the second predetermined value, the temperature of the electric control component may be low. In this case, the heat dissipation capability is excessive, which wastes part of a cooling output. Therefore, in the embodiments of the present disclosure, the heat preservation of the electric control component can be implemented through reducing the rotational speed of the fan 106.

It should be noted that, for the cooling heat exchanger, by adjusting the rotational speed of the fan 106, the air flow speed inside the electric control box 102 can be adjusted. In addition, the temperature adjustment efficiency in the electric control box 102 increases as the rotational speed of the fan 106 increases. Accordingly, the temperature adjustment efficiency can be reduced through reducing the rotational speed of the fan 106.

The heat generation of the electric control component may be adjusted through adjusting the frequency of the compressor 101. In addition, as the frequency of the compressor 101 increases, the load of the electric control component increases, and the heat generation of the electric control component also increases. Accordingly, the load of the electric control component can be reduced through decreasing the frequency of the compressor 101, reducing the heat generation.

It should be understood that, when the detected temperature is low, the heat preservation of the electric control component in the electric control box can be realized by an electric heating device. A specific heat preservation method will not be described in detail here.

In the embodiments of the present disclosure, the temperature adjustment method is used for adjusting the temperature of the electric control component in the electric control box in the air-conditioning system. The air-conditioning system comprises an electric control box, a compressor, and a refrigerant pipeline. A heat exchange component, a fan, a first electric control component, and a temperature sensor are disposed in the electric control box. The refrigerant pipeline is configured to input a refrigerant outputted by the compressor or an indoor unit into the heat exchange component. The temperature in the electric control box is adjusted by the heat exchange component in the electric control box through the phase change of the refrigerant. In addition, by arranging the fan in the electric control box, the air circulation in the electric control box can be realized through the rotation of the fan, improving the temperature adjustment effect.

The heat dissipation capability and the heat preservation capability in the cold environments of the electric control component in the electric control box are important factors affecting the service life of the electric control box. Therefore, in the present disclosure, the detected temperature is collected by the temperature sensor arranged close to the first electric control component. The detected temperature can reflect the temperature in the electric control box, or the temperature of the electric control component in the electric control box. In this way, the rotational speed of the fan and/or the frequency of the compressor can be adjusted in real time based on the detected temperature, to adjust the rotational speed of the fan and/or the refrigerant flow rate flowing through the heat exchange component (i.e., the heat exchange efficiency), accurately adjusting the temperature in the electric control box. Therefore, the effect of accurately adjusting the temperature of the electric control component can be realized to ensure that the electric control component maintains the safe operation temperature. In addition, with the above-mentioned temperature adjustment method, the temperature in the electric control box can be maintained at the suitable value, which can further avoid the damages such as the short circuit caused by the condensation of the electric control component, greatly prolonging the service life of the electric control component.

In addition, the environmental temperature around the electric control component is likely to drop below the dew point temperature of air when the temperature of the refrigerant is low. In severe cases, the large amount of condensed water is generated, causing the short circuits and the damages to the electric control.

In further embodiments, the above operation at S902 comprises the following operations.

At S9021, a temperature difference between the detected temperature and a temperature limit of the electric control box is obtained.

At S9022, the rotational speed of the fan and/or the frequency of the compressor is adjusted based on the temperature difference and a current rotational speed of the fan.

It should be noted that the value of the temperature limit varies depending on scenarios. On the one hand, the temperature limit may be the maximum temperature allowing the normal operation of the electric control component in the electric control box. When the detected temperature approaches or exceeds the maximum temperature, the reliability of the electric control component is degraded, or the electric control component can even be damaged. In this case, the heat dissipation needs to be performed on the electric control component in the electric control box. Correspondingly, the temperature difference is a calculation result obtained through subtracting the detected temperature from the maximum temperature.

On the other hand, the temperature limit may be the minimum temperature allowing the normal operation of the electric control component in the electric control box. When the detected temperature approaches or is lower than the minimum temperature, the reliability of the electric control component is degraded, or the electric control component can even be damaged. In this case, the heat preservation needs to be performed on the electric control component in the electric control box.

It should be understood that, a specific value of the temperature limit in each scenario is not particularly limited in the embodiments of the present disclosure. In some embodiments, the maximum temperature (i.e., the temperature limit) may be set to a temperature value such as 80°C, 90°C, 100°C, and 120°C. The minimum temperature (i.e., the temperature limit) may be set to a temperature value such as -40°C, -50°C, -60°C, and -70°C. Correspondingly, the temperature difference is a calculation result obtained through subtracting the maximum temperature from the detected temperature.

In some embodiments, since a magnitude of the rotational speed of the fan 106 is limited, the current rotational speed of the fan 106 needs to be taken into account during adjustment. In some embodiments, when the current rotational speed of the fan 106 is relatively high, further increasing the rotational speed of the fan 106 is likely to be ineffective since the rotational speed of the fan 106 may have reached the maximum rotational speed on the one hand. On the other hand, the excessively high rotational speed of the fan 106 can also cause a certain degree of heat generation, which is likely to affect the temperature of the electric control box 102 considering that the fan 106 is inside the electric control box 102.

In view of this, in an embodiment of the present disclosure, whether to adjust the rotational speed of the fan 106 or the frequency of the compressor 101 may be determined based on the current rotational speed of the fan 106 to realize more refined control, improving the temperature adjustment effect.

The temperature adjustment method according to the embodiments of the present disclosure will be described in detail below with reference to FIG. 4 to FIG. 6 and by taking the heat dissipation of the electric control component as an example. It should be understood that an implementation of the heat preservation of the electric control component is similar to that of the heat dissipation of the electric control component, and thus details thereof will be omitted here.

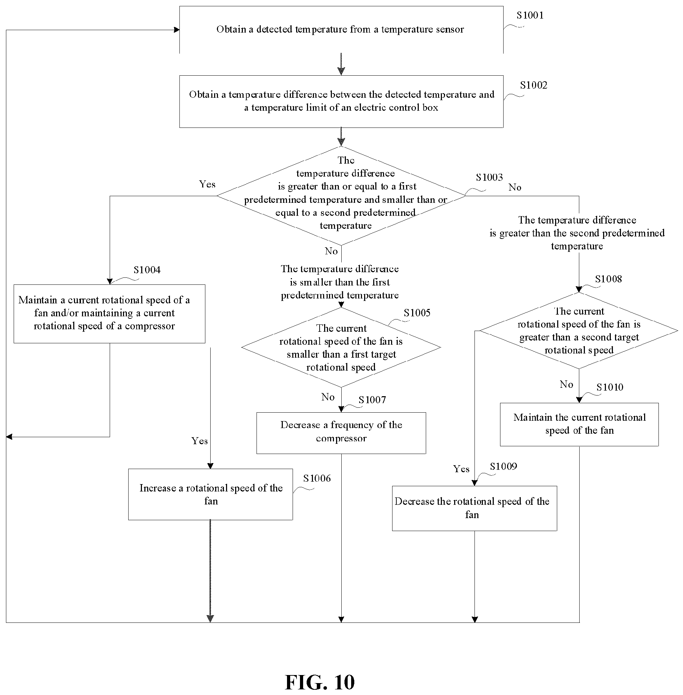

FIG. 10 is a third flowchart illustrating a temperature adjustment method according to an embodiment of the present disclosure. In an embodiment, as illustrated in FIG. 10, a process of the temperature adjustment comprises following operations at blocks S1001 to S1010.

At S1001, a detected temperature is obtained from the temperature sensor.

At S1002, a temperature difference between the detected temperature and a temperature limit of the electric control box is obtained.

It should be noted that, implementation and principle of operations at S1001 and S1002 are similar to those of operations at S901 and S902 in the embodiment illustrated in FIG. 9. Reference can be made to the above embodiment. Details thereof will be omitted here.

At S1003, it is determined whether the temperature difference is greater than or equal to a first predetermined temperature and smaller than or equal to a second predetermined temperature.

The first predetermined temperature is smaller than the second predetermined temperature. Specific values of the first predetermined temperature and the second predetermined temperature are not particularly limited in the embodiments of the present disclosure. In some embodiments, the first predetermined temperature may be any value ranging from 0°C to 5°C, e.g., 0°C, 1°C, 3°C, or 5°C, while the second predetermined temperature may be any value ranging from 10°C to 30°C, e.g., 10°C, 15°C, 20°C, 25°C, or 30°C.

At S1004, a current rotational speed of the fan and/or a current frequency of the compressor is maintained, when the temperature difference is greater than or equal to a first predetermined temperature and smaller than or equal to a second predetermined temperature.

As an example, the temperature limit is the maximum temperature. When the temperature difference is smaller than the first predetermined temperature, the detected temperature is close to the temperature limit. In this case, the electric control component is at a high risk of damage and has an unsatisfactory heat dissipation capability. When the temperature difference is greater than or equal to the first predetermined temperature and smaller than or equal to the second predetermined temperature, the electric control component is at a normal temperature and has a normal heat dissipation capability. When the temperature difference is greater than the second predetermined temperature, the electric control component is at the normal temperature and has an excessive heat dissipation capability currently.

Therefore, a current operation condition may be maintained when the temperature difference is greater than or equal to the first predetermined temperature and smaller than or equal to the second predetermined temperature, which comprises, but is not limited to, one or more of: (1) maintaining the current rotational speed of the fan 106 to maintain the air flow in the electric control box; and (2) maintaining an operation frequency of an energy-consuming component such as the compressor 101, to prevent a high-temperature failure caused by an increase in heat generation of the electric control component due to a change in the operation frequency.

At S1005, it is determined whether the current rotational speed of the fan is smaller than a first target rotational speed when the temperature difference is smaller than a first predetermined temperature.

The first target rotational speed may be the maximum rotational speed of the fan 106, or may be any predetermined rotational speed.

At S1006, the rotational speed of the fan is increased when the current rotational speed of the fan is smaller than the first target rotational speed.

It should be noted that, when the current rotational speed of the fan 106 is smaller than the first target rotational speed, the rotational speed of the fan 106 is allowed to be further increased. Therefore, the rotational speed of the fan 106 is directly increased.

A method for increasing the rotational speed of the fan 106 is not particularly limited in the embodiments of the present disclosure. For example, on the one hand, the rotational speed of the fan 106 may be adjusted through the linear PI adjustment. The deviation of the system can be proportionally reflected through the PI adjustment. Once the deviation occurs in the system, the adjustment effect is immediately generated by the proportional adjustment to reduce the deviation.

On the other hand, a constant adjustment step size may be predetermined. The rotational speed of the fan may be adjusted based on the constant adjustment step size. In some embodiments, as an example, the speed level of the fan 106 ranges from 1 to n. The adjustment step size may be set to one or more speed levels. That is, the rotational speed of the fan 106 is increased by one or more speed levels each time.

In a further embodiment, the rotational speed of the fan 106 may be adjusted at a predetermined cycle. The length of the predetermined cycle is not limited in the embodiments of the present disclosure. For example, the predetermined cycle may be set to any value ranging from 0 second to 120 seconds, e.g., 0 second (i.e., the rotational speed of the fan 106 is continuously adjusted), 20 seconds, 50 seconds, 60 seconds, 100 seconds, and 120 seconds.

It should be understood that, subsequent to each adjustment, the temperature difference may be obtained in operations at S1001 and S1002, and the temperature adjustment is performed in accordance with the following methods.
(1) When "the temperature difference is smaller than the first predetermined temperature and the current rotational speed of the fan is smaller than the first target rotational speed", the rotational speed of the fan 106 is continued to be adjusted based on the predetermined cycle.
(2) When "the temperature difference is greater than or equal to the first predetermined temperature", the current heat dissipation capability is in a normal condition, and adjustment of the speed level of the fan 106 may be stopped.
(3) When "the temperature difference is smaller than the first predetermined temperature, and the current rotational speed of the fan is greater than or equal to the first target rotational speed", the rotational speed of the fan 106 is not allowed to be further increased, and the heat dissipation effect can be achieved through adjusting the frequency of the compressor in accordance with the operation at S1007 in some embodiments.

At S1007, the frequency of the compressor is decreased when the current rotational speed is greater than or equal to the first target rotational speed.

It should be understood that, when the frequency of the compressor 101 is reduced, the frequency of the compressor 101 may be adjusted based on PI adjustment or the predetermined step size. In addition, subsequent to each adjustment, the temperature difference may be obtained through operations at S1001 and S1002, and the temperature adjustment is performed in accordance with the following manners.
(1) When "the temperature difference is smaller than the first predetermined temperature", the frequency of the compressor 101 is continued to be adjusted based on the predetermined cycle.
(2) When "the temperature difference is greater than or equal to the first predetermined temperature", the current heat dissipation capability is in a normal condition, and adjustment of the frequency of the compressor 101 may be stopped.

At S1008, it is determined whether the current rotational speed is greater than a second target rotational speed when the temperature difference is greater than a second predetermined temperature.

At S1009, the rotational speed of the fan is reduced when the current rotational speed is greater than the second target rotational speed.

At S1010, the current rotational speed of the fan is maintained when the current rotational speed is smaller than or equal to the second target rotational speed.

The second target rotational speed may be the minimum rotational speed of the fan 106 or any predetermined rotational speed.

It should be noted that, when the temperature difference is greater than the second predetermined temperature, the current heat dissipation capability is excessive. Therefore, the rotational speed of the fan 106 may be reduced to reduce the energy consumption of the system.

It should be understood that, when the current rotational speed of the fan 106 is greater than the second target rotational speed, the rotational speed of the fan 106 is allowed to be further decreased. In this case, the rotational speed of the fan 106 is directly decreased.

A method for reducing t is similar to the method for increasing the rotational speed of the fan 106. For example, the rotational speed of the fan 106 may be reduced based on the PI adjustment or the predetermined step size. Subsequent to each adjustment, a determination may be made based on the above operations. A next round of adjustment is performed based on a result of the determination.

In an embodiment, subsequent to each adjustment, the temperature difference may be obtained through operations at S1001 and S1002, and the temperature adjustment is performed in accordance with the following methods.
(1) When "the temperature difference is greater than the second predetermined temperature and the rotational speed of the fan 106 is greater than the second target rotational speed", the rotational speed of the fan 106 is continued to be reduced based on the predetermined cycle.
(2) When "the temperature difference is smaller than or equal to the second predetermined temperature", the current heat dissipation capability is in a normal condition, and adjustment of the rotational speed of the fan 106 may be stopped.
(3) When "the temperature difference is greater than the second predetermined temperature and the rotational speed of the fan 106 is smaller than or equal to the second target rotational speed", the current rotational speed of the fan 106 cannot be adjusted. However, since the compressor 101 is also used to realize the air conditioning of the indoor unit, decreasing the frequency of the compressor 101 is likely to affect the normal refrigeration process or the normal heating process of the indoor unit, which affects the user experience. Therefore, the compressor 101 is controlled to maintain a current frequency in this case.

In a further embodiment, when the rotational speed of the fan 106 cannot be adjusted but the temperature difference is still greater than the second predetermined temperature, if power of the compressor 101 was reduced previously to dissipate heat from the electric control component, the power of the compressor 101 may be appropriately increased in this scenario to restore the normal operation of the air-conditioning system. For example, the power of the compressor 101 may be adjusted to a power value before the power is reduced. In this way, the normal operation of the air-conditioning system can be ensured as much as possible while realizing the heat dissipation of the electric control component, improving the user experience.

In the embodiments of the present disclosure, the fan and/or the compressor is adjusted based on a real-time temperature in the electric control box. Therefore, the temperature in the electric control box is adjusted to provide an operation environment at a suitable temperature for the electric control component, which avoids the situation where the reliability of the electric control component is reduced or even damages to the electric control component are caused due to the supercooling or the overheating of the electric control component.

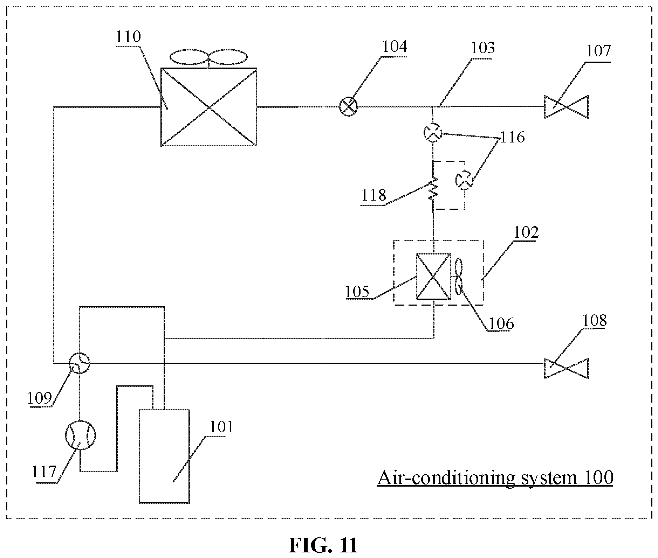

FIG. 11 is a third schematic diagram showing a structure of an air-conditioning system according to an embodiment of the present disclosure. As illustrated in FIG. 11, the air-conditioning system further comprises a throttling component 116 disposed at the refrigerant pipeline. The throttling component 116 is configured to adjust a flow rate of a refrigerant inputted into the heat exchange component.

The throttling component 116 and the capillary tube 118 may be connected in series or in parallel.

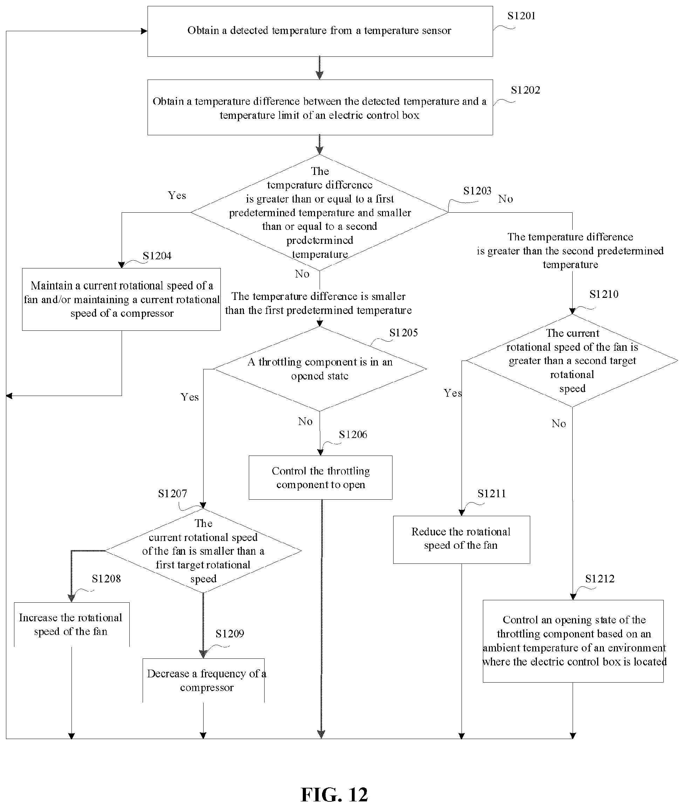

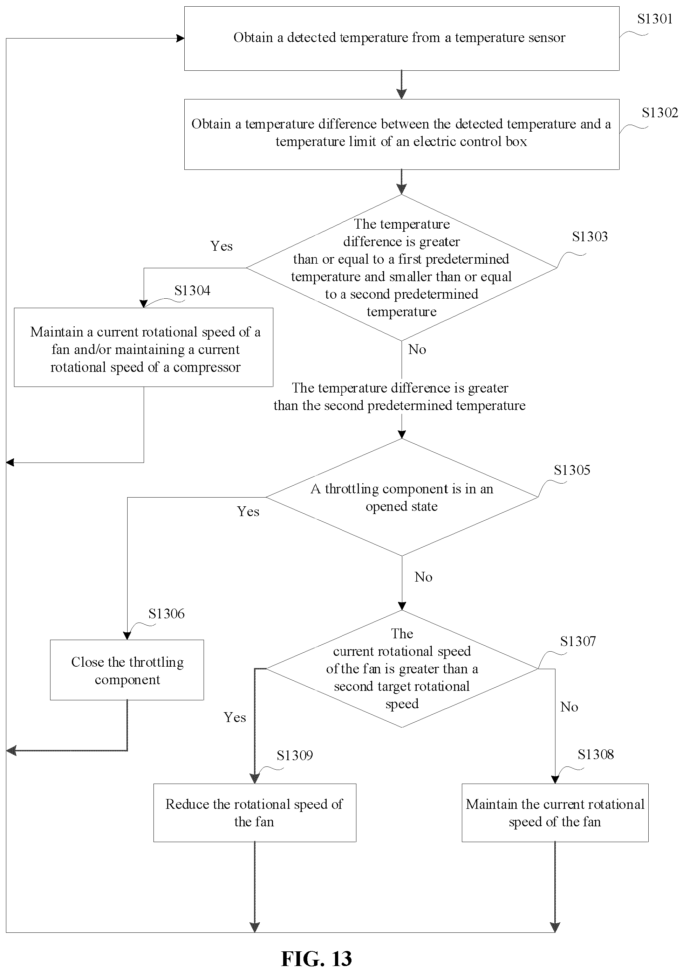

The temperature adjustment methods corresponding to the above two arrangements of the throttling component 116 will be described in detail below with reference to FIG. 12 and FIG. 13, respectively.

FIG. 12 is a fourth flowchart illustrating a temperature adjustment method according to an embodiment of the present disclosure. It should be understood that, FIG. 12 illustrates the temperature adjustment method corresponding to a case where the throttling component 116 and the capillary tube 118 are connected in series. As illustrated in FIG. 12, a process of the temperature adjustment comprises following operations at blocks S1201 to S1212.

At S1201, a detected temperature is obtained from the temperature sensor.

At S1202, a temperature difference between the detected temperature and a temperature limit of the electric control box is obtained.

At S1203, it is determined whether the temperature difference is greater than or equal to a first predetermined temperature and smaller than or equal to a second predetermined temperature.

At S1204, a current rotational speed of the fan and/or a current frequency of the compressor is maintained, when the temperature difference is greater than or equal to a first predetermined temperature and smaller than or equal to a second predetermined temperature.

It should be noted that, implementation principles and advantageous effects of operations at S1201 and S1204 are similar to those of operations at S1001 and S1004 in the embodiment illustrated in FIG. 10. Reference can be made to the above embodiment. Details thereof will be omitted here.

At S1205, whether the throttling component is in an opened state is determined when the temperature difference is smaller than the first predetermined temperature.

At S1206, the throttling component is controlled to open when the throttling component is in a closed state.

It should be noted that, when the temperature difference is smaller than the first predetermined temperature, the detected temperature is close to the temperature limit. In this case, the electric control component is at a high of damage and has an unsatisfactory heat dissipation capability. However, when the throttling component 116 is in the closed state, the refrigerant cannot enter the heat exchange component 105. In this case, temperature reduction based on the refrigerant cannot be realized.

In view of this, when the temperature difference is smaller than the first predetermined temperature, and the throttling component 116 is in the closed state, the throttling component 116 is opened, to cause the refrigerant to enter the heat exchange component 105. Therefore, the temperature reduction is realized based on the refrigerant.

It should be understood that, subsequent to that the throttling component 116 is opened, the temperature difference may be obtained through operations at S1201 and S1202, and the temperature adjustment is performed in accordance with the following methods.
(1) When the temperature difference is greater than or equal to the first predetermined temperature, the current heat dissipation capability is sufficient. In this case, the throttling component 116 may be maintained in the opened state.
(2) When the temperature difference is still smaller than the second predetermined temperature, the heat dissipation capability when the throttling component 116 is opened is still insufficient, and thus the electric control component is still in a high temperature environment. In this case, heat dissipation can be achieved in some embodiments through adjusting the rotational speed of the fan 106 and/or adjusting the frequency of the compressor 101 in accordance with the method of the following operations at S607 to 5612.

It should be noted that, since it takes a certain amount of time to dissipate heat through the refrigerant after the throttling component 116 is opened, the detected temperature may be collected by the temperature sensor subsequent to that the throttling component 116 is opened for a predetermined time length. The predetermined time length is not particularly limited in the embodiments of the present disclosure.

At S1207, when the throttling component is currently in the opened state, it is determined whether the current rotational speed of the fan is smaller than the first target rotational speed.

At S1208, the rotational speed of the fan is increased when the rotational speed of the fan is smaller than a first target rotational speed.

At S1209, the frequency of the compressor is decreased when the rotational speed of the fan is greater than or equal to the first target rotational speed.

It should be noted that, implementations of adjusting the rotational speed of the fan 106 in operations at S1207 and S1209 and implementations of adjusting the frequency of the compressor 1401 are similar to those of operations at S1005 and S1007 in the embodiment illustrated in FIG. 10. Reference can be made to the above embodiment. Details thereof will be omitted here.

At S1210, it is determined whether the current rotational speed of the fan is greater than a second target rotational speed when the temperature difference is greater than a second predetermined temperature.

At S1211, the rotational speed of the fan is reduced when the current rotational speed of the fan is greater than a second target rotational speed.

When the temperature difference is greater than the second predetermined temperature, the current heat dissipation capability is excessive. Therefore, the rotational speed of the fan 106 may be reduced to reduce the energy consumption of the system.

It should be understood that, when the current rotational speed of the fan 106 is greater than the second target rotational speed, the rotational speed of the fan 106 is allowed to be further decreased. In this case, the rotational speed of the fan 106 may be directly decreased.

It should be noted that, schemes of reducing the rotational speed of the fan 106 in operations at S1210 and S1211 are similar to those of operations at S1008 and S1009 in the embodiment illustrated in FIG. 10. Reference can be made to the above embodiment. Details thereof will be omitted here.

At S1212, an opening state of the throttling component is controlled based on an ambient temperature of an environment where the electric control box is located, when the rotational speed of the fan is smaller than or equal to the second target rotational speed.

The ambient temperature may be a dry bulb temperature.

It should be understood that, when the rotational speed of the fan 106 is smaller than or equal to the second target rotational speed, the rotational speed of the fan 106 is not allowed to be further reduced. However, in this case, the temperature difference is greater than the second predetermined temperature, which means that the current heat dissipation capability is still excessive. Since the compressor 101 is also used to realize the air conditioning of the indoor unit, decreasing the frequency of the compressor 101 is likely to affect the normal refrigeration process or the normal heating process of the indoor unit, which affects the user experience. In view of this, as a preferred embodiment, the throttling component 116 may be preferentially adjusted to ensure the normal operation of the air-conditioning system as much as possible.

In an embodiment, the operation at S1212 may be implemented through the following operations.

At S12121, the throttling component is closed when the ambient temperature is smaller than or equal to a predetermined ambient temperature.

At S12122, the throttling component is opened when the ambient temperature is greater than the predetermined ambient temperature.

It should be noted that, a specific value of the predetermined ambient temperature is not particularly limited in the embodiments of the present disclosure. In a further embodiment, the predetermined ambient temperature may be a current temperature in the electric control box.

On the one hand, when the ambient temperature is smaller than or equal to the predetermined ambient temperature, an outside of the electric control box 102 is at a relatively low temperature. In this case, even if heat is not dissipated by the refrigerant, the detected temperature from the temperature sensor does not rise any more. Therefore, closing the throttling component has a small impact on the temperature in the electric control box and can also save the amount of refrigerant used in the heat dissipation process.

On the other hand, when the ambient temperature is greater than the predetermined ambient temperature, the outside of the electric control box 102 is at a relatively high temperature. Therefore, the throttling component 116 needs to be opened to prevent the detected temperature from rising, maintaining a satisfactory heat dissipation effect.

FIG. 13 is a fifth flowchart illustrating a temperature adjustment method according to an embodiment of the present disclosure. It should be understood that, FIG. 13 illustrates the temperature adjustment method corresponding to a case where the throttling component 116 and the capillary tube 118 are connected in parallel. In an embodiment, as illustrated in FIG. 13, a process of the temperature adjustment comprises following operations at blocks S1301 to S1309.

At S1301, a detected temperature is obtained from the temperature sensor.

At S1302, a temperature difference between the detected temperature and a temperature limit of the electric control box is obtained.

At S1303, it is determined whether the current temperature is smaller than a first predetermined temperature and greater than a second predetermined temperature.

At S1304, a current rotational speed of the fan and/or a current frequency of the compressor is maintained, when the temperature difference is greater than or equal to the first predetermined temperature and smaller than or equal to the second predetermined temperature.

It should be noted that, the implementation principles and the advantageous effects of operations at S1301 and S1304 are similar to those of operations at S1001 and S1004 in the embodiment illustrated in FIG. 10. Reference can be made to the above embodiment. Details thereof will be omitted here.

In addition, the temperature adjustment method applied when the temperature difference is smaller than the first predetermined temperature is similar to operations at S1205 to S1209 in the embodiment illustrated in FIG. 12. Reference can be made to the above embodiment. Details thereof will also be omitted here.

At S1305, it is determined whether the throttling component is in an opened state is determined when the temperature difference is greater than a second predetermined temperature.

At S1306, the throttling component is closed when the throttling component is in the opened state.

It should be noted that, when the temperature difference is greater than the second predetermined temperature, the current heat dissipation capability is excessive. Therefore, the throttling component 116 may be closed to reduce consumption of the refrigerant.

In further embodiments, subsequent to that the throttling component 116 is closed, a determination may be made on the detected temperature in some embodiments in accordance with the operations at S1201 to S1209. Reference can be made to the above embodiments for the specific determination method, and thus details thereof will be omitted here.

At S1307, when the throttling component is in a closed state, it is determined whether the current rotational speed of the fan is greater than a second target rotational speed.

At S1308, the current rotational speed of the fan is maintained when the current rotational speed of the fan is smaller than or equal to the second target rotational speed.

At S1309, the rotational speed of the fan is reduced when the current rotational speed of the fan is greater than the second target rotational speed.

Accordingly, when the temperature difference is greater than the second predetermined temperature, and the throttling component is currently in the closed state, the current heat dissipation capability is excessive. Therefore, the rotational speed of the fan may be reduced to reduce the energy consumption of the air-conditioning system. It should be noted that, reference can be made to the above embodiments for the specific scheme of reducing the rotational speed of the fan 106, and thus details thereof will be omitted here.

In further embodiments, subsequent to that the rotational speed is reduced each time, a determination may be made on the detected temperature of the temperature sensor in some embodiments in accordance with the operations at S1201 to S1209. Reference can be made to the above embodiments for the specific determination method, and thus details thereof will be omitted here.

In the embodiments of the present disclosure, when the temperature difference is greater than the second predetermined temperature, the throttling component and the fan are adjusted separately, which can lower an amount of the refrigerant consumed by the air-conditioning system and reduce the energy consumption.

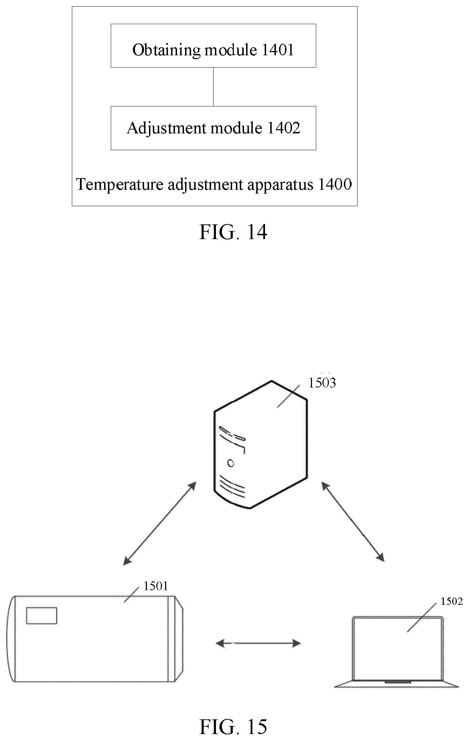

FIG. 14 is a schematic diagram showing a structure of a temperature adjustment apparatus according to an embodiment of the present disclosure. It should be understood that the temperature adjustment apparatus according to the embodiments of the present disclosure is configured to adjust a temperature in an electric control box in an air-conditioning system. Reference can be made to the above embodiments for the structure of the air-conditioning system and the adjustment method, and thus details thereof will be omitted here.

As illustrated in FIG. 14, the temperature adjustment apparatus 1400 comprises: an obtaining module 1401 configured to obtain a detected temperature from the temperature sensor; and an adjustment module 1402 configured to adjust a rotational speed of the fan and/or a frequency of the compressor based on the detected temperature.

In some embodiments, the obtaining module 1401 is further configured to obtain a temperature difference between the detected temperature and a temperature limit of the electric control box. The adjustment module is configured to adjust the rotational speed of the fan and/or the frequency of the compressor based on the temperature difference and a current rotational speed of the fan.

In some embodiments, the adjustment module 1401 is configured to: increase the rotational speed of the fan when the temperature difference is smaller than a first predetermined temperature and the current rotational speed of the fan is smaller than a first target rotational speed; decrease the frequency of the compressor when the temperature difference is smaller than the first predetermined temperature and the current rotational speed is greater than or equal to the first target rotational speed; reduce the rotational speed of the fan when the temperature difference is greater than a second predetermined temperature and the current rotational speed is greater than a second target rotational speed; and maintain the current rotational speed of the fan when the temperature difference is greater than the second predetermined temperature and the current rotational speed is smaller than or equal to the second target rotational speed. The first predetermined temperature is smaller than the second predetermined temperature. The first target rotational speed is greater than the second target rotational speed.

In some embodiments, the air-conditioning system further comprises a throttling component disposed at the refrigerant pipeline and configured to adjust a flow rate of a refrigerant inputted into the heat exchange component. The adjustment module 802 is further configured to, when the temperature difference is smaller than the first predetermined temperature: control the throttling component to open when the throttling component is in a closed state; increase the rotational speed of the fan when the throttling component is currently in an opened state and the rotational speed of the fan is smaller than the first target rotational speed; and decrease the frequency of the compressor when the throttling component is in the opened state and the rotational speed of the fan is greater than or equal to the first target rotational speed.

In some embodiments, the air-conditioning system further comprises a throttling component disposed at the refrigerant pipeline and configured to adjust a flow rate of a refrigerant inputted into the heat exchange component. The adjustment module 1402 is further configured to, when the temperature difference is greater than the second predetermined temperature: reduce the rotational speed of the fan when the current rotational speed of the fan is greater than the second target rotational speed; and control an opening state of the throttling component based on an ambient temperature of an environment where the electric control box is located, when the rotational speed of the fan is smaller than or equal to the second target rotational speed.

In some embodiments, the adjustment module 1402 is configured to: close the throttling component when the ambient temperature is smaller than or equal to a predetermined ambient temperature; and open the throttling component when the ambient temperature is greater than the predetermined ambient temperature.

In some embodiments, the air-conditioning system further comprises a capillary tube disposed at the refrigerant pipeline and arranged in parallel with the throttling component. The adjustment module 1402 is further configured to, when the temperature difference is greater than the second predetermined temperature: close the throttling component when the throttling component is in the opened state; maintain the current rotational speed of the fan when the throttling component is in the closed state and the current rotational speed of the fan is smaller than or equal to the second target rotational speed; and reduce the rotational speed of the fan when the throttling component is in the closed state and the current rotational speed of the fan is greater than the second target rotational speed.

In some embodiments, the adjustment module 1402 is configured to maintain a current rotational speed of the fan and/or a current frequency of the compressor, when the temperature difference is greater than or equal to a first predetermined temperature and smaller than or equal to a second predetermined temperature. The first predetermined temperature is smaller than the second predetermined temperature.

In some embodiments, the first electric control component generates a maximum amount of heat in the electric control box.

In some embodiments, the heat exchange component is configured to adjust a temperature within the electric control box through a phase change of the refrigerant.

In some embodiments, the heat exchange component is an evaporator.

In some embodiments, the evaporator has an inlet connected to an outlet pipe of a heat exchanger of an outdoor unit and an outlet connected to a return port of a compressor or an inlet of a gas-liquid separator.

In some embodiments, the electric control box is a sealed electric control box. Since an independent closed space is formed in the electric control box, arranging the electric control component in the electric control box can prevent dust and organisms from entering the electric control box and affecting the electric control component, improving the reliability of the air-conditioning system in some embodiments.

It should be noted that, the obtaining module 1401 according to any of the above embodiments may be a receiver when actually implemented, and may be configured to receive information transmitted by other devices or measurement units, e.g., a temperature transmitted by a temperature sensor, a pressure transmitted by a pressure sensor, and the like. The obtaining module 1401 may be implemented through a communication port.

In further embodiments, the above-mentioned adjustment module 1402 may be implemented in a form of software invoked by a processing element or in a form of hardware. For example, the adjustment module 1402 may be implemented as a separate processing element, or may be implemented integrally in one of the chips of the above-mentioned return air temperature determination apparatus. In addition, the adjustment module 1402 may also be stored in a storage module of the above-mentioned temperature adjustment apparatus 1400 in a form of program codes, and is configured to be invoked by a processing element of the above-mentioned temperature adjustment apparatus 1400 to execute some or all of functions of the above-mentioned adjustment module 1402.

In addition, all or part of these processing elements may be integrated together or may be implemented independently. Each of these modules may be an integrated circuit having signal processing capabilities. In an implementation, actions of the above method the above modules may be accomplished by an integrated logic circuit in hardware in the processor element or by instructions in the form of software.

For example, the above modules may be one or more integrated circuits configured to implement the above-mentioned return air temperature determination method, e.g., one or more Application Specific Integrated Circuits (ASICs), one or more Digital Signal Processors (DSPs), or one or more Field Programmable Gate Arrays (FPGAs). For example, when some of the above modules is implemented in a form of a processing element invoking program codes, the processing element may be a same processor, such as a Central Processing Unit (CPU) or any other processor that can invoke the program codes. For another example, these modules may also be integrated together and implemented in a form of a system-on-chip.

In some embodiments, the present disclosure further provides an electric control box. The electric control box comprises an electric control component, a heat exchange component, and a fan. As for a specific structure of the electric control box, reference can be made to relevant description of the embodiment illustrated in FIG. 8, and thus details thereof will be omitted here.

The air conditioner comprises a compressor and an electric control box. The electric control box has an accommodation space for accommodating an electric control component and a heat exchanger. The heat exchanger is connected to a refrigerant system of the air conditioner and configured to cool an inside of the electric control box through a phase change of a refrigerant.

In the normal refrigeration process or the normal heating process of the air conditioner, the compressor can compress a gaseous refrigerant into a liquid refrigerant. Part of the liquid refrigerant can be evaporated and absorb heat in the heat exchanger in the electric control box. Circulated air undergoes evaporation and cooling through the heat exchanger, and then passes through and cools the electric control motherboard. In some embodiments, the circulated air passes through the heat dissipation fin and flows back to the heat exchanger to form a complete cycle.

During the phase change of the refrigerant, a satisfactory heat dissipation effect in the electric control box can be achieved, but a condensation problem also arises. In addition, when the compressor in the air conditioner stops operating, since an outer frame of the electric control box has a line passage hole, humid air outside the electric control box can enter the electric control box through the line passage hole, and generates condensation at a part of the electric control box having a low temperature. Therefore, anti-condensation control in a case where the compressor stops operating becomes an urgent problem to be solved.

The anti-condensation control is initiated subsequent to shutdown to reduce a temperature difference between the ambient temperature and the temperature in the electric control box, which reduces condensed water in the electric control box. In this way, the condensed water attached to the electric control component subsequent to a re-startup can be avoided to improve reliability of electric control.

The anti-condensation control can reduce the temperature difference between the ambient temperature and the temperature in the electric control box, since the temperature in the electric control box rises. In the embodiment not forming part of the present invention, initiating the anti-condensation control subsequent to the shutdown can prevent the temperature in the electric control box from rising during an operation of the air conditioner, which ensures operation reliability of electric control. In view of this, an anti-condensation control method is provided. The anti-condensation control method comprises: obtaining an internal temperature of the electric control box and a first ambient temperature outside the electric control box; determining whether the electric control box is at a risk of condensation based on the first ambient temperature and the internal temperature; and performing anti-condensation control on the electric control box, in response to detecting that the compressor stops operating and that the electric control box is at the risk of condensation. Therefore, burnout of the electric control box caused by a short circuit of the electric control box due to the condensation in the electric control box is avoided. It should be understood that the anti-condensation control method is applied in the electric control box of the air conditioner. Technical solutions will be described clearly and completely below in combination with accompanying drawings of the embodiments. Obviously, the embodiments described below are only a part of the embodiments, rather than all embodiments.

In some embodiments, FIG. 15 is a schematic diagram of a scenario according to an embodiment not forming part of the present invention. As illustrated in FIG. 1, in this scenario, an air conditioner 1501, an electronic device 1502, and a server 1503 may be comprised. As an example, the electronic device 1502 is described as a computer.

As illustrated in FIG. 15, the anti-condensation control method described in the embodiments not forming part of the present invention may be implemented in a processor of the air conditioner 1501. In an embodiment, the air conditioner 1501 may be configured to transmit the obtained first ambient temperature outside the electric control box and the obtained internal temperature of the electric control box to the electronic device 1502, such that the electronic device 1502 performs the anti-condensation control method and returns a result to the air conditioner 1501. In a further embodiment, the air conditioner 1501 may be configured to transmit the obtained first ambient temperature outside the electric control box and the obtained internal temperature of the electric control box to the server 1503, such that the server 1503 performs the anti-condensation control method and returns a result to the air conditioner 1501. It should be understood that an execution body of the anti-condensation control method is not limited in the embodiments.

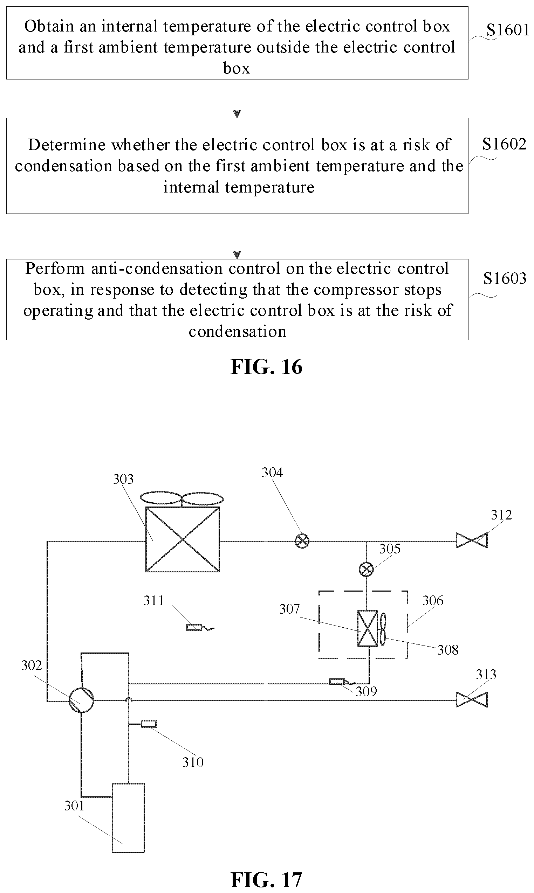

In some embodiments, FIG. 16 is a flowchart illustrating an anti-condensation control method according to an embodiment not forming part of the present invention. In the embodiment corresponding to FIG. 16, as an example, the execution body of the anti-condensation control method is described as a processor in the air conditioner. This example does not constitute a limitation on the embodiments.

As illustrated in FIG. 16, the anti-condensation control method may comprise following operations at blocks S1601 to S1603.

At S1601, an internal temperature of the electric control box and a first ambient temperature outside the electric control box are obtained.

In an embodiment not forming part of the present invention, the electric control box may be a sealed electric control box. The internal temperature may be obtained based on a detection performed by a temperature sensor inside the electric control box. The first ambient temperature (which may also be referred to as a dry bulb temperature of an ambient environment) may be obtained based on a detection performed by a temperature sensor outside the electric control box, e.g., a detection performed by a temperature sensor inside the air conditioner (such as a temperature sensor or temperature and humidity sensor 311 in FIG. 17), or a detection performed by a temperature sensor outside the air conditioner and connected to the air conditioner. In some embodiments, the internal temperature and the first ambient temperature may be obtained in real time or periodically. For example, the internal temperature and the first ambient temperature are obtained every 5 seconds, every 10 seconds, every 30 seconds, or the like.

In some embodiments, FIG. 17 is a schematic diagram showing a structure of an air conditioner according to an embodiment not forming part of the present invention. As illustrated in FIG. 3, the air conditioner may comprise a compressor 301, a four-way reversing valve 302, an outdoor unit heat exchanger assembly 303, a main throttling component 304, an assistant throttling component 305, an electric control box 306, a heat exchanger 307, a cooling fan 308, a temperature sensor 309, a low-pressure side pressure sensor 310, a temperature sensor or temperature and humidity sensor 311, a liquid-side stop valve 312, a gas-side stop valve 313, and the like.

As illustrated in FIG. 17, which does not form part of the present invention, when an air conditioner system is turned on and in operation, the assistant throttling component 305 opens to an initial opening degree that may range from 0 to 1/3 of a maximum opening degree. The low-pressure side pressure sensor 310 detects a low-pressure side pressure of the compressor 301 in real time, and determines a corresponding saturation temperature. The temperature sensor 309 detects an outlet air temperature of the heat exchanger 307 and determines the outlet superheat degree of the heat exchanger 307. The outlet superheat degree of the heat exchanger 307 may be a difference between the outlet air temperature of the heat exchanger 307 and the saturation temperature. For example, the outlet superheat degree of the heat exchanger 307 may be a difference obtained by subtracting the saturation temperature from the outlet air temperature of the heat exchanger 307. Therefore, an adjustment may be performed by the assistant throttling component 305 based on a difference between the outlet superheat degree of the heat exchanger 307 and a target outlet superheat degree. The cooling fan 308 is a variable frequency fan, and a rotational speed of the cooling fan 308 may be adjusted based on the temperature sensor in the electric control box 306 and a temperature threshold corresponding to the electric control box 306. The opening degree of the assistant throttling component 305 may be adjusted based on the temperature sensor in the electric control box 306 and the temperature threshold corresponding to the electric control box 306. An adjustment period of the cooling fan 308 may range from 0 second to 120 seconds. An adjustment period of the assistant throttling component 305 may range from 0 second to 120 seconds.

At S1602, whether the electric control box is at a risk of condensation is determined based on the first ambient temperature and the internal temperature.

In some embodiments, whether the electric control box is at a risk of condensation may be determined based on the first ambient temperature and the internal temperature. For example, the electric control box being at the risk of condensation is determined when the internal temperature is smaller than the first ambient temperature; or the electric control box being not at the risk of condensation is determined when the internal temperature is greater than or equal to the first ambient temperature.

At S1603, anti-condensation control is performed on the electric control box, in response to detecting that the compressor stops operating and that the electric control box is at the risk of condensation.

Reasons for the compressor to stop operating may be various, e.g., normal shutdown of the air conditioner or protection shutdown of the air conditioner system, which are not limited in the embodiments.

It should be understood that, when the compressor of the air conditioner stops operating, since the outer frame of the electric control box has the line passage hole, the humid air outside the electric control box can enter the electric control box through the line passage hole, and generates condensation at the part of the electric control box having the low temperature. Therefore, whether the electric control box is at the risk of condensation can be determined in response to detecting that the compressor stops operating, which avoids a short circuit of the electric control box caused by the condensation.

Based on this, the anti-condensation control can be performed on the electric control box, in response to detecting that the compressor stops operating and that the electric control box is at the risk of condensation, to avoid the burnout of the electric control box caused by the short circuit of the electric control box due to the condensation in the electric control box.

On a basis of the embodiment corresponding to FIG. 16, the operation at S1602 comprises: obtaining a second ambient temperature outside the electric control box and a relative humidity outside the electric control box; determining a dew point temperature outside the electric control box based on the second ambient temperature and the relative humidity; and determining whether the electric control box is at the risk of condensation based on the first ambient temperature, the internal temperature, and the dew point temperature.

In an embodiment, each of the second ambient temperature and the relative humidity may be obtained based on a detection performed by a temperature and humidity sensor outside the electric control box, e.g., a detection performed by a temperature and humidity sensor inside the air conditioner (such as the temperature sensor or temperature and humidity sensor 311 in FIG. 3). In some embodiments, the second ambient temperature, the relative humidity, and the dew point temperature has a correspondence. Based on the measured second ambient temperature and the measured relative humidity, the dew point temperature corresponding to the measured second ambient temperature and the measured relative humidity may be obtained.

In a possible implementation, whether the electric control box is at the risk of condensation may also be determined based on the dew point temperature and the internal temperature. For example, the electric control box being at the risk of condensation is determined when the internal temperature is smaller than or equal to the dew point temperature; or the electric control box being not at the risk of condensation is determined when the internal temperature is greater than the dew point temperature.

Based on this, whether the electric control box is at the risk of condensation can be accurately detected based on the internal temperature and the dew point temperature.

On the basis of the embodiment corresponding to FIG. 16, determining whether the electric control box is at the risk of condensation based on the first ambient temperature, the internal temperature, and the dew point temperature comprises: determining that the electric control box is at the risk of condensation when the internal temperature is smaller than the first ambient temperature and/or smaller than or equal to the dew point temperature; and determining that the electric control box is not at the risk of condensation when the internal temperature is greater than or equal to the first ambient temperature and/or greater than the dew point temperature.

In a possible implementation, the electric control box being at the risk of condensation is determined when a duration during which the internal temperature is smaller than the first ambient temperature is longer than a first duration and/or a duration during which the internal temperature is smaller than or equal to the dew point temperature is longer than a second duration.

In a possible implementation, the electric control box being not at the risk of condensation is determined when the duration during which the internal temperature is smaller than the first ambient temperature is shorter than or equal to the first duration and/or the duration during which the internal temperature is smaller than or equal to the dew point temperature is shorter than or equal to the second duration.

The first duration may be 30 seconds, 1 minute, 2 minutes, or the like. The second duration may be 30 seconds, 1 minute, 2 minutes, or the like. The first duration may be the same as or different from the second duration. The embodiments are not limited in this regard.

Based on this, whether the electric control box is at the risk of condensation can be accurately detected based on the first ambient temperature, the internal temperature, and the dew point temperature. In addition, by detecting durations in different states, stability of a condensation risk detection is improved.

On the basis of the embodiment corresponding to FIG. 16, the electric control box comprises the cooling fan. An electric heating component is disposed at a back of the cooling fan. The operation at S1603 comprises: performing the anti-condensation control on the electric control box using the electric heating component and the cooling fan.

The electric heating component may have a heating function. For example, the electric heating component may be an electric heating wire or the like. A specific form of the electric heating component is not limited in the embodiments.

It should be understood that, during the anti-condensation control, the cooling fan may be used to continuously blow air, or on a basis that the cooling fan continuously blows air, the electric heating component may be used for heating, such that the cooling fan can blow hot air to each part of the electric control box, to increase the temperature of the electric control box when there is a risk of condensation.

On this basis, an anti-condensation effect can be enhanced based on the electric heating component and the cooling fan to avoid the condensation in the electric control box due to a low temperature.

On the basis of the embodiment corresponding to FIG. 16, the anti-condensation control is stopped when a duration during which the internal temperature is greater than or equal to the first ambient temperature is longer than a third duration and/or a duration during which the internal temperature is greater than the dew point temperature is longer than a fourth duration.

The third duration may be 30 seconds, 1 minute, 2 minutes, or the like. The fourth duration may be 30 seconds, 1 minute, 2 minutes, or the like. The third duration may be the same as or different from the fourth duration. The embodiments are not limited in this regard.

It should be understood that, when the duration during which the internal temperature is greater than or equal to the first ambient temperature is longer than the third duration and/or the duration during which the internal temperature is greater than the dew point temperature is longer than the fourth duration, the electric control box may be determined as no longer having a possibility of condensation. Therefore, the anti-condensation control may be stopped. For example, the cooling fan and/or the electric heating component may stop operating.

On the basis of the embodiment corresponding to FIG. 16, the electric control box comprises the electric control component and the heat exchanger. The internal temperature is an outlet air temperature of the heat exchanger, and/or the internal temperature is a surface temperature of the electric control component.

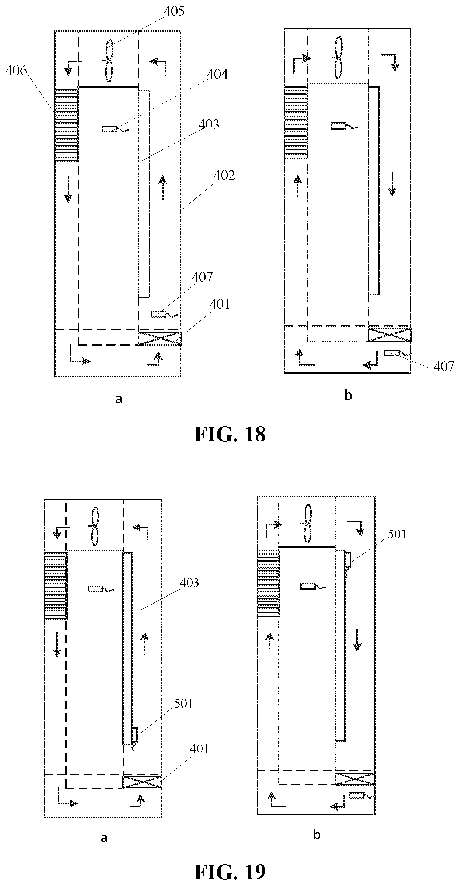

In some embodiments, FIG. 18 is a schematic diagram showing a structure of an electric control box. In the embodiment corresponding to FIG. 18, which does not form part of the present invention, as an example, the internal temperature is described as the outlet air temperature of the heat exchanger.

In a case where the internal temperature is the outlet air temperature of the heat exchanger, when the air flow in the electric control box flows in a counterclockwise direction, the sensor 407 for measuring the internal temperature may be disposed above the heat exchanger 401 as illustrated in a of FIG. 18. In an embodiment, in a case where the internal temperature is the outlet air temperature of the heat exchanger, when the air flow in the electric control box flows in a clockwise direction, the sensor 407 for measuring the internal temperature may be disposed below the heat exchanger 401 as illustrated in b of FIG. 18.

As illustrated in a in FIG. 18, the electric control box 402 may further comprise the heat exchanger 401, an electric control motherboard 403, an electric control box temperature sensor 404, a cooling fan 405, and a heat dissipation fin 406. The electric control box 402 may be the electric control box 306 in FIG. 17. The heat exchanger 401 may be the heat exchanger 307 in FIG. 3. The cooling fan 405 may be the cooling fan 308 in FIG. 17.

In some embodiments, FIG. 19 is another schematic diagram showing a structure of an electric control box according to an embodiment not forming part of the present invention. In the embodiment corresponding to FIG. 19, as an example, the internal temperature is described as a surface temperature of the electric control component. The electric control component may be the electric control motherboard.

In a case where the internal temperature is the surface temperature of the electric control component, when the air flow in the electric control box flows in the counterclockwise direction, the sensor 501 for measuring the internal temperature may be disposed at a position on the electric control motherboard 403 close to the heat exchanger 401 as illustrated in a of FIG. 19. In an embodiment, in a case where the internal temperature is the surface temperature of the electric control component, when the air flow in the electric control box flows in the clockwise direction, the sensor 501 for measuring the internal temperature may be disposed at a position on the electric control motherboard 403 away from the heat exchanger 401 as illustrated in b of FIG. 19. Reference can be made to the description in the embodiment corresponding to FIG. 18 for other components of the electric control box in a (or b) of FIG. 19, and thus details thereof will be omitted here.

It should be understood that the internal temperature measured by the temperature sensor 501 located at a surface of the electric control component in the embodiment corresponding to FIG. 19 may be a lowest temperature inside the electric control box.

On the basis of the embodiment corresponding to FIG. 16, for a better understanding of each embodiment, an exemplary description of the anti-condensation control method according to the embodiments is made below using an example that the internal temperature is represented by TA, the first ambient temperature is represented by TH, the second ambient temperature is represented by TD, the relative humidity is represented by TW, the dew point temperature is represented by TDE, each of the first duration and the second duration is represented by TS1, and each of the third duration and the fourth duration is represented by TS2. The exemplary description does not constitute a limitation of the embodiments.

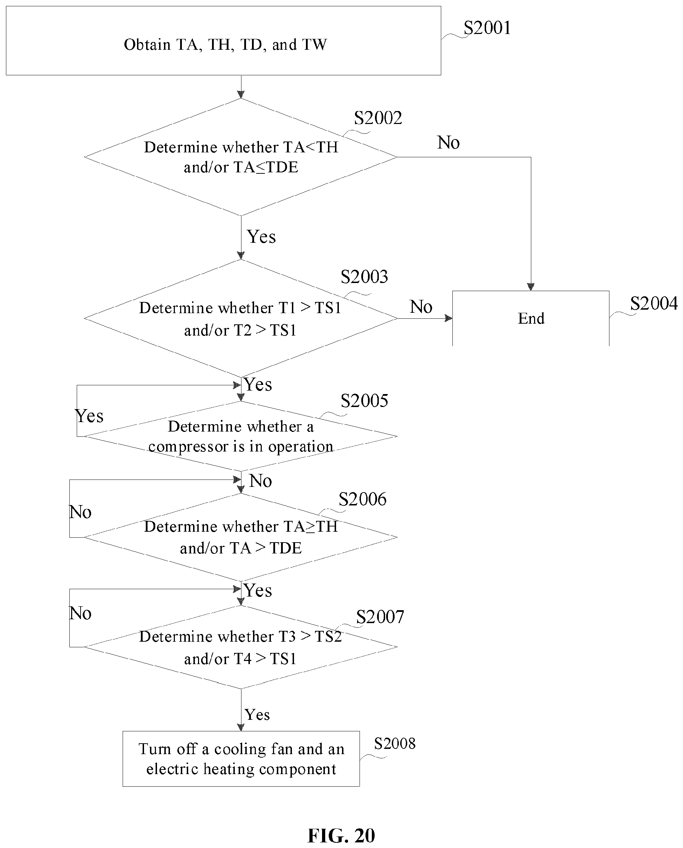

In some embodiments, FIG. 20 is another flowchart illustrating an anti-condensation control method according to an embodiment not forming part of the present invention. As illustrated in FIG. 20, the anti-condensation control method may comprise following operations at blocks S2001 to S2008.

At S2001, when the air conditioner is turned on and operates, TA, TH, TD, and TW are obtained.

At S2002, whether TA<TH and/or TA≤TDE is determined.

TDE may be obtained based on TW and TD. When TA<TH and/or TA≤TDE, an operation at S2003 may be performed. In a further embodiment, when TA≥TH and/or TA>TDE, an operation at S2004 may be performed.

At S2003, whether a duration T1 during which TA is smaller than TH is longer than TS1 (T1>TS1) and/or whether a duration T2 during which TA is smaller than or equal to TDE is longer than TS1 (T2>TS1) is determined.

In response to determining that the duration T1 during which TA is smaller than TH is longer than TS1 (T1>TS1) and/or the duration T2 during which TA is smaller than or equal to TDE is longer than TS1 (T2>TS1), an operation at S2005 may be performed. In a further embodiment, in response to determining that the duration T1 during which TA is smaller than TH is shorter than or equal to TS1 (T1≤TS1) and/or the duration T2 during which TA is smaller than or equal to TDE is shorter than or equal to TS1 (T2≤TS1), the operation at S2004 may be performed.

At S2004, in response to determining that no anti-condensation control is required, a current round of detection is finished.

It should be understood that, the embodiment corresponding to FIG. 6 may be periodically executed subsequent to that a current anti-condensation detection is finished for a time period, to realize a periodic anti-condensation detection. For example, an embodiment corresponding to FIG. 20 may be periodically executed subsequent to that the current detection is finished for a time period such as five minutes.

At S2005, it is determined whether the compressor is in operation in response to determining that anti-condensation control is required.

The operation at S2005 may be continued to be performed in response to detecting that the compressor is in normal operation, to continuously detect an operation state of the compressor. In an embodiment, the cooling fan remains on in response to detecting shutdown of the compressor. Then, an operation at S2006 may be performed.

At S2006, it is determined whether TA≥TH and/or TA>TDE.

When TA≥TH and/or TA>TDE, the operation at S2007 may be performed. In a further embodiment, when TA<TH and/or TA≤TDE, the operation at S2006 may be continued to be performed, for continuously detecting a relation between TA and each of TH and TDE.

At S2007, it is determined whether a duration T3 during which TA is greater than or equal to TH is longer than TS2 (T3>TS2) and/or whether a duration T4 during which TA is greater than TDE is longer than TS1 (T4>TS1).

When the duration T3 during which TA is greater than or equal to TH is longer than TS2 (T3>TS2) and/or the duration T4 during which TA is greater than TDE is longer than TS1 (T4>TS1), an operation at S2008 may be performed. In a further embodiment, when the duration T3 during which TA is greater than or equal to TH is shorter than or equal to TS2 (T3≤TS2) and/or the duration T4 during which TA is greater than TDE is shorter than or equal to TS2 (T4≤TS2), the operation at S2007 may be continued to be performed, for continuously detecting a relation between T3 and each of TS1 and TS3.

At S2008, the cooling fan and the electric heating component are turned off.

Based on this, the anti-condensation control may be performed on the electric control box, in response to detecting that the compressor stops operating and that the electric control box is at the risk of condensation, to avoid the burnout of the electric control box caused by the short circuit of the electric control box due to the condensation in the electric control box. Therefore, the cooling fan and the electric control component are turned off in response to detecting that the electric control box is no longer at the risk of condensation.

In the embodiment not forming part of the present invention, the air conditioner may be a household air conditioner or a commercial air conditioner.

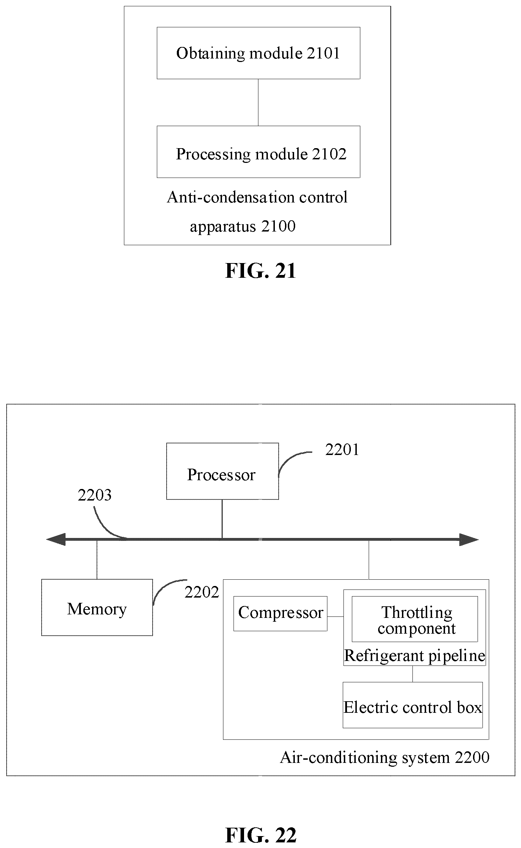

The embodiments not forming part of the present invention further provide an anti-condensation control apparatus. In some embodiments, FIG. 21 is a schematic diagram showing a structure of an anti-condensation control apparatus 2100 according to an embodiment not forming part of the present invention. As illustrated in FIG. 21, the anti-condensation control apparatus 2100 may comprise an obtaining module 2101 and a processing module 2102.

The anti-condensation control apparatus 2100 comprises an obtaining module 2101 and a processing module 2102. The obtaining module 2101 is configured to obtain an internal temperature of the electric control box and a first ambient temperature outside the electric control box. The processing module 2102 is configured to determine whether the electric control box is at a risk of condensation based on the first ambient temperature and the internal temperature. The processing module 2102 is further configured to perform anti-condensation control on the electric control box, in response to detecting that the compressor stops operating and that the electric control box is at the risk of condensation.

In some embodiments, the processing module 2102 is configured to: determine that the electric control box is at the risk of condensation when the internal temperature is smaller than the first ambient temperature; and determine that the electric control box is not at the risk of condensation when the internal temperature is greater than or equal to the first ambient temperature.

In some embodiments, the air conditioner comprises a temperature sensor disposed outside the electric control box and a temperature and humidity sensor. The first ambient temperature is collected by the temperature sensor. The obtaining module 2101 is configured to obtain a second ambient temperature outside the electric control box and a relative humidity outside the electric control box. The processing module 2102 is configured to determine a dew point temperature outside the electric control box based on the second ambient temperature and the relative humidity. The processing module 2102 is further configured to determine whether the electric control box is at the risk of condensation based on the first ambient temperature, the internal temperature, and the dew point temperature.

In some embodiments, the processing module 2102 is configured to: determine that the electric control box is at the risk of condensation when the internal temperature is smaller than the first ambient temperature and/or smaller than or equal to the dew point temperature; and determine that the electric control box is not at the risk of condensation when the internal temperature is greater than or equal to the first ambient temperature and/or greater than the dew point temperature.

In some embodiments, the processing module 2102 is configured to: determine that the electric control box is at the risk of condensation when a duration during which the internal temperature is smaller than the first ambient temperature is longer than a first duration and/or a duration during which the internal temperature is smaller than or equal to the dew point temperature is longer than a second duration.

In some embodiments, the processing module 2102 is further configured to: determine that the electric control box is not at the risk of condensation when the duration during which the internal temperature is smaller than the first ambient temperature is shorter than or equal to the first duration and/or the duration during which the internal temperature is smaller than or equal to the dew point temperature is shorter than or equal to the second duration.

In some embodiments, the electric control box comprises a cooling fan. An electric heating component is disposed at a back of the cooling fan. The processing module 802 is configured to perform the anti-condensation control on the electric control box using the electric heating component and the cooling fan.

In some embodiments, the processing module 2102 is further configured to stop the anti-condensation control when a duration during which the internal temperature is greater than or equal to the first ambient temperature is longer than a third duration and/or a duration during which the internal temperature is greater than the dew point temperature is longer than a fourth duration.

In some embodiments, in the electric control box, the internal temperature is an outlet air temperature of the heat exchanger, and/or the internal temperature is a surface temperature of the electric control component.

In some embodiments, the heat exchanger may be an evaporator.

In some embodiments, the evaporator has an inlet connected to an outlet pipe of a heat exchanger of an outdoor unit and an outlet connected to a return port of a compressor or an inlet of a gas-liquid separator.

In some embodiments, the electric control box is a sealed electric control box.

In further embodiments, the anti-condensation control apparatus 2100 may further comprise a storage module configured to store data and/or instructions. The anti-condensation control apparatus according to the embodiments (e.g., the obtaining module 2101 and the processing module 2102 described above) may be configured to read the data and the instructions in the storage module to implement the above-mentioned anti-condensation control method, an implementation and technical effects thereof are similar to those described above. Therefore, details of the implementation and the technical effects will be omitted here.

It should be noted that, the obtaining module 2101 according to any of the above embodiments may be a receiver when actually implemented, and may be configured to receive information transmitted by other devices or measurement units. The obtaining module 2101 may be implemented through a communication port.

In further embodiments, the above-mentioned processing module 2102 may be implemented in a form of software invoked by a processing element or in a form of hardware. For example, the processing module 2102 may be implemented as a separate processing element, or may be implemented integrally in one of the chips of the above-mentioned anti-condensation control apparatus. In addition, the processing module 2102 may also be stored in a storage module of the anti-condensation control apparatus 2100 in a form of program codes, and is configured to be invoked by a processing element of the above-mentioned anti-condensation control apparatus 800 to execute some or all of functions of the above-mentioned processing module 2102.

In addition, all or part of these processing elements may be integrated together or may be implemented independently. Each of these modules may be an integrated circuit having signal processing capabilities. In an implementation, actions of the above method the above modules may be accomplished by an integrated logic circuit in hardware in the processor element or by instructions in the form of software.

For example, the above modules may be one or more integrated circuits configured to implement the above-mentioned anti-condensation control method, e.g., one or more Application Specific Integrated Circuits (ASICs), one or more Digital Signal Processors (DSPs), or one or more Field Programmable Gate Arrays (FPGAs). For example, when some of the above modules is implemented in a form of a processing element invoking program codes, the processing element may be a same processor, such as a Central Processing Unit (CPU) or any other processor that can invoke the program codes. For another example, these modules may also be integrated together and implemented in a form of a system-on-chip.

In some embodiments, an air-conditioning system is further provided. FIG. 22 is a schematic diagram showing a structure of an air-conditioning system according to an embodiment not forming part of the present invention. As illustrated in FIG. 22, the air-conditioning system 2200 comprises a processor 2201, a memory 2202, a compressor, a refrigerant pipeline, an electric control box, and a throttling component disposed at a refrigerant pipeline and configured to adjust a refrigerant flow rate. The refrigerant pipeline is configured to input a refrigerant outputted by the compressor into the heat exchange component. The heat exchange component is configured to perform heat exchange based on the refrigerant.

Reference can be made to the embodiments illustrated in FIG. 1, FIG. 7, and/or FIG. 11 for a specific structure of the air-conditioning system 2200 and an arrangement of each component, and thus details thereof will be omitted here.

In an embodiment not forming part of the present invention, the memory 2202 and the processor 2201 are electrically connected directly or indirectly to realize a data transmission or a data interaction. For example, these elements may be electrically connected to each other by one or more communication buses or signal lines, e.g., a bus 2203. The memory 2202 is configured to store computer-executable instructions for implementing a data access control method, and comprises at least one software functional module that may be stored in the memory in a form of software or firmware. The processor 2201 is configured to execute various functional applications and data processing through running a software program and modules stored in the memory.

The memory 2202 may be, but is not limited to, a Random Access Memory (RAM), a Read Only Memory (ROM), a Programmable Read-Only Memory (PROM), an Erasable Programmable Read-Only Memory (EPROM), an Electric Erasable Programmable Read-Only Memory (EEPROM), or the like. The memory is configured to store a program. The processor is configured to execute the program subsequent to a reception of an execution instruction. In some embodiments, the software program and the modules in the memory described above may further comprise an operation system, which may comprise various software components and/or drivers for managing system tasks (e.g., memory management, storage device control, and power management), and may intercommunicate with various hardware or software components to provide an operation environment for other software components.

The processor 2201 may be an integrated circuit chip having signal processing capabilities, and may be a general-purpose processor comprising a central processor, a Network Processor (NP), or the like for implementing the methods, steps, and logical block diagrams disclosed in the embodiments. The general-purpose processor may be a microprocessor, any conventional processor, or the like.

It should be noted that, the indoor unit according to the embodiments may be used to perform the above-mentioned temperature adjustment method. An implementation and technical effects of performing the above-mentioned temperature adjustment method by the indoor unit are similar those of the above-mentioned temperature adjustment method, and thus details thereof will be omitted here.

The embodiments of the present disclosure further provide a computer-readable storage medium. The computer-executable storage medium stores computer-executable instructions. The computer-executable instructions, when executed by the processor, are configured to implement the method adjustment method according to any of the above method embodiments.

The embodiments of the present disclosure further provide a computer program product comprising a computer program for implementing, when executed by the processor, the temperature adjustment method according to any of the above method embodiments.

It is conceivable for those skilled in the art that, all or part of the processes in the above method embodiments may be implemented by relevant hardware instructed by a computer program. The computer program can be stored in a non-volatile computer-readable storage medium. When the computer program is executed, steps of the above method embodiments may be comprised. Any reference to a memory, a storage, a database, or other media as used in the embodiments of the present disclosure may comprise a non-volatile and/or a volatile memory. The nonvolatile memory may comprise a Read Only Memory (ROM), a Programmable ROM (PROM), an Electrically Programmable ROM (EPROM), an Electrically Erasable Programmable ROM (EEPROM), or a flash memory. The volatile memory may comprise a Random Access Memory (RAM) or an external cache memory. By way of illustration, rather than limitation, an RAM is available in various forms such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Rambus Direct RAM (RDRAM), a Direct Rambus Dynamic RAM (DRDRAM), and a Rambus

In the embodiments of the invention provided by the present disclosure, it should be understood that, the disclosed apparatus and method may be implemented in other ways as long as within the scope defined in the appended claims.

So far, the technical solutions of the present disclosure have been described in conjunction with the preferred embodiments illustrated in the accompanying drawings, but it is conceivable for those skilled in the art that the protection scope of the present invention is obviously not limited to these specific embodiments. Many equivalent modifications or changes to relevant technical features can be made by those skilled in the art without departing from the protection scope of the present invention.

## Claims

1. A temperature adjustment method, for adjusting a temperature of an electric control component (113) in an electric control box (102) in an air-conditioning system (100), the air-conditioning system (100) comprising a compressor (101) and a refrigerant pipeline (103), wherein a heat exchange component (105), a fan (106), a first electric control component (113), and a temperature sensor (114) are disposed in the electric control box (102), the refrigerant pipeline (103) being configured to input a refrigerant outputted by the compressor (101) or an indoor unit into the heat exchange component (105), the heat exchange component (105) being configured to perform heat exchange based on the refrigerant, and the temperature sensor (114) being arranged close to the first electric control component (113),
wherein the temperature adjustment method comprises:
(S901, S1001, S1201, S1301) obtaining a detected temperature from the temperature sensor (114); and
(S902) adjusting a rotational speed of the fan (106) and/or a frequency of
the compressor (101) based on the detected temperature, to adjust a temperature of the first electric control component (113).

2. The temperature adjustment method according to claim 1, wherein said (S902) adjusting the rotational speed of the fan (106) and/or the frequency of the compressor (101) based on the detected temperature comprises:
(51002, S1202, 51302) obtaining a temperature difference between the detected temperature and a temperature limit of the electric control box (102); and
adjusting the rotational speed of the fan (106) and/or the frequency of the compressor (101) based on the temperature difference and a current rotational speed of the fan (106).

3. The temperature adjustment method according to claim 2, wherein said adjusting the rotational speed of the fan (106) and/or the frequency of the compressor (101) based on the temperature difference and the current rotational speed of the fan (106) comprises:
increasing the rotational speed of the fan (106) when the temperature difference is smaller than a first predetermined temperature and the current rotational speed of the fan (106) is smaller than a first target rotational speed;
decreasing the frequency of the compressor (101) when the temperature difference is smaller than the first predetermined temperature and the current rotational speed is greater than or equal to the first target rotational speed;
reducing the rotational speed of the fan (106) when the temperature difference is greater than a second predetermined temperature and the current rotational speed is greater than a second target rotational speed; and
maintaining the current rotational speed of the fan (106) when the temperature difference is greater than the second predetermined temperature and the current rotational speed is smaller than or equal to the second target rotational speed,
wherein the first predetermined temperature is smaller than the second predetermined temperature, and the first target rotational speed is greater than the second target rotational speed.

4. The temperature adjustment method according to claim 3, wherein the air-conditioning system (100) further comprises a throttling component (104, 116) disposed at the refrigerant pipeline (103) and configured to adjust a flow rate of a refrigerant inputted into the heat exchange component (105),
wherein the temperature adjustment method further comprises, when the temperature difference is smaller than the first predetermined temperature:
controlling the throttling component (104, 116) to open when the throttling component (104, 116) is currently in a closed state;
increasing the rotational speed of the fan (106) when the throttling component (104, 116) is currently in an opened state and the rotational speed of the fan (106) is smaller than the first target rotational speed; and
decreasing the frequency of the compressor (101) when the throttling component (104, 116) is in the opened state and the rotational speed of the fan (106) is greater than or equal to the first target rotational speed.

5. The temperature adjustment method according to claim 3, wherein the air-conditioning system (100) further comprises a throttling component (104, 116) disposed at the refrigerant pipeline (103) and configured to adjust a flow rate of a refrigerant inputted into the heat exchange component (105),
wherein the temperature adjustment method further comprises, when the temperature difference is greater than the second predetermined temperature:
reducing the rotational speed of the fan (106) when the current rotational speed of the fan (106) is greater than the second target rotational speed; and
controlling an opening state of the throttling component (104, 116) based on an ambient temperature of an environment where the electric control box (102) is located, when the rotational speed of the fan (106) is smaller than or equal to the second target rotational speed; preferably
said adjusting the opening state of the throttling component (104, 116) based on the ambient temperature of the environment where the electric control box (102) is located comprises:
closing the throttling component (104, 116) when the ambient temperature is smaller than or equal to a predetermined ambient temperature; and
opening the throttling component (104, 116) when the ambient temperature is greater than the predetermined ambient temperature.

6. The temperature adjustment method according to claim 4 or 5, wherein the air-conditioning system (100) further comprises a capillary tube (118) disposed at the refrigerant pipeline (103) and arranged in parallel with the throttling component (104, 116), and
the temperature adjustment method further comprises, when the temperature difference is greater than the second predetermined temperature:
closing the throttling component (104, 116) when the throttling component (104, 116) is in an opened state;
maintaining the current rotational speed of the fan (106) when the throttling component (104, 116) is in a closed state and the current rotational speed of the fan (106) is smaller than or equal to the second target rotational speed; and
reducing the rotational speed of the fan (106) when the throttling component (104, 116) is in the closed state and the current rotational speed of the fan (106) is greater than the second target rotational speed.

7. The temperature adjustment method according to any one of claims 1 to 5, wherein said adjusting the rotational speed of the fan (106) and/or the frequency of the compressor (101) based on the temperature difference and the current rotational speed of the fan (106) comprises:
maintaining a current rotational speed of the fan (106) and/or a current frequency of the compressor (101), when (S1003) the temperature difference is greater than or equal to a first predetermined temperature and smaller than or equal to a second predetermined temperature,
wherein the first predetermined temperature is smaller than the second predetermined temperature; or
the first electric control component (113) generates a maximum amount of heat in the electric control box (102).

8. The temperature adjustment method according to any one of claims 1 to 5, wherein the heat exchange component (105) is configured to adjust a temperature within the electric control box (102) through a phase change of a refrigerant.

9. The temperature adjustment method according to claim 8, wherein the heat exchange component (105) is an evaporator.

10. The temperature adjustment method according to claim 9, wherein the evaporator has an inlet connected to an outlet pipe of a heat exchanger (110) of an outdoor unit and an outlet connected to a return port of a compressor (101) or an inlet of a gas-liquid separator.

11. The temperature adjustment method according to any one of claims 1 to 5, wherein the electric control box (102) is a sealed electric control box (102).

12. A temperature adjustment apparatus, configured to adjust a temperature of an electric control component (113) in an electric control box (102) in an air-conditioning system (100), the air-conditioning system (100) comprising a compressor (101) and a refrigerant pipeline (103), wherein a heat exchange component (105), a fan (106), a first electric control component (113), and a temperature sensor (114) are disposed in the electric control box (102), the refrigerant pipeline (103) being configured to input a refrigerant outputted by the compressor (101) or an indoor unit into the heat exchange component (105), the heat exchange component (105) being configured to perform heat exchange based on the refrigerant, and the temperature sensor (114) being arranged close to the first electric control component (113),
wherein the temperature adjustment apparatus comprises:
an obtaining module (1401) configured to obtain a detected temperature from the temperature sensor (114); and
an adjustment module (1402) configured to adjust a rotational speed of the fan (106) and/or a frequency of the compressor (101) based on the detected temperature, to adjust a temperature of the first electric control component (113).

13. A computer-readable storage medium, having a computer program stored thereon, wherein the computer program, when executed, implements a temperature adjustment method according to any one of claims 1 to 11.

## Patentansprüche

1. Temperaturregelungsverfahren zum Regeln einer Temperatur einer elektrischen Steuerkomponente (113) in einem elektrischen Steuerkasten (102) in einem Klimaanlagensystem (100), wobei das Klimaanlagensystem (100) einen Kompressor (101) und eine Kältemittelleitung (103) umfasst, wobei in dem elektrischen Steuerkasten (102) eine Wärmeaustauschkomponente (105), ein Lüfter (106), eine erste elektrische Steuerkomponente (113) und ein Temperatursensor (114) angeordnet sind, wobei die Kältemittelleitung (103) dazu ausgebildet ist, ein von dem Kompressor (101) oder einer Inneneinheit ausgegebenes Kältemittel in die Wärmeaustauschkomponente (105) einzuleiten, wobei die Wärmeaustauschkomponente (105) dazu ausgebildet ist, einen Wärmeaustausch auf der Grundlage des Kältemittels durchzuführen, und wobei der Temperatursensor (114) nahe der ersten elektrischen Steuerkomponente (113) angeordnet ist,
wobei das Temperaturregelungsverfahren Folgendes umfasst:
(5901, 51001, 51201, 51301) Erfassen einer erfassten Temperatur von dem Temperatursensor (114); und
(5902) Regeln einer Drehzahl des Lüfters (106) und/oder einer Frequenz des Kompressors (101) auf der Grundlage der erfassten Temperatur, um eine Temperatur der ersten elektrischen Steuerkomponente (113) zu regeln.

2. Temperaturregelungsverfahren nach Anspruch 1, wobei das besagte (5902) Regeln der Drehzahl des Lüfters (106) und/oder der Frequenz des Kompressors (101) auf der Grundlage der erfassten Temperatur Folgendes umfasst:
(51002, 51202, 51302) Erfassen einer Temperaturdifferenz zwischen der erfassten Temperatur und einer Temperaturgrenze des elektrischen Steuerkastens (102); und
Regeln der Drehzahl des Lüfters (106) und/oder der Frequenz des Kompressors (101) auf der Grundlage der Temperaturdifferenz und einer aktuellen Drehzahl des Lüfters (106).

3. Temperaturregelungsverfahren nach Anspruch 2, wobei das besagte Regeln der Drehzahl des Lüfters (106) und/oder der Frequenz des Kompressors (101) auf der Grundlage der Temperaturdifferenz und der aktuellen Drehzahl des Lüfters (106) Folgendes umfasst:
Erhöhen der Drehzahl des Lüfters (106), wenn die Temperaturdifferenz kleiner als eine erste vorbestimmte Temperatur ist und die aktuelle Drehzahl des Lüfters (106) kleiner als eine erste Zieldrehzahl ist;
Verringern der Frequenz des Kompressors (101), wenn die Temperaturdifferenz kleiner als die erste vorbestimmte Temperatur ist und die aktuelle Drehzahl größer als oder gleich der ersten Zieldrehzahl ist;
Reduzieren der Drehzahl des Lüfters (106), wenn die Temperaturdifferenz größer als eine zweite vorbestimmte Temperatur ist und die aktuelle Drehzahl größer als eine zweite Zieldrehzahl ist; und
Beibehalten der aktuellen Drehzahl des Lüfters (106), wenn die Temperaturdifferenz größer als die zweite vorbestimmte Temperatur ist und die aktuelle Drehzahl kleiner als oder gleich der zweiten Zieldrehzahl ist,
wobei die erste vorbestimmte Temperatur kleiner als die zweite vorbestimmte Temperatur ist und die erste Zieldrehzahl größer als die zweite Zieldrehzahl ist.

4. Temperaturregelungsverfahren nach Anspruch 3, wobei das Klimaanlagensystem (100) ferner eine an der Kältemittelleitung (103) angeordnete und dazu ausgebildete Drosselkomponente (104, 116) umfasst, eine Durchflussrate eines in die Wärmeaustauschkomponente (105) eingeleiteten Kältemittels einzustellen,
wobei das Temperaturregelungsverfahren ferner Folgendes umfasst, wenn die Temperaturdifferenz kleiner als die erste vorbestimmte Temperatur ist:
Steuern der Drosselkomponente (104, 116) zum Öffnen, wenn sich die Drosselkomponente (104, 116) derzeit in einem geschlossenen Zustand befindet;
Erhöhen der Drehzahl des Lüfters (106), wenn sich die Drosselkomponente (104, 116) derzeit in einem geöffneten Zustand befindet und die Drehzahl des Lüfters (106) kleiner als die erste Zieldrehzahl ist; und
Verringern der Frequenz des Kompressors (101), wenn sich die Drosselkomponente (104, 116) in dem geöffneten Zustand befindet und die Drehzahl des Lüfters (106) größer als oder gleich der ersten Zieldrehzahl ist.

5. Temperaturregelungsverfahren nach Anspruch 3, wobei das Klimaanlagensystem (100) ferner eine an der Kältemittelleitung (103) angeordnete und dazu ausgebildete Drosselkomponente (104, 116) umfasst, eine Durchflussrate eines in die Wärmeaustauschkomponente (105) eingeleiteten Kältemittels einzustellen,
wobei das Temperaturregelungsverfahren ferner Folgendes umfasst, wenn die Temperaturdifferenz größer als die zweite vorbestimmte Temperatur ist:
Reduzieren der Drehzahl des Lüfters (106), wenn die aktuelle Drehzahl des Lüfters (106) größer als die zweite Zieldrehzahl ist; und
Steuern eines Öffnungszustands der Drosselkomponente (104, 116) auf der Grundlage einer Umgebungstemperatur einer Umgebung, in der sich der elektrische Steuerkasten (102) befindet, wenn die Drehzahl des Lüfters (106) kleiner als oder gleich der zweiten Zieldrehzahl ist; vorzugsweise
wobei das besagte Steuern des Öffnungszustands der Drosselkomponente (104, 116) auf der Grundlage der Umgebungstemperatur der Umgebung, in der sich der elektrische Steuerkasten (102) befindet, Folgendes umfasst:
Schließen der Drosselkomponente (104, 116), wenn die Umgebungstemperatur kleiner als oder gleich einer vorbestimmten Umgebungstemperatur ist; und
Öffnen der Drosselkomponente (104, 116), wenn die Umgebungstemperatur größer als die vorbestimmte Umgebungstemperatur ist.

6. Temperaturregelungsverfahren nach Anspruch 4 oder 5, wobei das Klimaanlagensystem (100) ferner ein an der Kältemittelleitung (103) angeordnetes und parallel zu der Drosselkomponente (104, 116) angeordnetes Kapillarrohr (118) umfasst, und
wobei das Temperaturregelungsverfahren ferner Folgendes umfasst, wenn die Temperaturdifferenz größer als die zweite vorbestimmte Temperatur ist:
Schließen der Drosselkomponente (104, 116), wenn sich die Drosselkomponente (104, 116) in einem geöffneten Zustand befindet;
Beibehalten der aktuellen Drehzahl des Lüfters (106), wenn sich die Drosselkomponente (104, 116) in einem geschlossenen Zustand befindet und die aktuelle Drehzahl des Lüfters (106) kleiner als oder gleich der zweiten Zieldrehzahl ist; und
Reduzieren der Drehzahl des Lüfters (106), wenn sich die Drosselkomponente (104, 116) in dem geschlossenen Zustand befindet und die aktuelle Drehzahl des Lüfters (106) größer als die zweite Zieldrehzahl ist.

7. Temperaturregelungsverfahren nach einem der Ansprüche 1 bis 5, wobei das besagte Regeln der Drehzahl des Lüfters (106) und/oder der Frequenz des Kompressors (101) auf der Grundlage der Temperaturdifferenz und der aktuellen Drehzahl des Lüfters (106) Folgendes umfasst:
Beibehalten einer aktuellen Drehzahl des Lüfters (106) und/oder einer aktuellen Frequenz des Kompressors (101), wenn (51003) die Temperaturdifferenz größer als oder gleich einer ersten vorbestimmten Temperatur und kleiner als oder gleich einer zweiten vorbestimmten Temperatur ist,
wobei die erste vorbestimmte Temperatur kleiner als die zweite vorbestimmte Temperatur ist; oder
die erste elektrische Steuerkomponente (113) eine maximale Wärmemenge in dem elektrischen Steuerkasten (102) erzeugt.

8. Temperaturregelungsverfahren nach einem der Ansprüche 1 bis 5, wobei die Wärmeaustauschkomponente (105) dazu ausgebildet ist, eine Temperatur innerhalb des elektrischen Steuerkastens (102) durch einen Phasenwechsel eines Kältemittels einzustellen.

9. Temperaturregelungsverfahren nach Anspruch 8, wobei die Wärmeaustauschkomponente (105) ein Verdampfer ist.

10. Temperaturregelungsverfahren nach Anspruch 9, wobei der Verdampfer einen Einlass aufweist, der mit einem Auslassrohr eines Wärmetauschers (110) einer Außeneinheit verbunden ist, und einen Auslass aufweist, der mit einem Rücklaufanschluss eines Kompressors (101) oder einem Einlass eines Gas-Flüssigkeits-Abscheiders verbunden ist.

11. Temperaturregelungsverfahren nach einem der Ansprüche 1 bis 5, wobei der elektrische Steuerkasten (102) ein abgedichteter elektrischer Steuerkasten (102) ist.

12. Temperaturregeleinrichtung, ausgebildet zum Regeln einer Temperatur einer elektrischen Steuerkomponente (113) in einem elektrischen Steuerkasten (102) in einem Klimaanlagensystem (100), wobei das Klimaanlagensystem (100) einen Kompressor (101) und eine Kältemittelleitung (103) umfasst, wobei in dem elektrischen Steuerkasten (102) eine Wärmeaustauschkomponente (105), ein Lüfter (106), eine erste elektrische Steuerkomponente (113) und ein Temperatursensor (114) angeordnet sind, wobei die Kältemittelleitung (103) dazu ausgebildet ist, ein von dem Kompressor (101) oder einer Inneneinheit ausgegebenes Kältemittel in die Wärmeaustauschkomponente (105) einzuleiten, wobei die Wärmeaustauschkomponente (105) dazu ausgebildet ist, einen Wärmeaustausch auf der Grundlage des Kältemittels durchzuführen, und wobei der Temperatursensor (114) nahe der ersten elektrischen Steuerkomponente (113) angeordnet ist,
wobei die Temperaturregeleinrichtung Folgendes umfasst:
ein Erfassungsmodul (1401), das dazu ausgebildet ist, eine erfasste Temperatur von dem Temperatursensor (114) zu erfassen; und
ein Regelmodul (1402), das dazu ausgebildet ist, eine Drehzahl des Lüfters (106) und/oder eine Frequenz des Kompressors (101) auf der Grundlage der erfassten Temperatur zu regeln, um eine Temperatur der ersten elektrischen Steuerkomponente (113) zu regeln.

13. Computerlesbares Speichermedium, auf dem ein Computerprogramm gespeichert ist, wobei das Computerprogramm bei seiner Ausführung ein Temperaturregelungsverfahren nach einem der Ansprüche 1 bis 11 implementiert.

## Revendications

1. Procédé de réglage de température, destiné à régler une température d'un composant de commande électrique (113) dans un boîtier de commande électrique (102) d'un système de climatisation (100), le système de climatisation (100) comprenant un compresseur (101) et une conduite de fluide frigorigène (103), un composant d'échange thermique (105), un ventilateur (106), un premier composant de commande électrique (113) et un capteur de température (114) étant disposés dans le boîtier de commande électrique (102), la conduite de fluide frigorigène (103) étant configurée pour introduire, dans le composant d'échange thermique (105), un fluide frigorigène délivré par le compresseur (101) ou une unité intérieure, le composant d'échange thermique (105) étant configuré pour effectuer un échange thermique sur la base du fluide frigorigène, et le capteur de température (114) étant disposé à proximité du premier composant de commande électrique (113),
dans lequel le procédé de réglage de température comprend :
(5901, 51001, 51201, 51301) l'obtention d'une température détectée à partir du capteur de température (114) ; et
(5902) le réglage d'une vitesse de rotation du ventilateur (106) et/ou d'une fréquence du compresseur (101) sur la base de la température détectée, afin de régler une température du premier composant de commande électrique (113).

2. Procédé de réglage de température selon la revendication 1, dans lequel ledit (5902) réglage de la vitesse de rotation du ventilateur (106) et/ou de la fréquence du compresseur (101) sur la base de la température détectée comprend :
(51002, 51202, 51302) l'obtention d'une différence de température entre la température détectée et une limite de température du boîtier de commande électrique (102) ; et
le réglage de la vitesse de rotation du ventilateur (106) et/ou de la fréquence du compresseur (101) sur la base de la différence de température et d'une vitesse de rotation actuelle du ventilateur (106).

3. Procédé de réglage de température selon la revendication 2, dans lequel ledit réglage de la vitesse de rotation du ventilateur (106) et/ou de la fréquence du compresseur (101) sur la base de la différence de température et de la vitesse de rotation actuelle du ventilateur (106) comprend :
l'augmentation de la vitesse de rotation du ventilateur (106) lorsque la différence de température est inférieure à une première température prédéterminée et que la vitesse de rotation actuelle du ventilateur (106) est inférieure à une première vitesse de rotation cible ;
la diminution de la fréquence du compresseur (101) lorsque la différence de température est inférieure à la première température prédéterminée et que la vitesse de rotation actuelle est supérieure ou égale à la première vitesse de rotation cible ;
la réduction de la vitesse de rotation du ventilateur (106) lorsque la différence de température est supérieure à une deuxième température prédéterminée et que la vitesse de rotation actuelle est supérieure à une deuxième vitesse de rotation cible ; et
le maintien de la vitesse de rotation actuelle du ventilateur (106) lorsque la différence de température est supérieure à la deuxième température prédéterminée et que la vitesse de rotation actuelle est inférieure ou égale à la deuxième vitesse de rotation cible,
dans lequel la première température prédéterminée est inférieure à la deuxième température prédéterminée, et la première vitesse de rotation cible est supérieure à la deuxième vitesse de rotation cible.

4. Procédé de réglage de température selon la revendication 3, dans lequel le système de climatisation (100) comprend en outre un composant d'étranglement (104, 116) disposé sur la conduite de fluide frigorigène (103) et configuré pour régler un débit d'un fluide frigorigène introduit dans le composant d'échange thermique (105),
dans lequel le procédé de réglage de température comprend en outre, lorsque la différence de température est inférieure à la première température prédéterminée :
la commande du composant d'étranglement (104, 116) pour l'ouvrir lorsque le composant d'étranglement (104, 116) est actuellement dans un état fermé ;
l'augmentation de la vitesse de rotation du ventilateur (106) lorsque le composant d'étranglement (104, 116) est actuellement dans un état ouvert et que la vitesse de rotation du ventilateur (106) est inférieure à la première vitesse de rotation cible ; et
la diminution de la fréquence du compresseur (101) lorsque le composant d'étranglement (104, 116) est dans l'état ouvert et que la vitesse de rotation du ventilateur (106) est supérieure ou égale à la première vitesse de rotation cible.

5. Procédé de réglage de température selon la revendication 3, dans lequel le système de climatisation (100) comprend en outre un composant d'étranglement (104, 116) disposé sur la conduite de fluide frigorigène (103) et configuré pour régler un débit d'un fluide frigorigène introduit dans le composant d'échange thermique (105),
dans lequel le procédé de réglage de température comprend en outre, lorsque la différence de température est supérieure à la deuxième température prédéterminée :
la réduction de la vitesse de rotation du ventilateur (106) lorsque la vitesse de rotation actuelle du ventilateur (106) est supérieure à la deuxième vitesse de rotation cible ; et
la commande d'un état d'ouverture du composant d'étranglement (104, 116) sur la base d'une température ambiante d'un environnement dans lequel se situe le boîtier de commande électrique (102), lorsque la vitesse de rotation du ventilateur (106) est inférieure ou égale à la deuxième vitesse de rotation cible ; de préférence,
ledit réglage de l'état d'ouverture du composant d'étranglement (104, 116) sur la base de la température ambiante de l'environnement dans lequel se situe le boîtier de commande électrique (102) comprend :
la fermeture du composant d'étranglement (104, 116) lorsque la température ambiante est inférieure ou égale à une température ambiante prédéterminée ; et
l'ouverture du composant d'étranglement (104, 116) lorsque la température ambiante est supérieure à la température ambiante prédéterminée.

6. Procédé de réglage de température selon la revendication 4 ou 5, dans lequel le système de climatisation (100) comprend en outre un tube capillaire (118) disposé sur la conduite de fluide frigorigène (103) et agencé en parallèle avec le composant d'étranglement (104, 116), et
le procédé de réglage de température comprend en outre, lorsque la différence de température est supérieure à la deuxième température prédéterminée :
la fermeture du composant d'étranglement (104, 116) lorsque le composant d'étranglement (104, 116) est dans un état ouvert ;
le maintien de la vitesse de rotation actuelle du ventilateur (106) lorsque le composant d'étranglement (104, 116) est dans un état fermé et que la vitesse de rotation actuelle du ventilateur (106) est inférieure ou égale à la deuxième vitesse de rotation cible ; et
la réduction de la vitesse de rotation du ventilateur (106) lorsque le composant d'étranglement (104, 116) est dans l'état fermé et que la vitesse de rotation actuelle du ventilateur (106) est supérieure à la deuxième vitesse de rotation cible.

7. Procédé de réglage de température selon l'une quelconque des revendications 1 à 5, dans lequel ledit réglage de la vitesse de rotation du ventilateur (106) et/ou de la fréquence du compresseur (101) sur la base de la différence de température et de la vitesse de rotation actuelle du ventilateur (106) comprend :
le maintien d'une vitesse de rotation actuelle du ventilateur (106) et/ou d'une fréquence actuelle du compresseur (101), lorsque (51003) la différence de température est supérieure ou égale à une première température prédéterminée et inférieure ou égale à une deuxième température prédéterminée,
dans lequel la première température prédéterminée est inférieure à la deuxième température prédéterminée ; ou
le premier composant de commande électrique (113) génère une quantité maximale de chaleur dans le boîtier de commande électrique (102).

8. Procédé de réglage de température selon l'une quelconque des revendications 1 à 5, dans lequel le composant d'échange thermique (105) est configuré pour régler une température à l'intérieur du boîtier de commande électrique (102) par un changement de phase d'un fluide frigorigène.

9. Procédé de réglage de température selon la revendication 8, dans lequel le composant d'échange thermique (105) est un évaporateur.

10. Procédé de réglage de température selon la revendication 9, dans lequel l'évaporateur comporte une entrée reliée à un tube de sortie d'un échangeur thermique (110) d'une unité extérieure, et une sortie reliée à un orifice de retour d'un compresseur (101) ou à une entrée d'un séparateur gaz-liquide.

11. Procédé de réglage de température selon l'une quelconque des revendications 1 à 5, dans lequel le boîtier de commande électrique (102) est un boîtier de commande électrique étanche (102).

12. Dispositif de réglage de température, configuré pour régler une température d'un composant de commande électrique (113) dans un boîtier de commande électrique (102) d'un système de climatisation (100), le système de climatisation (100) comprenant un compresseur (101) et une conduite de fluide frigorigène (103), un composant d'échange thermique (105), un ventilateur (106), un premier composant de commande électrique (113) et un capteur de température (114) étant disposés dans le boîtier de commande électrique (102), la conduite de fluide frigorigène (103) étant configurée pour introduire, dans le composant d'échange thermique (105), un fluide frigorigène délivré par le compresseur (101) ou une unité intérieure, le composant d'échange thermique (105) étant configuré pour effectuer un échange thermique sur la base du fluide frigorigène, et le capteur de température (114) étant disposé à proximité du premier composant de commande électrique (113),
dans lequel le dispositif de réglage de température comprend :
un module d'obtention (1401) configuré pour obtenir une température détectée à partir du capteur de température (114) ; et
un module de réglage (1402) configuré pour régler une vitesse de rotation du ventilateur (106) et/ou une fréquence du compresseur (101) sur la base de la température détectée, afin de régler une température du premier composant de commande électrique (113).

13. Support de stockage lisible par ordinateur, sur lequel est stocké un programme informatique, dans lequel le programme informatique, lorsqu'il est exécuté, met en œuvre un procédé de réglage de température selon l'une quelconque des revendications 1 à 11.
